# EUROPÄISCHE PATENTSCHRIFT

(11) **EP 1 147 029 B1**
(45) Veröffentlichungstag und Bekanntmachung des Hinweises auf die Patenterteilung: **19.03.2003**
(21) Anmeldenummer: 00993172.6
(22) Anmeldetag: 17.11.2000
(51) Int. Cl.: B60N 2/06, B60N 2/08, B60N 2/12

(54) **LÄNGSVERSTELLMECHANISMUS FÜR EINEN KRAFTFAHRZEUGSITZ**
LONGITUDINAL ADJUSTER FOR A VEHICLE SEAT
MECANISME DE REGLAGE LONGITUDINAL POUR UN SIEGE DE VEHICULE AUTOMOBILE

(30) Priorität: 27.11.1999 DE 19957201
(43) Veröffentlichungstag der Anmeldung: 24.10.2001
(73) Patentinhaber: Go, Giok Djien, Dr.-Ing., 65510 Idstein (DE)
(72) Erfinder: Go, Giok Djien, Dr.-Ing., 65510 Idstein (DE)
(86) Internationale Anmeldenummer: DE0004223
(87) Internationale Veröffentlichungsnummer: WO01038128

(56) Entgegenhaltungen:
- EP-A- 0 683 066
- EP-A- 0 800 952
- DE-A- 19 549 378
- DE-A- 19 655 051
- DE-C- 19 617 691
- US-A- 4 981 278

## Beschreibung

Die Erfindung betrifft einen Längsverstellmechanismus eines Fahrzeugsitzes mit Memory oder ohne Memory, mindestens ein Schienenpaar mit geschlossenem Profil und Mittel zur
- Erhöhung der Insassensicherheit bei Unfällen, Vorfertigung des Sitzes und
- Reduzierung der Sitzbauteile, Ausschußquote, des Gewichtes, des Zeit- und Kostenaufwandes bei der Montage des Sitzes in einem Kraftfahrzeug insbesondere auf der Fertigungsstraße
nach den im Oberbegriff aufgeführten Merkmalen des Anspruches 1 oder 2.

Bei 50% Offset-Frontcrashtest verschiedener Fahrzeuge auf Geschwindigkeit von 55 km/h liegen die Gurtkräfte bis zu 9130 N (Tabelle 1 der EP-B- 1 037 773). Die Vordersitze eines PKWs aus der mittlerer Klasse sind mit Längsverstellmechanismen gemäß der DE-C- 38 29 746, deren offene Sperrzähne durch Sperrvierecke mit geschlossenem Profil ersetzt werden, ausgerüstet. Theoretisch sind vier Sperrpaare im Sperrzustand. Wegen großen Toleranzen (Montage- und Fertigungstoleranzen) der Teile herkömmlicher Schienenpaare mit offenem Profil muß man davon ausgehen, daß die zugehörigen Teile zweier Sperrpaare beim Unfall ineinandergreifen. Bei Dicke jedes Sperrteiles von 2 mm beträgt die Druckfläche 4 mm² pro Sperrpaar. Unter Zugrundelegung der Gurtkraft von 9000 N liegt sie auf mindestens 36000 N bei v = 110 km/h. Daraus errechnet sich eine Hertzsche (Druck-) Pressung von 4500 N/mm².

Dies ist die Ursache des Versagens herkömmlicher Sperreinrichtungen bei Unfällen auf Geschwindigkeit ab 80 km/h. Durch geringe Toleranz der runden Schienenpaare und durch Einsatz dreier Sperrpaare mit runden Sperrelementen von beispielsweise 12 mm Durchmesser und mit Sperrlöchern von 2 mm Dicke verringert sich die Hertzsche Pressung auf 500 N/mm² (**Fig.** 14).

Beim Längsverstellmechanismus gemäß der DE-C- 195 49 378 weist ein Sperrsegment eine Vielzahl von Sperrzähnen mit offenem Profil auf (**Fig.** 13). Ein Sperrpaar wird aus dem Eingriff zweier Sperrzähne mit Sperrkanten eines Querträgers gebildet. Wegen offenem Profil werden die beiden Sperrzähne und/oder -kanten durch große Energie beim Front- oder Heckaufprall abgeschert.

Beim Heckaufprall wird der mittels eines herkömmlichen Sicherheitsgurtes angeschnallte Insasse zuerst nach vorne beschleunigt, dann nach hinten und prallt gegen die Sitzlehne. Entweder ist sein Oberkörper samt Kopf in Pendelbewegung geraten oder taucht er unter dem Gurt hindurch. Das Untertauchen wird als "Submarining" bezeichnet (EP-B-1 037 773, DE-C- 197 49 780). Bei der Landung auf den offenen Sperrzähnen der Sperrschiene verletzt er sich. Zwar wird die Verletzungsgefahr durch seitliches Versetzen der Sperrschiene nah an die Sitzschiene geringer, aber beim Reparieren oder Saubermachen ruft eine Berührung mit Sperrzähnen Verletzung hervor. Weiterhin ist der Zeitaufwand für die Montage des Sperrsegmentes und des Paares Schienenpaare im Fahrzeug wegen der Einhaltung der Parallelität der drei Längsachsen zueinander groß.

Um Verletzungen zu vermeiden, ist bei einem anderen Längsverstellmechanismus eine Vielzahl von geschlossenen Sperrschlitzen an den beiden Bodenschienen paarweise angeordnet. An einem querliegenden Verstärkungselement des Sitzrahmens ist eine von zwei offenen Führungsbügeln geführte Sperrplatte mittels einer Schraube in einer 3. Längsachse schwenkbar angeordnet. Im Sperrzustand greifen beide Enden der Sperrplatte in die gegenüberliegenden Sperrschlitzen ein. Hat das Paar Bodenschienen eine geringe frei Höhe zu dem Fahrzeugboden, dann kommt eines der beiden Enden der ausgeschwenkten Sperrplatte mit dem Fahrzeugboden in Berührung.

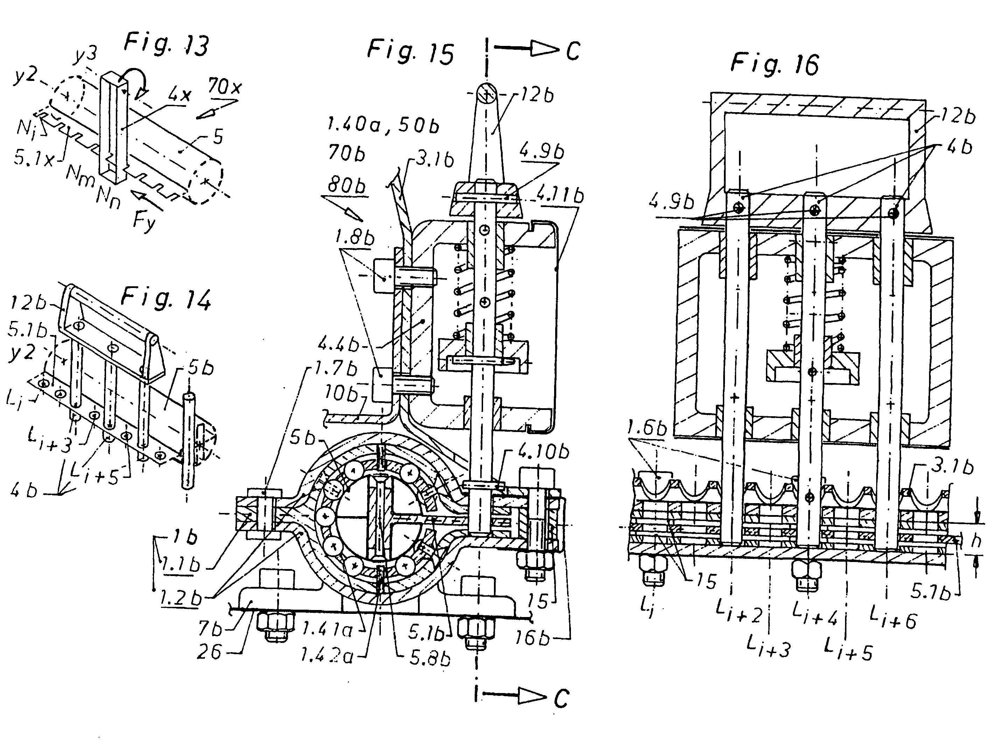

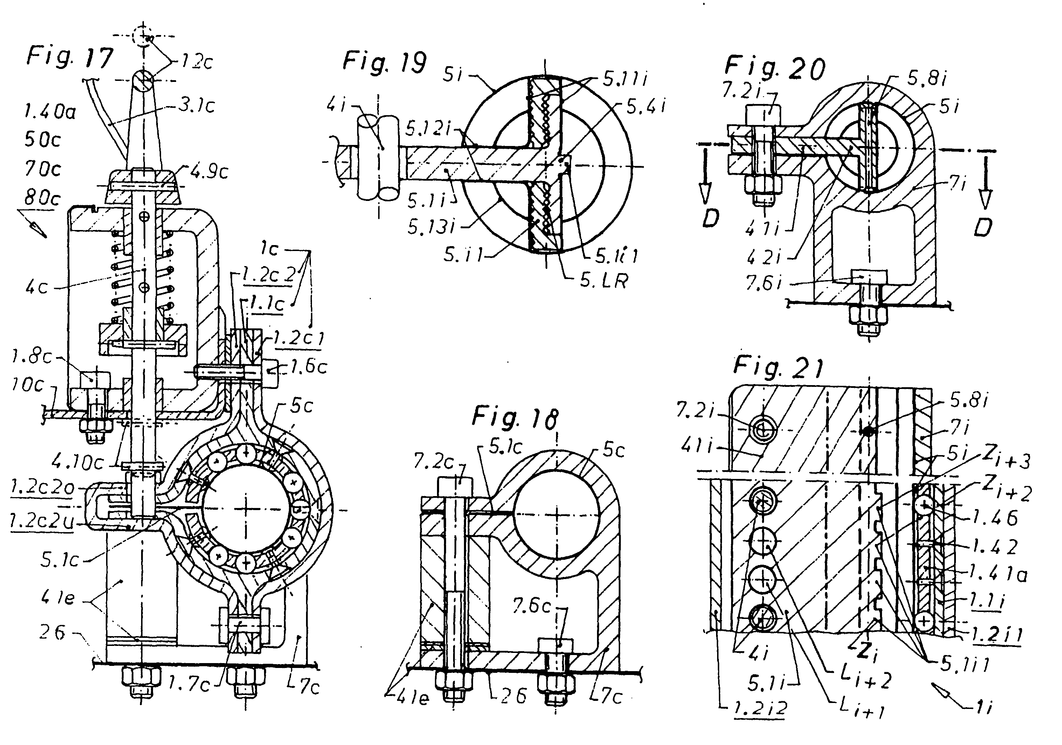

Durch große Aufprallenergie beim Front- oder Heckaufprall werden die Sperrplatte und die beiden Führungsbügel deformiert oder springen die verformten Enden der Sperrplatte aus den Sperrschlitzen heraus. Vgl. mit steiferen Sperrelementen der Sperreinrichtung **(Fig.** 15, 16).

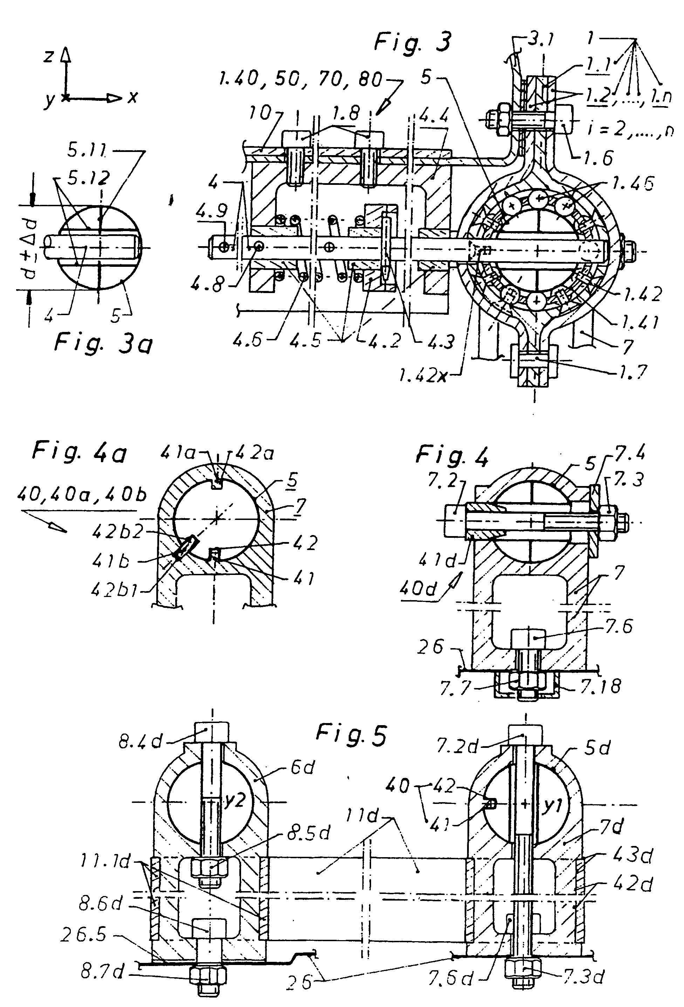

Als Nachteil erweist sich, daß die runde Bodenschiene mit Sperrschlitzen oder, im allgemein, mit Sperrlöchern (Sperraussparungen) in der runden Sitzschiene frei drehbar ist **(Fig.** 3). Bei der Montage des Sitzes im Fahrzeug ist ein Arbeitsvorgang für die Lagefixierung erforderlich, da
- die Sperrlöcher zu den am Sitzrahmen beweglich angebrachten Sperrelementen oder
- die gegenüberliegenden Sperrschlitzen beider Bodenschienen zu den beiden Enden der Sperrplatte
exakt positioniert werden müssen. Vgl. mit Gegenmaßnahmen (**Fig.** 4-12).

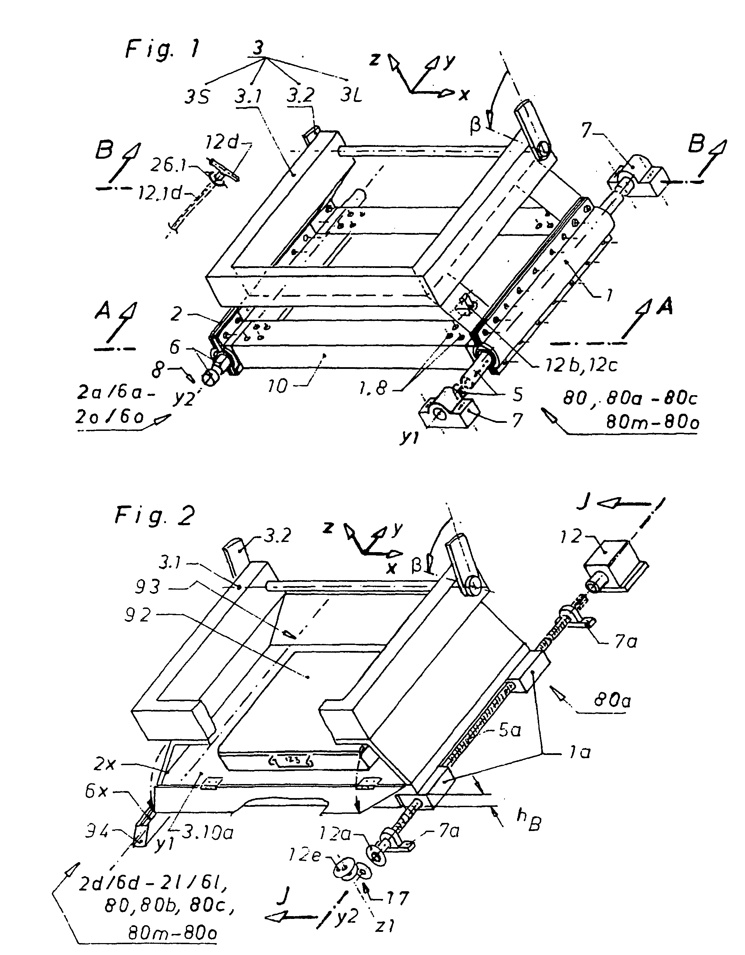

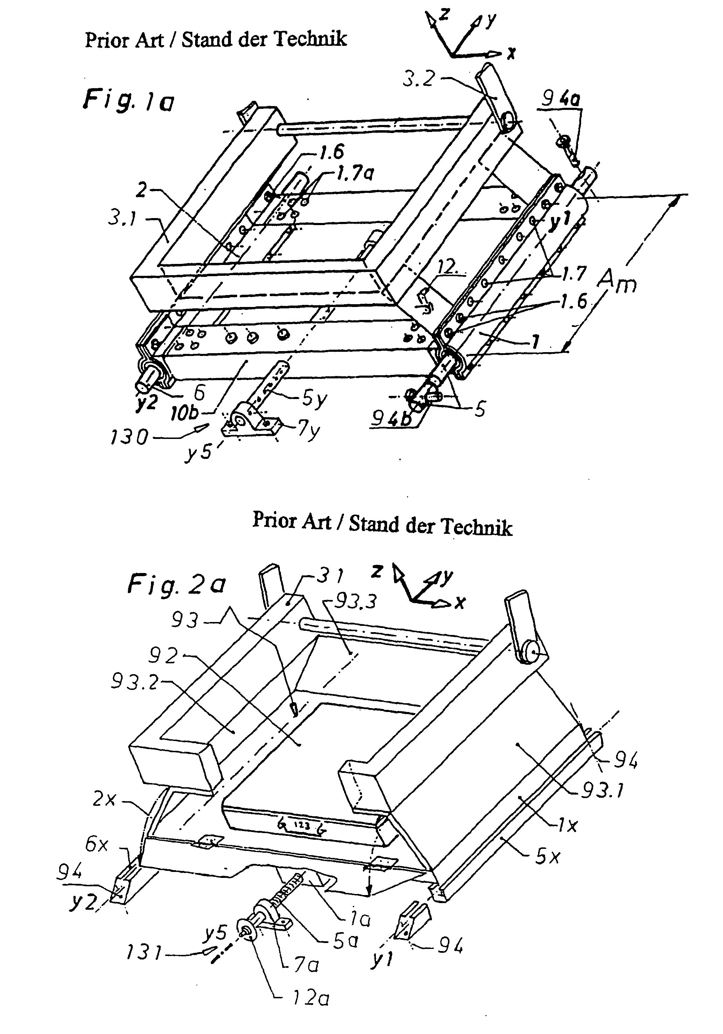

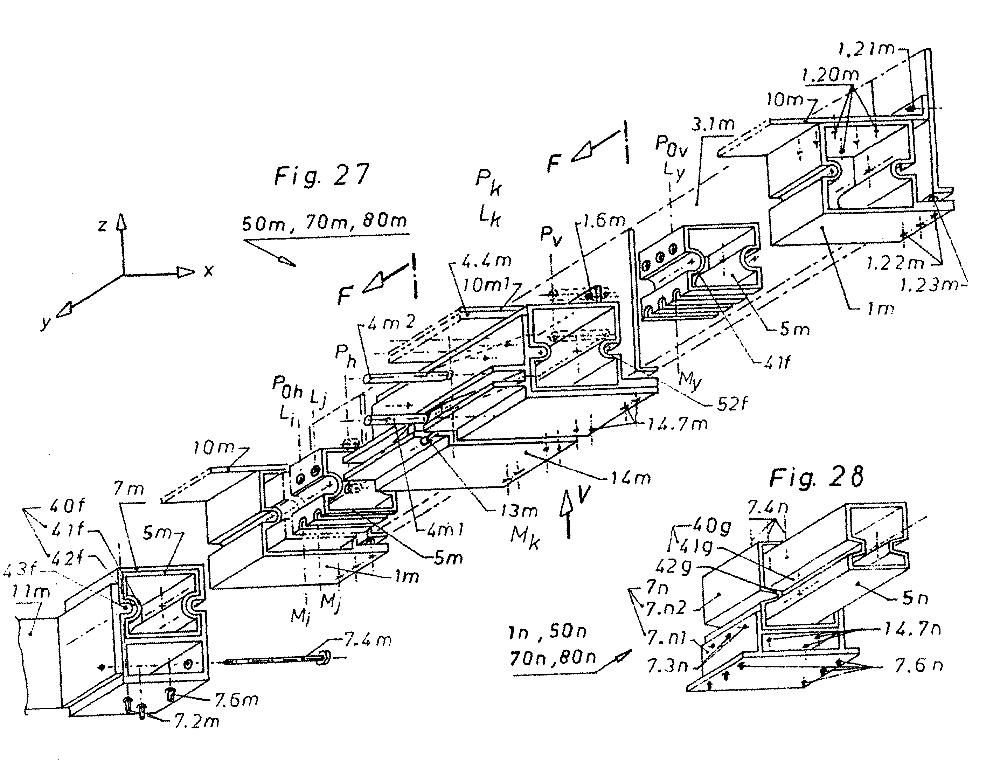

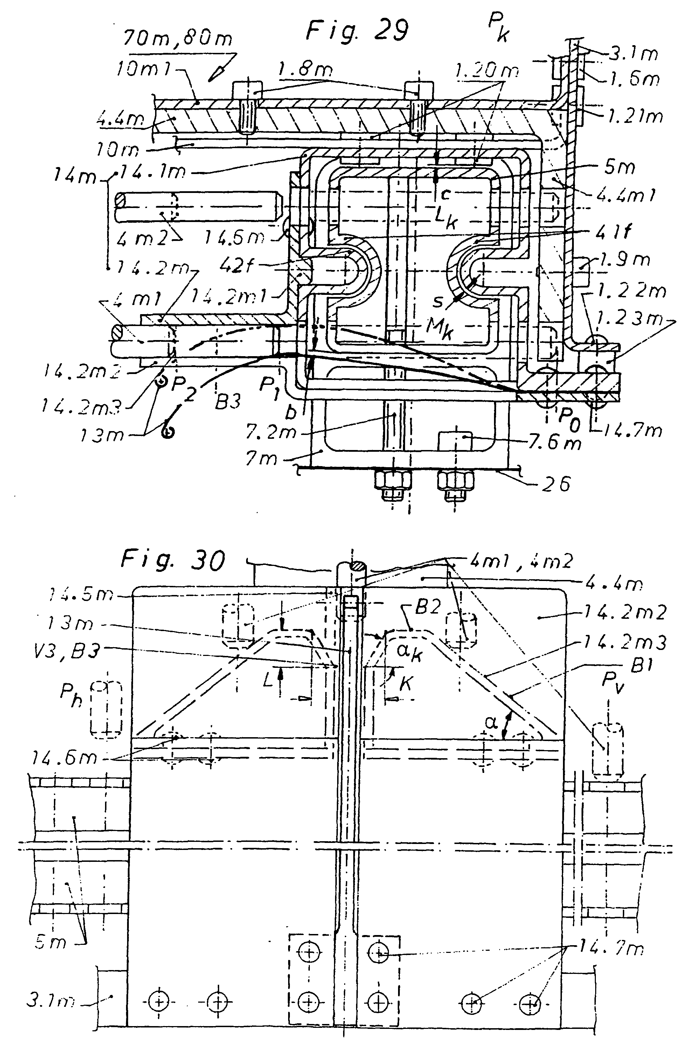

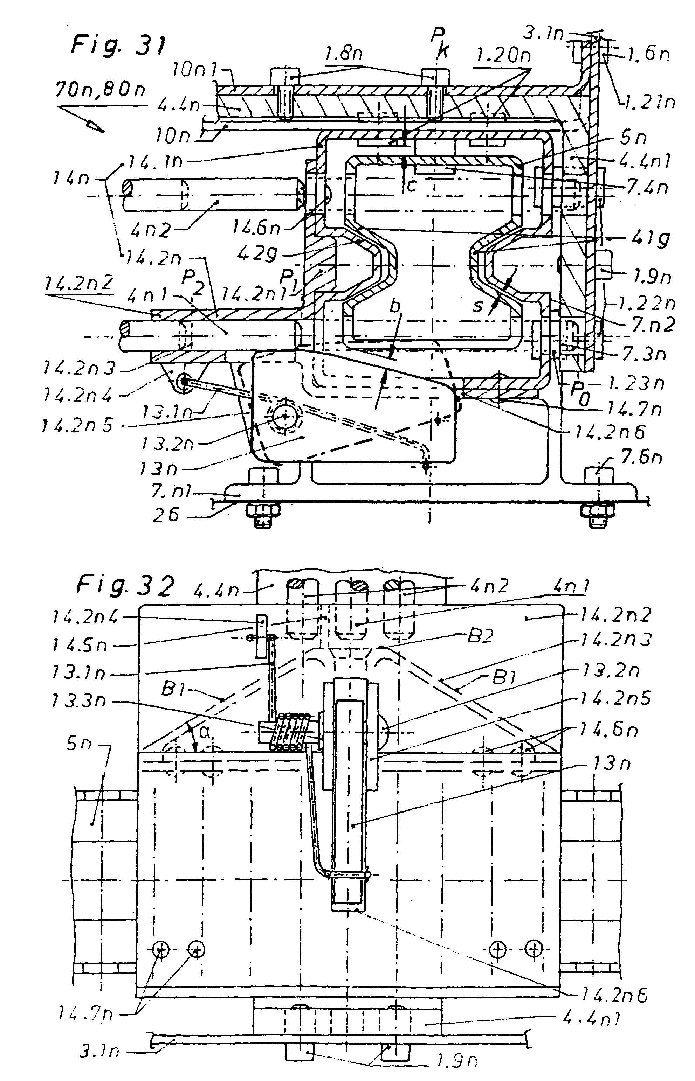

Die o.g. als nächstkommender Stand der Technik zugrundegelegte DE-C- 196 55 051 (**Fig.** 1a, 2a) betrifft einen Längsverstellmechanismus mit Memory oder ohne Memory, dessen beidseitige Sperrlöcher (Memorylöcher) "Mᵢ, Mⱼ,.., M_{y}" offenes Profil und höhere Steifigkeit als die der Sperrzähne aufweisen **(Fig.** 27). Bei Fahrerwechsel und bei Ein- oder Ausstieg der Fondinsassen aus einem zweitürigen Fahrzeug wird der Sitz von der Ausgangsposition aus nach vorne positioniert, wobei eine Kulisse des Memory-Längsverstellmechanismus die Ausgangsposition markiert, um die Ausgangsposition bei Rückpositionierung des Sitzes wiederzufinden. Zur Verdeutlichung der Problematik wird das Paar Bahnen **14.2n3** *unverändert* dargestellt (**Fig.** 32). Bei Sitzverstellung in hoher Geschwindigkeit ist es nicht auszuschließen, daß die federbelastete Memorywelle **4m1, 4n1** entlang den Bahnen von einem Bahnabschnitt "B1" über den Bahnabschnitt "B2" zu dem anderen Bahnabscluiitt "B1" gleitet, ohne in die Bohrung der Kulisse einzurasten. Siehe Grube "V3" zum Sicherstellen des Einrastens der Memorywelle (**Fig.** 30).

Die Sperrung (Arretierung, Verriegelung) des Sitzes kann auch ohne Kulisse erfolgen. Hierbei wird die Memorywelle **4m1, 4n1** in ein offenes Memoryloch "Mₖ" des Sperrsegments eingeschoben (**Fig.** 27, 29). Durch große Verformung des offenen Memoryloches in z-Richtung infolge großer Aufprallenergie wird die Verbindung mit Memorywelle aufgelöst. Um den Sperrzustand sicherzustellen und die Beanspruchung des offenen Memoryloches zu verringern, ist mindestens ein zusätzliches Sperrpaar Sperrelement **4m2** / geschlossenes Sperrloch "Lₖ" notwendig **(Fig.** 29).

Herkömmliche Schienenpaare beispielsweise gemäß der DE-C- 196 17 691, EP-A- 683 066 und EP-A- 800 952 weisen nichtrundes, offenes Profil auf. Zur Erhöhung der Steifigkeit wird das Profil der Sitz- und Bodenschiene durch Vergrößerung und/oder Hinzufügen mehrerer Zusatzprofile verstärkt. Dies hat zur Folge, daß Montagehalter bei der Montage der Sitze im Fahrzeug nicht eingesetzt werden können, der Einbau mit großen Toleranzen erfolgt und die Montagekosten und Ausschußquote hoch sind. Außerdem ist die Beanspruchung bei Unfällen entscheidend höher als die der runden, geschlossenen Schienenpaare gemäß der DE-C- 195 49 378, deren Merkmale eine gleichmäßige Lastverteilung über die Kontaktfläche und höhere Steifigkeit dank geschlossenem Profil versprechen. Für die Erhöhung der Gleiteigenschaft der Sitzschiene auf der Bodenschiene und des Bedienerkomforts ist eine aufwendige Konstruktion mit einer hohen Anzahl von Bauteilen gemäß der DE-C- 42 27 846 notwendig, wodurch sich die Herstellung verteuert.

Wie eingangs erwähnt, ist die Beanspruchung der Teile herkömmlicher Schienenpaare und Sperrvorrichtungen enorm hoch. Durch den realen Seitenaufprall wurde der Fahrersitz eines auf Bundesstraße B270 mit Geschwindigkeitsbegrenzung von 80 km/h ins Schleudern geratenen, deutschen Fahrzeuges aus der Mittelklasse aus den Bodenschienen herausgerissen.

Beim realen Seitenaufprall in der Stadt Wiesbaden kollabierte der Fahrersitz eines deutschen Top-Premiumfahrzeuges, dessen Vordersitze mit Sitzvorrichtungen gemäß der DE-A- 41 35 092 ausgestattet sind. Als deren Gegenmaßnahmen vor allem bei realen Seitenkollisionen stellen sich die Merkmale gemäß der DE-C- 196 55 146 heraus. Ihre Sitzvorrichtung bedarf drei Längsachsen für das Paar Schienenpaare und die Einstellvorrichtung. Durch die Reduzierung von drei auf zwei Längsachsen jeder Ausführungsform der Erfindung und den Einsatz der erfindungsgemäßen Montagehalter verringert sich der Zeitaufwand für die Montage des Sitzes im Fahrzeug entscheidend.

Ein aus einer runden. geschlossenen Sitzschiene und einer runden, offenen Bodenschiene gebildetes, gattungsgemäßes Schienenpaar ist aus der US 4,981,278 bekannt. DE-C- 195 49 378 beschreibt die Maßnahmen gegen die Nachteile der US 4.981,278 wie Klemmen der Sitzschienen in den Bodenschienen, Überbeanspruchung der Schienenpaare beim Front- oder Heckaufprall und fehlende Möglichkeit zur Verstärkung der runden, aber *offenen* Bodenschiene.

Ein gattungsgemäßer Memory-Längsverstellmeclianismus gemäß der EP-A- 683 066 und EP-A- 800 952 erleichtert Fondinsassen bei Ein- oder Aussteigen aus einem zweitürigen Fahrzeug durch Einsatz einer Kulisse, die zur Markierung einer Ausgangsposition des Sitzes bei Sitzverstellung in Längsrichtung nach vorne und zum Wiederfinden der Ausgangsposition bei Rückpositionierung vorgesehen ist. Es funktioniert dann nicht, wenn bei Markierung der Ausgangsposition der Sitz in Längsrichtung nach hinten verstellt werden muß, um den Wechsel einer zierlichen Fahrerin durch einen groß gebauten Fahrer vorzunehmen. Die Anforderung nach solchem Bedienungskomfort, der auf die Kaufentscheidung große Rolle spielt, wird sowohl durch den Memory-Längsverstellmechanismus gemäß der DE-C- 196 55 051 als auch durch eine der Ausführungsformen der Erfindung (**Fig.** 27-35) erfüllt.

Der Erfindung liegt mithin die Aufgabe zugrunde,
- eine Sperrvorrichtung zur Erhöhung der Insassensicherheit bei Unfällen,
- eine Integration der Spenvorrichtung und eines Schienenpaares mit geschlossenem Profil in einen Längsverstellmechanismus mit Memory oder ohne Memory zur Reduzierung der Sitzbauteile und Ausschußquote,
- Bodengehäuse zur einfachen Lagefixierung der Sperrlöcher zu den Sperrelementen und des Sperrsegmentes in der Sitzschiene und
- Montagehalter zur Erhöhung der Insassensicherheit bei Seitenkollisionen, zur von Fertigungstoleranzen unabhängigen Vorfertigung des Sitzes samt Längsverstellmechanismus und zur Erleichterung der Montage des Sitzes in einem Kraftfahrzeug insbesondere auf der Fertigungsstraße
zu schaffen.

Die erfindungsgemäße Lösung dieser Aufgabe besteht in den Merkmalen des Patentanspruches 1 oder 2.

Die Unteransprüche beschreiben vorteilhafte Ausbildungen der Erfindung.

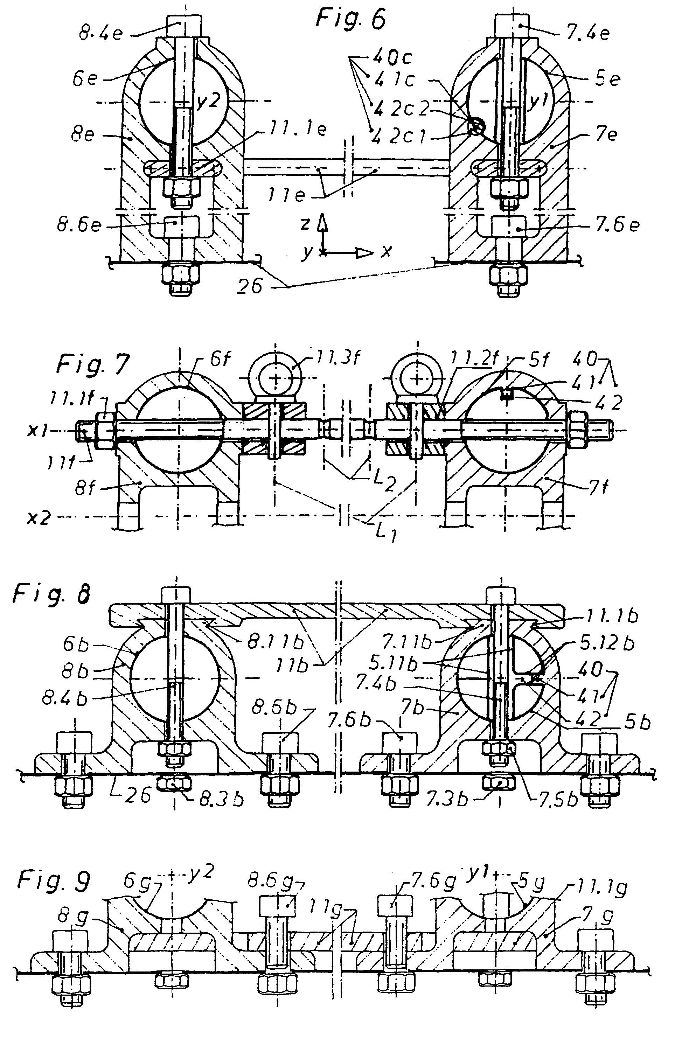

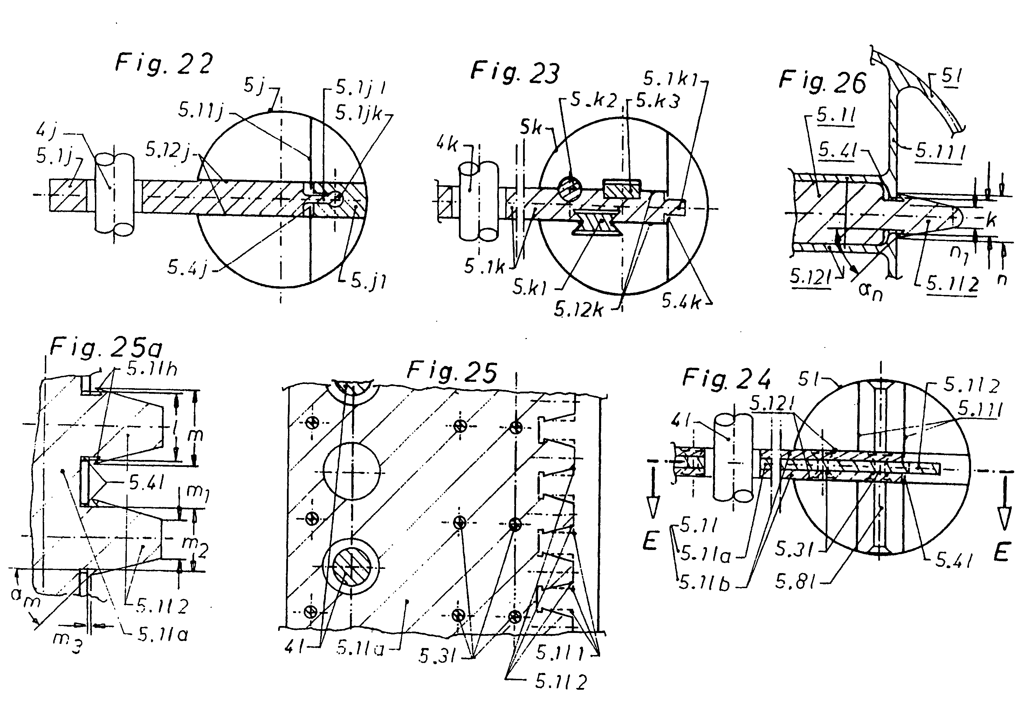

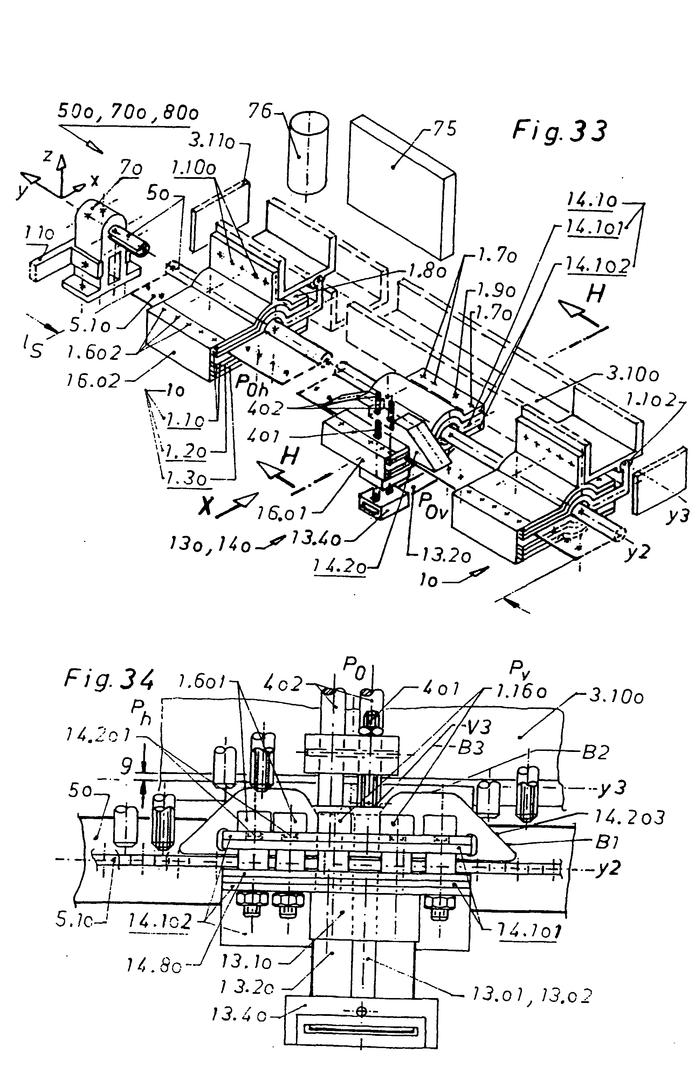

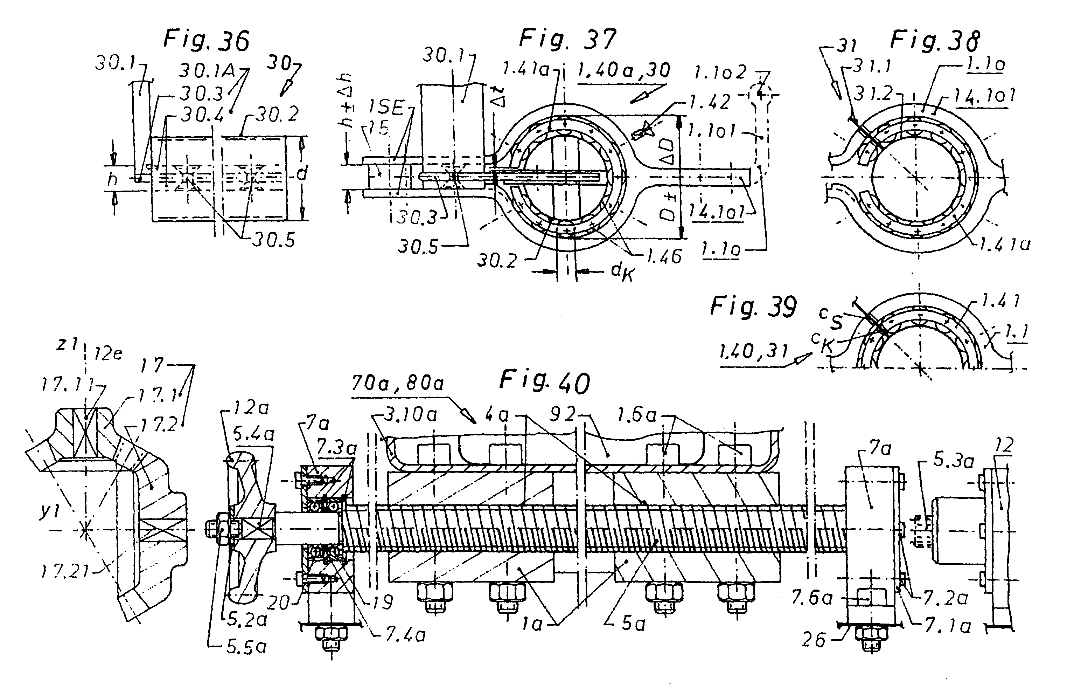

Gegenüber dem Stand der Technik weisen die Längsverstellmechanismen **80, 80a bis 80c, 80m bis 80o** folgende Vorteile auf
- Das Profil des Schienenpaares ist beliebig **(Fig.** 27-32). Aufgrund der einfachen Herstellung und einer einzigen Toleranz "± Δd" wird das kreisförmige Profil für die restlichen Ausführungsformen bevorzugt. Auch das Schienenpaar **5m / 1m** ist durch eine Toleranz "± Δd" dank dem Paar halbkreisförmigen Gleitbahnpaaren gekennzeichnet (**Fig.** 27-30). Die Reduzierung der Sitzbauteile von drei Längsachsen **(Fig.** 1a, 2a) auf zwei (**Fig.** 1, 2) und der Einsatz der Bodengehäuse und Montagehalter (**Fig.** 4-12) ermöglichen, den Toleranzbereich von "± 3Δd" auf "± 2Δd" bei gleichem Rohrdurchmesser "d" (**Fig.** 36) zu verringern, die Parallelität beider Längsachsen zueinander und den Abstand "AB" (**Fig.** 11) einzuhalten und den Sitz samt Längsverstellmechanismus vorzufertigen. Damit verringern sich die Ausschußquote, Herstellungs-, Montagekosten und Montagezeit.
- Der Einsatz eines Justicrwerkzeuges **30, 31** (**Fig.** 36-39) erleichtert die Ausschußkontrolle des offenen Sitzschienenteiles **1.1b, 1.1c, 1.1o** oder Hauptkulissenteiles **14.1o1** um zwei Toleranzen "± ΔD" und " ± Δh" und dem Einstecken der Sicherungsteile der in radialer Richtung übereinanderliegenden Haltelöcher des Kugelkäfigs **1.41, 1.41a** und Teiles **1.1, 1.1b, 1.1c, 1.1o, 14.1o1.**
- Einfach und kostengünstig ist die Anpassung an die erforderliche Belastung für PKW unterschiedlicher Klassen, Bus, LKW durch Verwendung von symmetrischen, paarweise geteilten Verstärkungsschienen und durch Erhöhen oder Kürzen der Anzahl der symmetrischen geteilten Verstärkungsschienen **1.2b, 1.3b,.., 1.nb,** wobei i = 2 bis n, unter Beibehaltung der Bodenschiene **5b** und des *offenen* Sitzschienenteiles **1.1b** (**Fig.** 15). Wegen des Sperrsegmentes **5.1b, 5.1c, 5.1o** muß ein *offenes* Kugellager **1.40a,** dessen Käfigring **1.41a** von der Sitzschiene **1b** mittels Sicherungsteilen (Senknieten **1.42** und/oder Schrauben **1.42a)** gehalten ist, für das Gleiten entlang der Bodenschiene **5b, 5c, 5o** verwendet werden. Nach Fertigstellung der Sitzschiene **1b, 1o** mit mindestens einem offenen Kugellager **1.40a** und der Kulisse **14o** mit mindestens einem offenen Kugellager **1.40a** wird Fett eingegeben. Anschließend wird die Sitzschiene **1b, 1o** und die Kulisse **14o** durch Schutzdeckel **16b, 16.1o, 16.2o** vor Schmutz und vor Verletzung beim Reparieren oder Saubermachen geschützt **(Fig.** 15, 33).
   Dagegen umfaßt eine Sitzschiene **1** (DE-C- 195 49 378) eine Anzahl von symmetrischen, geteilten Verstärkungsschienen **1.2, 1.3,.., 1.n** und ein *geschlossenes* Sitzschienenteil **1.1 (Fig.** 3).
- Die Teile des Memory-Längsverstellmeclianismus **80m, 80n, 80o** wie Kulissenstücke **14.1m, 14.2m, 14.1n, 14.2n, 14.1o1, 14.1o2**, Bodenschiene **5m, 5n, 5o,** Bodengehäuse **7m, 7n, 7o** und Sitzschienen **1m, 1n, 1o** sind sowohl durch Druckgießen als auch durch Strangpressen als auch durch Tiefziehen herstellbar **(Fig.** 27-35). Zu weiterer Kostensenkung werden soweit wie möglich gleiche Teile und Teile mit gleichem Profil verwendet. Beispielsweise ist das Profil des Kulissenstückes **14.1m, 14.1n** gleich dem des Bodengehäuses **7m, 7n** und der Sitzschiene **1m, 1n.**
- Durch Verwendung des Sperrsegmentes **5.1b, 5.1c, 5i-5l, 5o** bleibt die hohe Steifigkeit der Bodenschiene mit geschlossenem Profil weiterhin erhalten.
- Zur Kostensenkung empfiehlt sich der Einsatz von Strangpreßteil für die Bodenschiene **5b, 5c, 5i-5l, 5o** mit Sperrsegment **5.1b, 5.1c, 5.1i-5.1l, 5.1o** (**Fig.** 15, 17, 22-25, 34). Auch aus duktilem Leichtmetalldruckguß wie GD-MgA12, Kohlenstoff-, Glas- oder Kevlarfasern verstärkten Kunststoffen sind sie herstellbar.
- Dank des flachen Profils des Sperrsegmentes **5.1j, 5.1k, 5.1l, 5.1l, 5.1o** (**Fig.** 23-26, 33-35) sind die Sperrlöcher und die Haltelöcher **5.4j, 5.4k, 5.4l, 5.4l, 5.4o** (nicht eingetragen, mit **5.4l** identisch) durch Stanzen herstellbar. Durch Steckverbindung des Sperrsegmentes mit Bodenschiene **5j, 5k, 5l, 5l, 5o** werden zusätzliche Kosten eingespart.
- Durch Innenrippen **5.11, 5.11b, 5.11i-5.11l, 5.11l, 5.12, 5.12b, 5.12i-5.12l, 5.12l, 5.13i** (DE-C- 195 49 378) wird die Steifigkeit der Bodenschiene **5, 5b, 5i-51, 5l, 5o** erhöht. Zur Umwandlung des offenen Profils der Bodenschiene **5b, 5i -5l, 5l, 5o** in ein geschlossenes werden die aus den zugehörigen Innenrippen gebildeten Zwischenräume nützlich gemacht, und zwar für (**Fig.** 15, 19-26, 35a)
   * Führung eines Werkzeuges zum Ausstanzen der Haltelöcher **5.4i-5.4l, 5.4l, 5.4o** an der Innenrippe **5.11-5.11l, 5.11l, 5.11o** der Bodenschiene **5i-5l, 5l, 5o;**
   * form- und kraftschlüssige Verbindung des Sperrsegmentes **5.1b** mit Bodenschiene **5b**;
   * formschlüssige Verbindung der Haltezähne **5.1j1** des Sperrsegmentes **5.1j** mit Halteelement **5.j1**;
   * formschlüssige Verbindung des Sperrsegmentes **5.1i, 5.1k** mit einem Paar Halteelementen **5.i1** oder mit Halteelement **5.k1-5.k3;** und
   * Führung des Sperrsegmentes **5.1l, 5.1l, 5.1o** zur Steckverbindung der trapezförmigen Haltezähne **5.112, 5.1l2** mit den zugehörigen Haltelöchern **5.41, 5.4l, 5.4o** der Bodenschiene **5l, 5l, 5o.**
- Zur weiteren Kostensenkung wird der Bedarf für Fahrzeugsitze verschiedener Größe durch Sperrsegmente mit unterschiedlicher Länge in Steckverbindung mit Bodenschienen mit gleichem Profil gedeckt.
   Haben die Sperrsegmente **5.1i-5.1l, 5.1l, 5.1o** eine Anzahl von "h"-Haltezähnen und die Bodenschienen **5i-5l, 5l, 5o** eine Anzahl von "k"-Haltelöchern "Zᵢ,.., Zᵢ, .., Zᵢ₊₃, .., Zₖ" **(Fig.** 21), wobei "k" größer und gleich "h" ist, dann können Bodenschienen in Steckverbindung mit Sperrsegmenten in "k-h+1" Positionen entlang der Längsrichtung durch Versetzung um "k-h" Haltelöcher realisiert werden. Hieraus ergeben sich "k-h+1" Varianten der Längsverstellmechanismen, Außerdem kann in der Vorentwicklung oder Erprobung die optimale Position der Steckverbindung für den Bereich der Sitzverstellung und für die Arretierung des Sitzes durch Sperrelemente ermittelt werden.
- Durch form- und/oder kraftschlüssige Verbindung der Bodenschiene **5, 5, 5c, 5e, 5m, 5n** mit einem Paar Bodengehäusen **7, 7, 7c, 7e, 7m, 7n** und durch Positionierungspaar **40, 40a-40g (Fig.** 4a, 6, 10, 18, 27-32) wird die radiale Lage der Sperrlöcher bestimmt.
- Zur Erleichterung bei der Montage des Sitzes am Fahrzeugboden **26** und zur Vorfertigung des Fahrzeugsitzes mit Längsverstellmechanismus und Schienenpaar durch Einhaltung der Parallelität der y1- und y2-Achsen zueinander und des Abstandes "AB" voneinander (**Fig.** 11) sind zwei Paare Bodengehäuse **7a / 8a bis 7o / 8o** der Bodenschienen **5a / 6a bis 5o / 6o** und ein Paar Montagehalter **11a-11o** miteinander form- und kraftschlüssig verbunden **(Fig.** 5-12, 27, 33).
   Dank einer Anzahl von Lochpaaren "Lₗ bis Lₙ" (zwei Lochpaare "L₁" und "L₂" in **Fig.** 7) zur Einstellung des Abstandes "AB" der Achsen der Bodenschienen **5f / 6f** voneinander ist ein einziges Paar Montagehalter **11f** für Fahrzeugsitze verschiedener Breite mehrfach verwendbar. Ist der Sitz mittels der beiden Montagehalter **11f** in x2-Achse vorgefertigt, dann werden ausschließlich die beiden Montagehalter nach Befestigung des Sitzes am Fahrzeugbodeu abgenommen.
   Nach Abnahme des Montagehalters **11g** sind dieselben Befestigungsschrauben **7.6g, 8.6g** (**Fig.** 9) für Befestigung beider Bodengehäuse **7g / 8g** am Fahrzeugboden **26** weiter verwendbar.
- Dank der Genauigkeit ist die Verwendung der Gewindespindel im Werkzeugbau weit verbreitet und daher preiswert. Niedrig sind die Herstellungskosten für die aus der Gewindespindel **5a.** einem Paar mit Innengewinde **4a** versehenen Blöcken (Sitzschienen) **1a** und zwei Paaren Radialkugellagern **19** und Axialkugellagern **20** (**Fig.** 40) bestellende Sperrvorrichtung **70a,** welche als
   * Längsverstellmechanismus in y2-Achse (**Fig.** 2) oder
   * Schienenpaar **2a / 6a** in yl-Achse (**Fig.** 1), dessen Handrad **12c, 12e** oder dessen Motor **12** zur Sitzverstellung vorgesehen ist,
   geeignet ist.
- Vermeidbar ist die Überbeanspruchung der Teile der Spenvorrichtung **70a-70c, 70m-70o** durch
   * Verbesserung des Aneinanderpressens der zugehörigen Sperrteile beim Unfall dank geringen Toleranzen "± Δd" bei Schienen- und der Sperrpaaren, deren Sperrlöcher geschlossenes Profil und deren Sperrelemente rundes, geschlossenes Profil aufweisen. Damit greifen die zugehörigen Teile der Sperrpaare unter Belastung besser ineinander. Da die geschlossenen Schienenpaare ohne oder mit Vielzahl von Kugellagern **1.46** am Umfang und in Längsrichtung die Querkräfte und Biegemomente beim Unfall aufnehmen, sind die aus Haltezähnen des Sperrsegmentes und Haltelöchern der Bodenschiene gebildeten Paare und das/die Sperrpaar/e ausschließlich der Scherkraft "F_{y}" ausgesetzt. Zur Verringerung der Hertzschen Pressung und Scherkraft wird die Dicke des Sperrteiles **5.1la** des Sperrsegmentes **5.1l** durch mindestens ein Paar Scheiben **5.1lb** erhöht (**Fig**. 24, 25), wobei die Teile durch Stanzen herstellbar sind. Es ist daher nicht auszuschließen, daß ein einziges Sperrpaar mit Sperrsegment, dessen Teile durch Stanzen herstellbar sind, aus teurem Werkstoff mit sehr hoher Steifigkeit für die Aufnahme der Scherkraft "F_{y}" (**Fig.** 13-16) völlig ausreichend ist. Ein Versuch kann die Kosten und Spannung im Vergleich mit mehreren Sperrpaaren aus preiswertem Werkstoff sowie die Anzahl von den in Haltelöchern steckbaren Haltezähnen in Abhängigkeit vom Querschnitt des Haltezahnes ermitteln;
   * Ineinandergreifen mindestens zweier Sperrpaare beispielsweise dreier Sperrpaare der Sperrvorrichtung **70b** Sperrelemente **4b** / Sperrlöcher (**Fig.** 14) und/oder
   * Nichtbelegung mindestens eines Sperrloches "Lᵢ₊₃, Lᵢ₊₅" zwischen zwei durch Sperrelemente **4b** belegten Sperrlöchern "Lᵢ₊₂, Lᵢ₊₄, Lᵢ₊₆". Ob das Aneinanderpressen der zugehörigen Sperrteile durch nichtbelegte Zwischenlöcher verbessert wird, klärt der Versuch.
- Der Memory-Längsverstellmechanismus ist imstande, beliebige Sitzpositionierung zu erfassen. Somit kann der Beifahrer oder Fahrer die Ausgangsposition des Sitzes beispielsweise nach einem Schlaf oder nach Aus- bzw. Einsteigen der Fondinsassen ausfindig machen lassen.
- Wird das Paar Montagehalter (**Fig.** 5-12) nach der Montage des Sitzes nicht abgebaut, dann verkürzt sich die Montagezeit und erhöht sich die Insassensicherheit bei realen Seitenkollisionen dank der Unterteilung der Fahrgastzelle gemäß der DE-C- 196 55 146 in Querrichtung in eine tür-, sitz- und tunnelseitige Deformationszone mit unterschiedlicher Steifigkeit, um die Aufprallenergie abzubauen und den Überlebensraum zu vergrößern. Zuerst wird die türseitige Deformationszone, dann die tunnelseitige Deformationszone und zuletzt als sitzseitige Deformationszone der mit dem Schienenpaar und Längsverstellmechanismus ausgestattete Sitz, dessen Steifigkeit durch die Montagehalter (**Fig.** 5-12) in Querrichtung enorm erhöht wird, deformiert.
- Die Integration der Sperrvorrichtung und eines Schienenpaares mit geschlossenem Profil in einen Längsverstellmechanismus (**Fig.** 2) schafft mehr Platz **(93)** für einen Kofferraum (**92**) unter dem Sitzkissen gemäß der DE-C- 196 55 051 (**Fig.** 2a).
- Erzielbar ist die Kostensenkung und der Raumgewinn durch Miniaturisieren herkömmlichen Längsverstellmechanismus beispielsweise gemäß der DE-C- 42 27 846 auf Längsverstellmechanismus **(Fig.** 15, 17, 40) und herkömmlichen Memory-Längsverstellmechanismus gemäß der DE-C- 196 55 051 auf Memory-Längsverstellmechanismus **80o (Fig.** 33-35).

Nachfolgend werden anhand der Zeichnungen mehrere Ausführungsformen der Erfindung unter Berücksichtigung des xyz-Koordinatensystems näher erläutert. Es zeigen:
**Fig.** 1 eine perspektivische Ansicht eines Sitzes mit einem runden Schienenpaar und einem Längsverstellmechanismus, dessen Schienenpaar geschlossenes Profil aufweist.
**Fig.** 1a eine perspektivische Ansicht eines Sitzes mit zwei runden Schienenpaaren gemäß DE-C- 195 49 378 und einem Memory-Längsverstellmechanismus oder Längsverstellmechanismus gemäß DE-C- 196 55 051.
**Fig.** 2 eine perspektivische Ansicht eines Sitzes mit einem beliebigen Schienenpaar, einem Kofferraum und mit einer 4. Ausführungsform eines Längsverstellmechanismus.
**Fig.** 2a eine perspektivische Ansicht eines Sitzes mit zwei herkömmlichen Schienenpaaren, einem Kofferraum und Längsverstellmechanismus gemäß DE-C- 196 55 051.
**Fig.** 3 eine Schnittzeichnung einer 1. Ausführungsform eines Längsverstellmechanismus entlang der Linie A-A nach **Fig.** 1.
**Fig.** 3a eine Schnittzeichnung der 1. Ausführungsform eines der in **Fig.** 3 modifizierten Sperrpaare.
**Fig.** 4 eine Schnittzeichnung einer 1. Ausführungsform eines Bodengebäuses der Bodenschiene zur Bestimmung der radialen Lage eines Sperrsegmentes entlang der Linie B-B nach **Fig.** 1.
**Fig.** 4a eine Schnittzeichnung der 1. bis 3. Ausführungsformen eines Positionierungspaares zur Bestimmung der radialen Lage eines Sperrsegmentes entlang der Linie B-B nach **Fig.** 1.
**Fig.** 5 eine Schnittzeichnung einer 1. Ausführungsform eines zur Vorfertigung des Fahrzeugsitzes vorgesehenen Montagehalters entlang der Linie B-B nach **Fig.** 1.
**Fig.** 6 eine Schnittzeichnung einer 2. Ausführungsform eines Montagehalters und einer 4. Ausführungsform eines Positionierungspaares entlang der Linie B-B nach **Fig.** 1.
**Fig.** 7 eine Schnittzeichnung einer 3. Ausführungsform eines Montagehalters entlang der Linie B-B nach **Fig.** 1.
**Fig.** 8 eine Schnittzeichnung einer 4. Ausführungsform eines Montagehalters entlang der Linie B-B nach **Fig.** 1.
**Fig.** 9 eine Schnittzeichnung einer 5. Ausführungsform eines Montagehalters entlang der Linie B-B nach **Fig.** 1.
**Fig.** 10 eine Schnittzeichnung einer 6. Ausführungsform eines Montagehalters und einer 5. Ausführungsform eines Positionierungspaares entlang der Linie B-B nach **Fig.** 1.
**Fig.** 11 eine Schnittzeichnung einer 7. Ausführungsform eines Montagehalters entlang der Linie B-B nach **Fig.** 1.
**Fig.** 12 eine Schnittzeichnung einer 8. Ausführungsform eines zur Vorfertigung des Fahrzeugsitzes vorgesehenen Verbundes zweier Bodengehäuse der Bodenschienen entlang der Linie B-B nach **Fig.** 1.
**Fig.** 13 eine perspektivische Ansicht einer runden Bodenschiene mit offenen Sperrzähnen.
**Fig.** 14 eine perspektivische Ansicht einer runden Bodenschiene mit geschlossenen Sperrlöchern und steifen Sperrelementen.
**Fig.** 15 eine Schnittzeichnung einer 2. Ausführungsform eines Längsverstellmechanismus mit geschlossenem Schienenpaar und Sperrvorrichtung, einer 2. Ausführungsform eines Sperrsegmentes in Steckverbindung mit einer offenen Bodenschiene und einer 2. Ausführungsform einer offenen Sitzschiene entlang der Linie A-A nach **Fig.** 1.
**Fig.** 16 eine Schnittzeichnung des Längsverstellmechanismus entlang der Linie C-C nach **Fig.** 15.
**Fig.** 17 eine Schnittzeichnung einer 3. Ausführungsform eines Längsverstellmechanismus mit geschlossenem Schienenpaar und Sperrvorrichtung, einer 1. Ausführungsform eines Sperrsegmentes und einer 1. Ausführungsform einer geschlossenen Sitzschiene entlang der Linie A-A nach **Fig.** 1.
**Fig.** 18 eine Schnittzeichnung der Ausführungsform form- und kraftschlüssiger Verbindung der Bodenschiene mit dem in **Fig.** 10 modifizierten Bodengehäuse entlang der Linie B-B nach **Fig.** 1.
**Fig.** 19 eine vergrößerte Schnittzeichnung einer 3. Ausführungsform eines Sperrsegmentes in Steckverbindung mit einer offenen Bodenschiene.
**Fig.** 20 eine Schnittzeichnung einer weiteren Ausführungsform form- und kraftschlüssiger Verbindung der Bodenschiene mit Bodengehäuse entlang der Linie B-B nach **Fig. 1.**
**Fig.** 21 eine Schnittzeichnung des Längsverstellmechanismus mit der Bodenschiene entlang der Linie D-D nach **Fig.** 20.
**Fig.** 22 eine vergrößerte Schnittzeichnung einer 4. Ausführungsform eines Sperrsegmentes in Steckverbindung mit einer offenen Bodenschiene.
**Fig.** 23 eine vergrößerte Schnittzeichnung einer 5. Ausfühmugsform eines Sperrsegmentes in Steckverbindung mit einer offenen Bodenschiene.
**Fig.** 24 eine vergrößerte Schnittzeichnung einer 6. Ausführungsform eines Sperrsegmentes in Steckverbindung mit einer offenen Bodenschiene.
**Fig.** 25 eine vergrößerte Schnittzeichnung des Sperrsegmentes, dessen Haltezähne mit Haltelöchern der Bodenschiene in Steckverbindung sind, entlang der Linie E-E nach **Fig. 24.**
**Fig.** 25a eine vergrößerte Schnittzeichnung der Haltezähne des Sperrsegrnentes in Steckverbindung mit Haltelöchern der Bodenschiene.
**Fig.** 26 eine vergrößerte Schnittzeichnung einer 7. Ausführungsform eines Sperrsegmentes, dessen Haltezähne mit Haltelöchern einer offenen Bodenschiene in Steckverbindung sind.
**Fig.** 27 eine schematische, perspektivische Ansicht einer 1. Ausführungsform eines Memory-Längsverstellmechanismus mit geschlossenem Schienenpaar, mit Kulisse und Sperrvorrichtung.
**Fig.** 28 eine schematische, perspektivische Ansicht eines Bodeugehäuses und einer geschlossenen Bodenschiene einer 2. Ausführungsform eines Memory-Längsverstellmechanismus.
**Fig.** 29 eine Schnittzeichnung des Memory-Längsverstellmechanismus in Sitzposition **P**_{**k**}**,** dessen Sperrelemente in Sperrzustand **P**_{**0**}**,** Entriegelungszustand **P**_{**1**} oder Memoryzustand **P**_{**2**} sind, entlang der Linie F-F nach **Fig.** 27.
**Fig.** 30 eine Ansicht des Memory-Längsverstellmechanismus gemäß dem Pfeil V in **Fig.** 27.
**Fig.** 31 eine Schnittzeichnung der 2. Ausführungsform des Memory-Längsverstellmechanismus in Sitzposition **P**_{**k**}, dessen Sperrelemente in Sperrzustand **P**_{**0**}, Entriegelungszustand **P**_{**1**} oder Memoryzustand **P**_{**2**} sind, entlang der Linie F-F nach **Fig.** 27.
**Fig.** 32 eine Ansicht dus Memory-Längsverstellmechanismus gemäß dem Pfeil V in **Fig.** 27.
**Fig.** 33 eine schematische, perspektivische Ansicht einer 3. Ausführungsform eines Memory-Längsverstellmechanismus mit rundem, geschlossenem Schienenpaar, mit Kulisse, die mit Schutzdeckel versehen ist, und Sperrvorrichtung.
**Fig.** 34 eine Ansicht des Memory-Längsverstellmechanismus mit Sperrpaaren in Sperrzustand **P**_{**0**} gemäß dem Pfeil X in **Fig.** 33.
**Fig.** 35a bis 35c eine Schnittzeichnung des Memory-Längsverstellmechanismus in Sperrzustand **P**_{**0**}, Entriegelungszustand **P**_{**1**} und Memoryzustand **P**_{**2**} entlang der Linie H-H nach **Fig.** 33.
**Fig.** 36 eine Seitenansicht einer 1. Ausführungsform eines Justierwerkzeuges.
**Fig.** 37 eine Vorderansicht des Justierwerkzeuges in Steckverbindung mit offenem Sitzschienenteil.
**Fig.** 38 eine Vorderansicht einer 2. Ausführungsform eines Justierwerkzeuges in Steckverbindung mit offenem Sitzschieneuteil.
**Fig.** 39 eine Vorderansicht des Justierwerkzeuges in Steckverbindung mit Symmetriehälfte des geschlossenen Sitzschienenteiles.
**Fig.** 40 eine Schnittzeichnung der 4. Ausführungsform des Längsverstellmechanismus entlang der Linie J-J nach **Fig.** 2.

Im allgemein umfaßt ein Kraftfahrzeugsitz **3** (**Fig.** 1) einen Sitzrahmen **3.1** mit Sitzkissen **3S** (nicht gezeichnet), einen Rückenlehnenrahmen **3.2** (Rahmen der Rückenlehne) mit Rückenkissen **3L** (nicht gezeichnet) sowie
- mindestens ein Schienenpaar **2 / 6, 2a / 6a bis 2o / 6o** mit geschlossenem Profil in y2-Achse und
- einen Längsverstellmechanismus **80, 80a bis 80c, 80m bis 80o,** dessen Schienenpaar **1 / 5, 1a / 5a bis 1o / 5o** in yl-Achse geschlossenes Profil besitzt, mit Sperrvorrichtung **70, 70a bis 70c, 70m bis 70o.**

Zum Vermeiden großer Durchbiegung eines längsverstellbaren, einzigen Vordersitzes unter Belastung von drei bis vier Insassen bei LKW oder Van ist mindestens ein zusätzliches Schienenpaar in der Mitte des Sitzes ratsam. Dementsprechend wird der Montagehalter **11a-11o** für zwei Schienenpaare und einen Längsverstellmechanismus verlängert.

Aubringbar an dem Silzrahmen **3.1** ist mindestens eine Sitzschiene wie eine durchgehende Sitzschiene **1b, 1c (Fig.** 15, 17) oder ein Sitzschienenpaar **1o (Fig.** 33-35).

Am verstärkten Fahrzeugboden **26** sind zwei Paare Bodengehäuse **7 / 8, 7a / 8a bis 7o /8o** der Bodenschienen befestigt. Als ein Paar mit gleichem Profil können die beiden Bodenschienen gestaltet werden. Da herkömmliche Mutter **7.7** von Sicherungshülse **7.18** seitlich gehalten **(Fig.** 4) ist, kann die Schraube **7.6** ohne Gegenhalten der Mutter **7.7** durch Werkzeug fest angezogen werden.

Der Memory-Längsverstellmechanismus **80m-80o** ohne Kulisse **14m-14o** verhält sich wie ein Längsverstellmechanismus **80, 80b, 80c.**

Die Position des Schienenpaares in y2-Achse und die des Längsverstellmechanismus mit Schienenpaar in yl-Achse sind untereinander vertauschbar, wie **Fig.** 2 zeigt.

Als Alternative ist der Kraftfahrzeugsitz **3 (Fig.** 2)
- mit dem antreibenden Längsverstellmechanismus **80a,** dessen Schienenpaar **1a / 5a** in y2-Achse geschlossenes Profil besitzt, und dem Schienenpaar **2d / 6d bis 2l / 6l** mit geschlossenem Profil in yl-Achse; oder
- mit dem antreibenden Längsverstellmechanismus **80a,** dessen Schienenpaar **1a / 5a** in y2-Achse geschlossenes Profil besitzt, und dem Längsverstellmechanismus **80, 80b, 80c, 80m bis 80o,** dessen Schienenpaar **2 / 6, 2b / 6b bis 2o / 6o** in yl-Achse geschlossenes Profil besitzt, mit Sperrvorrichtung **70, 70b, 70c, 70m bis 70o** ausgestattet.

Gemäß DE-C- 196 55 051 besteht die Baueinheit **50** der Sperrvorrichtung **70** aus einem Gehäuse **4.4,** einer einzigen Sperrwelle **4** und anderen Teilen. Bei der 1. Ausführungsform des Längsverstellmechanismus **80 (Fig.** 3) sind mindestens zwei Sperrwellen **4** (drei in **Fig.** 14, 16), die in Gleitbuchsen **4.5** von Wänden des Gehäuses gleiten. Zur Kostenersparnis ist eine einzige Feder **4.6** fiir die Vorspannung der Sperrwellen **4** vorgesehen. Unter Vorspannkraft der Feder **4.6** kann ein im Innenraum eines Federtellers **4.2** befindlicher Haltestift **4.3** nicht herausfallen. Zugleich dienen die Gleitbuchsen **4.5** zur Innenführung der Feder **4.6.** Gegen die Wand dieses Gehäuses wird die Feder **4.6** zuerst zusammengedrückt, um die Baueinheit **50** unter Federkraft durch Stecken eines nicht gezeichneten Hilfsstiftes **4.7** durch Hilfsloch **4.8** vorläufig zu sichern. Nach Befestigung eines mit Griff **12b-12d** versehenen Auslösekabels **12.1d** am Ende **4.9** der Sperrwelle und des Gehäuses **4.4** am Querträger **10** des Sitzrahmens **3.1** mittels Schrauben **1.8** wird dieser Hilfsstift **4.7** aus dem Hilfsloch **4.8** herausgenommen. Somit lassen sich diese Baueinheit **50a** und die anderen **50b, 50c** (**Fig.** 15, 17) vorfertigen. Mit pneumatischer, hydraulischer oder elektrischer Antriebseinheit für Sperrelemente **4, 4a bis 4c, 4m1, 4m2, 4n1, 4n2, 4o1, 4o2** kann die Sperrvorrichtung **70, 70a bis 70c, 70m bis 70o** um- oder ausgerüstet sein.

Zur Sperrung schieben sich die vorgespannten Sperrwellen 4 durch den Kugelkäfig **1.41** des Kugellagers **1.40,** die Bodenschiene **5** und das geschlossene Sitzschienenteil **1.1** hindurch. Um die Zwischenräume sinnvoll auszunutzen, ist zwischen zwei Löchern des Kugelkäfiges **1.41** ein Halteloch für eine Sicherungsniete **1.42x** vorgesehen (**Fig.** 3). Um die Steifigkeit weniger zu schwächen, dringen die Sperrwellen **4** (**Fig.** 3a) nur in eine einzige Seite der Sitzschiene **1**, des Kugelkäfigs **1.41** und der Bodenschiene **5** ein. Um den Arbeitsvorgang zum Bohren der Teile **1, 1.41** zu ersparen, wird die einzige Sitzschiene **1** durch ein Paar Sitzschienen **1o** (**Fig.** 33) mit einer Sperrvorrichtung, die zwischen den beiden Sitzschienen **1o** liegt, ersetzt.

Gemäß DE-C- 196 55 051 dringt eine gattungsgleiche Sperrwelle **4** durch ein am Fahrzeugboden **26** befestigtes Rohr in der 3. Längsachse durch.

Bei der 2. und 3. Ausführungsform des Längsverstellmechanismus **80b, 80c** (**Fig.** 14-18) werden drei vorgespannte Sperrwellen **4b, 4c** der Sperrvorrichtung **70b, 70c** im Griff **12b**, **12c** durch drei Stifte **4.9b, 4.9c** gesichert. Zur Sperrung schieben sich drei Sperrwellen **4b, 4c,** wovon eine zur Kosteneinsparung vorgespannt ist, durch die zugehörigen Sperrlöcher
- der oberen Verstärkungsschiene **1.2b,** des Sperrsegmentes **5.1 b** und des offenen Sitzschienenteiles **1.1b** durch und stützen sich gegen die untere Verstärkungsschiene **1.2b** ab oder
- des oberen Abschnittes **1.2c2o** der Verstärkungsschiene **1.2c2,** des Sperrsegmentes **5.1c** durch und stützen sich gegen den unteren Abschnitt **1.2c2u** ab.

Zum Aufheben des Sperrzustandes werden die Sperrwellen aus den zugehörigen Sperrlöchern durch Griff **12b, 12c** herausgezogen, dessen Bewegung durch Berührung des Stiftes **4.10b, 4.10c** mit Querträger **10b, 10c** begrenzt werden muß (gestrichelt gezeichnet in **Fig.** 17).

Aus Sitzschienenteil **1.1b, 1.1c** und mindestens einem Paar symmetrischen, geteilten Verstärkungsschienen **1,2b** oder unsymmetrischen, geteilten Verstärkungsschienen **1.2c1**, **1.2c2** wird die durchgehende Sitzschiene **1b, 1c** gebildet.

Bei der **4.** Ausführungsform **(Fig.** 40) besteht der Längsverstellmechanismus **80a** aus
- einem Paar Sitzschienen **1a,** die an dem Sitzboden **3.10a (Fig.** 2) des Sitzrahmens **3.1a** befestigt sind und deren Innengewinde **4a** mit Gewindespindel **5a** in Eingriff ist;
- zwei Paaren Axialkugellagern **20** und Radialkugellagern **19** zur axialen und radialen (drehbaren) Lagerung der Gewindespindel **5a;**
- einem Paar Bodengehäusen **7a,** die am Fahrzeugboden **26** mittels Verbindungselementen **7.6a** befestigt sind und in jeder deren Bohrungen das Radialkugellager **19** durch zwei Sicherungsringe **7.3a** und das Axialkugellager **20** durch Distanzring **7.4a**, Deckel **7.1a** und Schrauben **7.2a** gesichert werden; und
- einem Handrad **12a** zur Sitzverstellung, der mit Gewindespindel **5a** mittels Viereck-Form **5.4a** formschlüssig und Mutter **5.5a** kraftschlüssig verbunden ist. Anstatt der Viereck-Form ist beliebige Form beispielsweise Achteck-Form, Kerbverzahnung, Paßfeder usw. ebenso verwendbar.

Normalerweise bewirkt die Gewindesteigung in Verbindung mit formschlüssiger Verbindung des Außengewindes mit dem Innengewinde **4a** und/oder Reibung dazwischen eine ausreichende Arretierung im Sperrzustand.

Anstatt Radialkugellager und Axialkugellager sind andere Wälzlager wie Kegelrollenlager, Pendelrollenlager zur axialen und radialen Lagerung ebenso anwendbar.

Als Alternative (**Fig.** 2, 40) für das Antreiben der Gewindespindel **5a** zur Sitzverstellung kann
- ein Stellmotor, Servomotor oder im allgemeinen Motor **12** mit dem Endabschnitt **5.3a** der Gewindespindel **5a** angeschlossen und dem Fahrzeugboden **26** neben dem Schweller oder Tunnel verbunden sein; oder
- ein Kegelrad **17.2** mittels Viereck-Form **5.4a** formschlüssig und mittels Mutter **5.5a** bei Verwendung einer Unterlegscheibe **5.2a** kraftschlüssig verbunden sein und das andere Kegelrad **17.1** mit Handrad **12e,** ähnlich wie Handrad **12a**) form- und kraftschlüssig verbunden sein. Die beiden Kegelräder **17.1, 17.2** bilden ein Kegelradgetriebe **17.** Die Anordnung des Griffes **12e** in zl-Achse erleichtert dem Insassen das Bedienen.

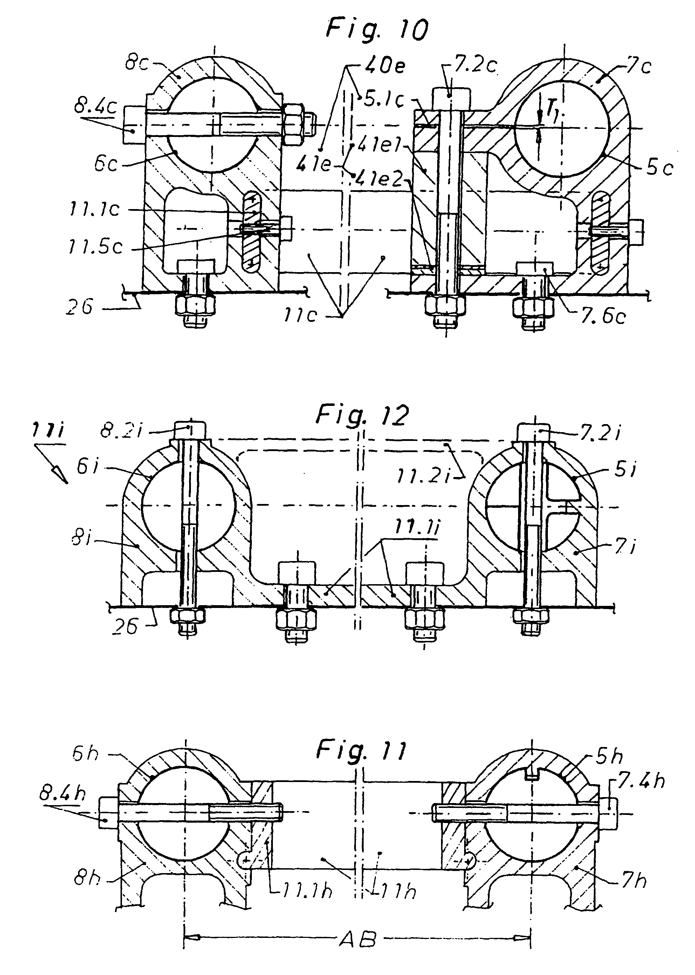

Bei der 1. bis 8. Ausführungsform des Positionierungspaares erfolgt die Lagefixierung der Sperrlöcher des Sperrsegmentes der Bodenschiene zu den Sperrelementen über form- und/oder kraftschlüssige Verbindung der Bodenschiene **5, 5, 5c, 5e, 5m, 5n** mit einem Paar Bodengehäusen **7, 7, 7c, 7e, 7m, 7n** und über zwei Positionierungspaare, wovon jedes aus folgenden Positionierungsteilen besteht:
- **40** aus Längsfeder **41** / Längsnut **42** der geschlossenen Bodenschiene **5;**
- **40a** aus Längsfeder **41a** / Längsnut **42a** der geschlossenen Bodenschiene **5;**
- **40b** aus rechteckiger Feder **41b** / zwei gegenüberliegenden Längsnuten **42b1, 42b2** (**Fig.** 4a);
- **40c** aus runder Feder **41c** / zwei gegenüberliegenden Längsnuten **42c1, 42c2** (**Fig.** 6);
- **40d** aus selbstzentrierender, konusförmiger Hülse **41d** mit Verbindungselementen **7.2, 7.3, 7.4** / Bohrung der Bodenschiene **5** (**Fig.** 4); oder
- **40e** aus einem aus mehreren Unterlegscheiben **41e1, 41e2** zusammengestellten Distanzring **41e** mit zwei Schenkeln des Bodengehäuses **7c** / Sperrsegment **5.1c** (**Fig.** 10, 17, 18). Für eine einwandfrei form- und kraftschlüssige Verbindung der Bodenschiene **5c** mit dem Paar Bodengehäusen **7c** und Fahrzeugboden **26** ist eine Toleranz "T₁" zwischen dem in Längsrichtung durchgehenden Sperrsegment **5.1c** und den beiden Schenkeln des Bodengehäuses **7c** vorgesehen;
- **40f** aus einem halbkreisförmigen Gleitbahnpaar **42f / 41f** des Bodengehäuses **7m** und der Bodenschiene **5m (Fig.** 27, 29); oder
- **40g** aus zwei V-förmigen Gleitbahnpaaren **42g / 41g** des Bodengehäuses **7n** und der Bodenschiene **5n** (**Fig.** 28, 31).

Ob anstatt zwei ein einziges Positionierungspaar hierfür ausreichend ist, klärt der Versuch.

Bei den verschiedenartigen Ausführungsformen wird die Einhaltung
- der Parallelität der y1- und y2-Achsen zweier Paare Bodeugehäuse **7** / **8, 7a** / **8a bis 7o** / **8o,** worin die Endabschnitte der zugehörigen Bodenschienen **5 / 6, 5a / 6a bis 5o / 6o** eingesteckt sind, zueinander und
- des Abstandes "AB" (**Fig.** 11) zwischen diesen beiden Achsen
durch ein Paar Montagehalter **11a-11o** (**Fig.** 5-12, 27, 33) realisiert, wovon jeder mit folgenden versehen ist:
- einem Paar steckbaren Schenkeln **11.1b, 11.1c, 11.1e, 11.1g,** die mit den zugehörigen Aussparungen der Rodengehäuse **7b / 8b, 7c / 8c, 7e / 8e, 7g / 8g** durch Einstecken förmschlüssig und mittels Verbindungselementen **7.4b, 8.4b, 11.5c, 7.4e, 8.4e, 7.6g, 8.6g** kraftschlüssig verbunden sind **(Fig.** 6, 8-10). Beispielsweise zeigt **Fig.** 8 das Paar Teile **11.1b** des Montagehalters **11b** und die zugehörigen Fonnteile **7.11b, 8.11b** der Bodengehäuse **7b / 8b** in Schwalbenschwanzverbindung;
- einem Paar steckbaren U-förmigen Schenkeln **11.1d, 11.1o,** die in ein Paar zwei abgewandte Aussparungen der beiden Bodengehäuse **7d / 8d, 7o / 8o** eingeschoben werden; oder
- einem Paar Schenkeln **11.1h,** deren Halbkreise mit den zugehörigen Aussparungen der Bodengehäuse **7d / 8d** formschlüssig verbunden sind und die mit Bodengehäusen **7d** /**8d** mittels Verbindungselementen **7.4h, 8.4h** kraftschlüssig verbunden sind (**Fig.** 11);
- einem Paar Schenkeln **11.1m, 11.1n,** deren Gleitbahnen **43f, 43g** mit Gleitbahnen **42f, 42g** der Bodengehäuse **7m / 8m, 7n / 8n** formschlüssig verbunden sind und die mit Bodengehäusen **7m / 8m, 7n / 8n** mittels Verbindungselementen **7.4m** (vgl. mit **8.4h** und **7.4h in Fig.** 11) kraft schlüssig verbunden sind. Als Halbkreis ist die Gleitbahn **43f** in **Fig.** 27 dargestellt.
- mindestens einem Verbindungselement **11.1i, 11.2i**, aus dessen kraftschlüssiger Verbindung mit den beiden Bodengehäusen **7i / 8i** ein Verbundstück als Montagehalter **11i** gebildet wird. Die Befestigungsschrauben **7.2i, 8.2i** finden weitere Verwendung für das Verschrauben mit Fahrzeugboden **26**. Im Falle, daß das oder die querliegenden Verbindungselemente **11.1i, 11.2i** auf die Füße des Insassen bei Bewegung störend wirken, ist der Montagehalter ausschließlich mit Verbindungselement **11.1i** versehen; oder
- einem Paar Abstandhaltern **11.2f**, durch deren Löcher und durch eines "Lₗ" der Lochpaare "Lₗ bis Lₙ" einer Welle **11f** ein Paar Ösen **11.3f** durchgesteckt wird. Als Montagehalter wird die Welle **11f** durch die Bohrung der Bodengehäuse **7f/8f** durchgesteckt und werden ihre Endabschnitte mit Muttern **11.1f** verschraubt.

Bei der 1. Ausführungsform ist das Sperrsegment **5.1c (Fig.** 10, 17, 18) der Bodenschiene **5c** mit einer Vielzahl von Sperrlöchern versehen.

Der Unterschied der 2. Ausführungsform zur 1. liegt darin, daß die Sperrlöcher des Sperrsegmentes **5.1b** (**Fig.** 14-16) ohne Bodenschiene **5b** leichter und billiger zu verarbeiten sind. Da das Sperrsegment ausschließlich für die Sperrlöcher vorgesehen ist, kann es auf die gewünschte Länge fertiggestellt werden.

Brauchbar ist die aus Innenrippen **5.11b, 5.12b** gebildete, T-förmige Längshaltenut **42** (**Fig.** 8) für
- Aufnahme des Sperrsegmentes **5.1b,** das mit Bodenschiene **5b** durch Senknieten **5.8b** (**Fig.** 15) vernietet wird; und
- Steckverbindung mit Langsfedern **41** beider Bodengehäuse **7b** zur Lagefixierung des Sperrsegmentes **5.1b.**

Mit dem Paar Bodengehäusen **7b** ist die Bodenschiene **5b** formschlüssig und mittels Verbindungselementen **7.4b, 7.5b** kraftschlüssig verbunden.

Bei der 3. Ausführungsform sind die Haltezähne **5.1i1** des Sperrsegmentes **5.1i** in die zugehörigen Haltelöcher **5.4i** der Bodenschiene **5i** einsteckbar **(Fig.** 19-21). Durch Einschieben eines Paares mit Klebstoff aufgetragenen Halteelemente **5.i1** in zwei aus dem Sperrsegment und den Innenrippen **5.11i, 5.12i** der Bodenschiene gebildete Zwischenräume ist das Sperrsegment mit der Bodenschiene form- und kraftschlüssig verbunden. Damit wird das offene Profil der Bodenschiene **5i** in ein geschlossenes umgewandelt. Gemäß DE-C- 38 11 427 wird die Klebverbindung durch Rillen **5.LR,** die an den Oberflächen der in Berührung gekommenen Teile **5.i1, 5.1i** kreuzend angelegt sind, verbessert. Ein Test klärt, ob die Längsrillen **5.LR** eine gute Wirkung auf die Klebverbindung erzielen. Eines der beiden Merkmale ist auf die beiden Teile **5.j1, 5.1j1** oder **5.ik, 5.k1-5.k3** (**Fig.** 22-23) anwendbar. Die Steifigkeit der Bodenschiene **5i** wird durch Innenrohr **5.13i** erhöht.

Nach Einschieben in die Längshaltenut **42i** ist die Längsfeder **41i** mit Bodenschiene **5i** durch Senknieten **5.8i** verbunden **(Fig.** 20). Somit läßt sich die Bodenschiene **5i** mit den beiden Bodengehäusen **7i** formschlüssig und mittels Verbindungselementen **7.2i** kraftschlüssig verbinden.

Bei der 4. und 5. Ausföhrungsform ist das flache Sperrsegment **5.1j, 5.1k** mit stanzbaren Sperrlöchern durch Einschieben
- der Haltezähne **5.1j1, 5.1k1** in die zugehörigen Haltelöcher **5.4j, 5.4k** und
- des Halteelementes **5.j1, 5.k1 bis 5.k3** in einen aus dem Sperrsegment und den Innenrippen der Bodenschiene gebildeten Zwischenraum
mit der Bodenschiene **5j, 5k** formschlüssig und beispielsweise mittels Verkleben kraftschlüssig verbunden (**Fig.** 22-23). Das Halteelement **5.j1** ist mit den runden Köpfen **5.1jk** der Haltezähne **5.1j1** formschlüssig verbunden.

Bei der 6. Ausführungsform (**Fig.** 24-26) hat das Sperrteil **5.1la** ein flaches Profil. Somit lassen sich die Haltezähne **5.1l1, 5.1l2** und Sperrlöcher stanzen. Nachdem der Bildung des Sperrsegmentes **5.1l** aus diesem Sperrteil **5.1la** und mindestens einem Paar Scheiben **5.1lb** durch kraftschlüssige Verbindung beispielsweise Vernieten mittels Senknieten **5.3l** werden die gemeinsamen Sperrlöcher gestanzt. Ist das Sperrsegment sehr dick, dann sind Sperrlöcher durch Stanzen nicht herstellbar. Abhilfe verschafft man, indem die Sperrlöcher des Sperrteiles **5.1la** und der Scheiben **5.1lb** zuerst getrennt gestanzt werden und das Sperrsegment **5.1l** durch kraftschlüssige Verbindung der eingespannten Teile, deren Sperrlöcher von einer Führungswelle **5.5l** (nicht gezeichnet) geführt sind, gebildet wird. Bei Einrasten der trapezförmigen Haltezähne **5.1l2** des Sperrsegmentes **5.1l** in die zugehörigen Haltelöcher **5.4l** der Bodenschiene **5l** verkleinert sich der Abstand aller paarweise verformbaren Enden **5.1lh** der Haltezähne von "m" bis auf die Breite des Halteloches von "l". Nach Einrasten spreizen sich die zugehörigen Enden an den Oberflächen der Innenrippen **5.11l** neben den zugehörigen Haltelöchern auf einen Abstand, der > "l" ist. Somit ist das Sperrsegment **5.1l** von der Bodenschiene **5l** gehalten. Die Geometrie jedes Haltezahnes **(Fig.** 25a, 26) nimmt Einfluß auf das Sichspreizen der verformbaren Enden.

Haben die Haltezähne **5.1l1** rechteckige Form, dann muß nach Einschieben der Haltezähne **5.1l** in die zugehörigen Haltelöcher **5.4l** das Sperrsegment **5.1l** mit Bodenschiene **5l** durch Senknieten **5.8l** gesichert werden. Dies bedeutet einen zusätzlichen Arbeitsvorgang.

Bei der 7. Ausführungsform rasten die trapezförmigen Haltezähne **5.1l2** des einstückigen Sperrsegmentes **5.1l**, das von Innenrippen **5.12l** geführt ist, in die zugehörigen Haltelöcher **5.4l** der Bodenschiene **5l** ein, wonach sich die Enden der Haltezähne an den Oberflächen der Bodenschiene neben den zugehörigen Haltelöchern spreizen.

Zum Sicherstellen des Einrastens der federbelasteten Memorywelle **4m1, 4n1, 4o1** in die Bohrung der Kulisse wird jedes Paar Bahn **14.2n3** in Bahnabschnitte "B1" und "B2" und Bahnabschnitt "B3" mit einer trapezförmigen Grube (Fallgrube) "V3" unterteilt **(Fig.** 30, 32, 34).

Diese Grube "V3" ist von den Parametern "oeₖ", "K" und "L" abhängig. Werden die Wellen **4m1, 4m2, 4n1, 4n2, 4o1, 4o2** von Position **P**_{**v**} **zu P**_{**k**} oder von Position **P**_{**h**} zu **P**_{**k**} bei Sitzverstellung gebracht, dann erhöht sich die Vorspannung der Wellen **4m1, 4m2, 4n1, 4n2, 4o1, 4o2** bei Berührung der Welle **4m1, 4n1, 4o2** mit dem Bahnabschnitt "B1". Nach Erreichen des gerade verlaufenden Bahnabschnittes "B2" bleibt sie konstant. Bedingt durch Absinken in die Grube "V3" im Bahnabschnitt "B3", woran das Loch angeordnet ist, fällt die Vorspannung ab, wodurch
- sich die Welle **4m1, 4n1, 4o2** in der Grube "V3" einnistet;
- die Sitzverstellung beendet wird und
- die Sitzposition durch Einrasten der Wellen **4m1, 4m2, 4n1, 4n2, 4o1, 4o2** in die zugehörigen Löcher gesichert wird.

Bei der 1. und 2. Ausführungsform setzt sich der Memory-Längsverstellmechanismus **80m, 80n** aus einer Sperrvorrichtung **70m, 70n,** Kulisse **14m, 14n,** Bodenschiene **5m, 5n,** einem Paar Sitzschienen **1m, 1n** und einem Paar Bodengehäusen **7m, 7n** zusammen **(Fig.** 27-32). Au einem Querträger **10m1, 10n1** ist das Gehäuse **4.4m, 4.4n** der Sperrvorrichtung **70m, 70n** mittels Schrauben **1.8m, 1.8n** und am Sitzrahmen **3.1m, 3.1n** mittels Schrauben **1.9m, 1.9n** befestigt. Der Querträger wird mit Sitzrahmen **3.1m, 3.1n** durch Nieten **1.6m, 1.6n** vernietet.

Durch Strangpressen oder Tiefziehen ist sehr kleine Toleranz "s" (zur Verdeutlichung in **Fig.** 29 und 31 größer gezeichnet) realisierbar. Ebenso wird eine gute Oberflächenbeschaffenheit an den halbkreisförmigen Gleitbahnpaaren, deren Teile formschlüssig aneinander gleiten, **42f / 41f** des Kulissenstückes **14.1m** und der Bodenschiene **5m** des Memory-Längsverstellmechanismus **80m** und an den V-förmigen Gleitbahnpaaren **42g / 41g** des Kulissenstückes **14.1n** und der Bodenschiene **5n** des Memory-Längsverstellmechanismus **80n** erreicht. Selbstverständlich sind auch andere Formen für die Gleitbahnen verwendbar.

Vorzugsweise auch durch Druckgieß wird das andere Kulissenstück **14.2m, 14.2n** mit seinen beidseitigen Gleitbahnen **14.2m1, 14.2n1** hergestellt. Dieses Kulissenstück **14.2m, 14.2n** ist mit einer Aussparung zur Führung und Aufnahme des Memoryelementes wie Memoryfeder **13m** oder Memoryscheibe **13n** versehen.

Im Vergleich zu DE-C- 196 55 051 läßt sich die durchgehende Aussparung des Kulissenstückes **14.2m** für Memoryfeder **13m** einfacher und billiger fertigen **(Fig.** 30). Der Zusammenbau der Kulisse **14m** oder **14n** aus den beiden Kulissenstücken **14.1m, 14.2m** oder **14.1n, 14.2n** erfolgt über
- formschlüssige Verbindung durch Einschieben einer Längsfeder **14.2m1** oder **14. 2n1** in die Längsnut und
- kraftschlüssige Verbindung durch Verschweißen (u.a. Laserschweißen), Verkleben, Verschrauben und/oder Vernieten wie Halbrundnieten **14.6m, 14.7m** oder **14.6n, 14.7n.**

Nach Einlegen des rechteckigen Endabschnittes der vorgespannten Memoryfeder **13m** zwischen die beiden Kulissenstücke **14.1m, 14.2m** werden die Teile **13m**, **14.1m, 14.2m** durch Halbrundnieten **14.6m, 14.7m** miteinander vernietet.

Nach Stecken durch die Bohrungen der beiden Stege **14.2n5** und der Memoryscheibe **13n** wird die Halbrundniete **13.2n** durch Sicherungsteil **13.3n** gesichert. Diese zwischen den beiden Stegen **14.2n5** leicht geführte Memoryscheibe **13n** ist an der Halbrundniete **13.2n** drehbar gelagert. Ein Schenkel der an der Halbrundniete **13.2n** gelagerten Schenkelfeder ist im Loch des Steges **14.2n4** und der andere setzt die Memoryscheibe **13b** unter Druckkraft.

**Fig.** 29 oder 31 zeigt die Sitzposition **P**_{**k**} bei Positionierung der
- Sperr- und Memorywelle **4m1** mit einer Sperrwelle **4m2** oder
- Sperr- und Memorywelle **4n1** mit zwei Sperrwellen **4n2** in bezug auf den Sperrzustand **P**_{**0**}**,** Entriegelungszustand **P**_{**1**} oder Memoryzustand **P**_{**2**}**.**

Im Entriegelungszustand **P**_{**1**} bleibt die Sperrwelle **4m1, 4n1** in Steckverbindung mit der Bohrung der Kulisse. Bei Sitzverstellung gleiten die Gleitbahnen **42f / 41f, 42g / 41g** der Kulisse **14m, 14n** samt Sperrwellen **4m1, 4m2, 4n1, 4n2** entlang den korrespondierenden Gleitbahnen der Bodenschiene **5m, 5n** und zwar berührungsfrei dank dem Spiel "b" zwischen dem Memoryelement **13m, 13n** und der Bodenschiene **5m, 5n.** Im Sperrzustand **P**_{**0**} schiebt/schieben sich
- die vorgespannte Memorywelle (Sperrwelle) **4m1, 4n1** durch das aus der Sitzverstellung in Längsrichtung sich ergebende Memoryloch der Bodenschiene und das Memoryloch der außenliegenden Seitenwand **4.4m1, 4,4n1** des Gehäuses **4.4m, 4.4n** und
- die Sperrwelle/n **4m2, 4n2** in das/die Sperrloch/-löcher der Kulisse **14m, 14n,** Bodenschiene **5m, 5n** und der außenliegenden Seitenwand **4.4m1, 4.4n1** des Gehäuses **4.4m, 4.4n.**

Wird das Memory des Memory-Längsverstellmechanismus **80m, 80n** (**Fig.** 27-32) aktiviert, so werden die Sperrwellen **4m1, 4m2, 4n1, 4n2** aus den Sperrlöchern der außenliegenden Seitenwand **4.4m1, 4.4n1** des Gehäuses **4.4m, 4.4n** und Bodenschiene **5m, 5n** bis zur Position im Memoryzustand **P**_{**2**} herausgezogen. Währenddessen schiebt sich das vorgespannte Memoryelement **13m, 13n** in die Aussparung der Kulisse als Memoryloch und das Memoryloch "Mₖ" der Bodenschiene ein. Die Kulisse ist in Ausgangsposition gesichert. Das Einschieben des Memoryelementes **13n** läßt sich durch die Berührung der Kante mit der Anschlagkante **14.2n6** der Aussparung der Kulisse **14n** begrenzen. Im Memoryzustand ist die Kulisse **14m, 14n** nicht mehr bewegbar. Nach Herausziehen dieser Memorywelle **4m1, 4n1** aus deren Bohrung und dank dem Spiel "c" **(Fig.** 29, 31) zwischen Nieten **1.20m, 1.20n** jeder Sitzschiene **1m, 1n** und der Bodenschiene **5m, 5n** läßt sich der Sitz 3 samt Sperrvorrichtung **70m, 70n** bei Sitzverstellung in beliebiger Richtung bewegen. Bei einer gewünschten Sitzpositionierung sind die Sperrwellen **4m1, 4m2, 4n1, 4n2** in Eingriff mit den zugehörigen Sperrlöchern beispielsweise
- Lᵢ und Mᵢ im Sperrzustand **P**_{**0h**} oder
- L_{y} und M_{y} im Sperrzustand **P**_{**0v**} (**Fig.** 27).
Bei Rückpositionierung nach Entriegelung und bei Sitzverstellung befinden sich die gestrichelt gezeichneten Sperrwellen **4m1, 4m2, 4n1, 4n2** entweder in Position **P**_{**v**} oder **P**_{**h**} (**Fig.** 27, 30). Dank seitlicher Führung durch leichte Berührung mit dem Paar Seitenwänden **14.2m2, 14.2n2** des Kulissenstückes **14.2m, 14.2n** gleitet die Sperrwelle **4m1, 4n1** unter Federkraft entlang dem Bahnabschnitt "B1" und "B2", sinkt in die Grube "V3" und rastet in die Bohrung der Kulisse **14m, 14n,** das Memoryloch "Mₖ" der Bodenschiene **5m, 5n** und Memoryloch der außenliegenden Seitenwand **4.4m1, 4.4n1** ein. Währenddessen
- wird der Memoryzustand durch Herausschieben der Memoryfeder **13m, 13n** aus jener Aussparung und jenem Memoryloch "Mₖ" aufgehoben und
- rastet/rasten die Sperrwelle/n **4m2, 4n2** unter Federkraft in das/die Sperrloch/-löcher der Kulisse **14m, 14n,** Bodenschiene **5m, 5n** und der außenliegenden Seitenwand **4.4m1, 4.4n1** ein.

Somit ist die Ausgangsposition **P**_{**k**} des Sitzes auffindbar, zugleich wird das Memory deaktiviert und der Sperrzustand **P**_{**0**} sichergestellt.

Ausschließlich für eine einzige Extrempositionierung nach vome zwecks leichterem Durchstieg bei zweitürigem Fahrzeug eignet sich der Memory-Längsverstellmechanismus gemäß DE-C- 41 194 18. Zur Kostensenkung wird das Kulissenstück **14.2m, 14.2n** durch Verwendung einer einzigen Symmetriehälfte des Kulissenstückes mit der Bohrung unter Beibehaltung der anderen Teile des Memory-Längsverstellmechanismus **80m, 80n** und durch festes Anbringen einer in **Fig.** 30, 32 fein gestrichelt gezeichneten Anschlagwand **14.5m, 14.5n** modifiziert. Da die Anschlagwand **14.5m, 14.5n** eine weitere Längsbewegung der Sperrwelle **4m1, 4n1** nach hinten verhindert, gleitet die Kulisse **14m, 14n** samt Sperrvorrichtung **70m, 70n** entlang der Bodenschiene **5m, 5n** bei Sitzverstellung nach hinten. Ist die gewünschte Sitzpositionierung gefunden, so wird der Sitz gesperrt. Der Sperrzustand kann jedoch in einen Memoryzustand umgewandelt werden.

Zur Kostenersparnis findet eine weitere Verwendung des Kulissenstückes **14.1m, 14.1n** für das Paar Sitzschienen **1m, 1n,** wovon jede an einem Querträger **10m, 10n** mittels Nieten **1.20m, 1.20n** und am Sitzralimen **3.1m, 3.1n** mittels Nieten **1.22m, 1.22n** bei Verwendung von Hülsen **1.23m, 1.23n** befestigt ist. Zwischen den beiden Sitzschienen **1m, 1n** kann sich die Kulisse **14m, 14n** fiei bewegen. Der Querträger **10m, 10n** wird mit Sitzrahmen **3.1m, 3.1n** durch Nieten **1.21m, 1.21n** vernietet.

Zur weiteren Kostenersparnis findet eine weitere Verwendung der Matrizen des Kulissenstückes **14.1m** für die Herstellung des Profils des Paares Bodengehäuse **7m (Fig.** 27-29), wovon jedes
- mit Bodenschiene **5m** mittels Positionierungspaar **40f** formschlüssig und mittels Verbindungselementen **7.2m** kraftschlüssig verbunden ist sowie
- mit Fahrzeugboden **26** mittels Verbindungselementen **7.2m, 7.6m** kraftschlüssig verbunden ist.

Weiterhin verwendbar ist das Kulissenstück **14.1n** mit erforderlicher Länge für Bodengehäusenteil **7.n2,** das mit Bodengehäusenteil **7.n1** formschlüssig und mittels Verbindungselementen **7.3n, 14.7n** kraftschlüssig verbunden ist. Daraus wird ein Bodengehäuse **7n** (**Fig.** 28-31) gebildet, das
- mit Bodenschiene **5n** mittels Positionierungspaar **40g** formschlüssig und mittels Nieten **7.4n** bei Verwendung von Hülsen wie **1.23n** kraftschlüssig verbunden ist sowie
- mit Fahrzeugboden **26** mittels Verbindungselementen **7.6n** kraftschlüssig verbunden ist. Ferner dienen dank dem gleichen Profil die beiden Bodengehäuse **7m, 7n** als Anschlag für die Sitzschienen **1m, 1n** bei Sitzverstellung.

Nach Verschraubung eines Paares Montagehalter **11m, 11n** (**Fig.** 11, 27) mit zwei Paaren Bodengehäusen **7m / 8m, 7n / 8n** des Memory-Längsverstellmechanismus **80m, 80n** und der anderen, nicht gezeichneten Bodenschiene **6m, 6n** ist der Sitz 3 für die Montage am Fahrzeugboden **26** fertig.

Bei der 3. Ausführungsform setzt sich der Memory-Längsverstellmechanismus **80o** aus einer Sperrvorrichtung **70o**, Kulisse **14o**, Bodenschiene **5o**, einem Paar Sitzschienen **1o** und einem Paar Bodengehäusen **7o** zusammen **(Fig.** 33-35c). Die Bodenschiene **5o** weist die gleichen Merkmale der Bodenschiene **5l** mit Haltezähnen **5.1l1** oder **5.1l2 (Fig.** 25) auf, allerdings mit einem kleinen Unterschied, daß die Breite der Scheiben kürzer als die der Scheiben **5.1lb** ist.

Dank der Führung der Kulisse **14m, 14n** und aller Sperrwellen von derselben Bodenschiene **5m, 5n** bei Sitzverstellung läßt sich die Sperrwelle **4m1, 4n1** zu dem gesuchten Loch der Kulisse **14m, 14n**, Bodenschiene **5m, 5n** und der außenliegenden Seitenwand **4.4m1, 4.4n1** exakt positionieren **(Fig.** 29-32). Überflüssig sind somit die Seitenwände **14.2m2, 14.2n2.** Damit sind die Herstellungskosten für Kulissenstück **14.2o** ohne Seitenwände niedriger.

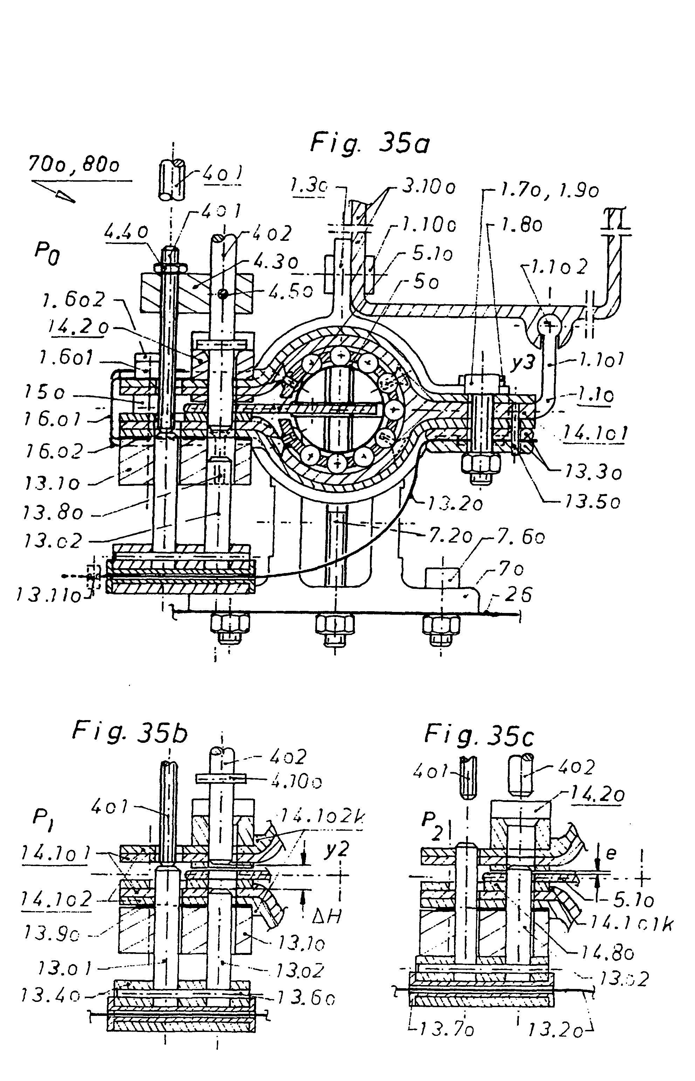

Zur weiteren Kostenersparnis durch weitere Verwendung gleicher Matrizen bei der Fertigung und durch konstruktive Merkmale werden möglichst gleiche Teile und/oder Teile mit gleichem Profil eingesetzt. Beispielsweise unterscheiden sich
- das Hauptkulissenteil **14.1o1** und Sitzschienenteil **1.1o** durch Teile **14.1o1k, 1.1o1** und **1.1o2 (Fig.** 35a, 35c, 37) sowie
- das Paar Kulissenteile **14.1o2** und das Paar Verstärkungsschienen **1.2o** durch Anschlagkante **14.1o2k (Fig.** 35b).

Zusammengebaut wird jede des Paares Sitzschienen **1o** aus
- zwei Paaren Verstärkungsschienen **1.2o, 1.3o** und dem Sitzschienenteil **1.1o;**
- mindestens einem offenen Kugellager **1.40a,** in die Haltelöcher dessen Kugelkäfig **1.41a** und des Sitzschienenteiles **1.1o** die Senkuieten **1.42** eingesteckt werden, wonach die Senkuieten **1.42** von dem Paar Verstärkungsschienen **1.2o** gehalten sind und alle Teile **1.1o bis 1.3o** mittels Verbindungselementen **1.8o** miteinander verschraubt werden; und
- einem Schutzdeckel **16.o2,** der nach Einfetten an das Paar Verstärkungsschienen **1.3o** angelegt werden und zusammen mit allen Teilen **1.1o** bis **1.3o** mittels Verbindungselementen **1.6o2** verschraubt werden.

Zusammengebaut wird die Kulisse **14o** aus
- einer aus einem Hauptkulissenteil **14.1o1** und einem Paar Kulissenteilen **14.1o2** bestehenden Kulissenschiene **14.1o**, an deren unterem Kulissenteil **14.1o2** ein an der Anschlagkante **14.1o2k** liegendes Führungsstück **13.1o** mit Unterlegscheibe **13.9o**, aus deren Dicke sich ein Spalt für Einlegen des Schutzdeckels **16.o1** ergibt, mittels Schraube **13.8o (Fig.** 35a) zwecks Vormontage befestigt ist;
- mindestens einem offenen Kugellager **1.40a**, in die Haltelöcher dessen Kugelkäfig **1.41a** und des Hauptkulissenteiles **14,1o1** die Senknieten **1.42** eingesteckt werden, wonach die Senknieten **1.42** von dem Paar Kulissenteilen **14.1o2** gehalten sind und alle Kulissenteile **14.1o1, 14.1o2** mittels Verbindungselementen **1.7o** miteinander verschraubt werden;
- einem Kulissenstück **14.2o,** das in den oberen Abschnitt der Kulissenschiene **14.1o** bis zur Anschlagkante **14.1o2k** eingeschoben wird und dessen Noppen **14.2o1** in die Löcher des Kulissenteiles **14.1o2** einrasten **(Fig.** 34, 35b);
- eine Distanzscheibe **14.8o**, die auf den inneren, unteren Abschnitt des Hauptkulissenteiles **14.1o1** bis zur Anschlagkante **14.1o1k** eingelegt wird;
- die auf die Distanzscheibe **14.8o** gelegten Distanzringe **15o**, wobei durch Teile **14.8o**, **15o, 14.1o1, 14.1o2** die Schrauben der Verbindungselemente **1.6o1** eingesteckt werden und nach Einfetten und Einlegen des Schutzdeckels **16.o1** die Verbindungselemente **1.6o1** miteinander und zwei Schrauben **1.16o** mit Führungsstück **13.1o** verschraubt werden; und
- einem Memoryteil **13o.** dessen zwischen zwei großen Unterlegscheiben **13.3o** liegende Blattfeder **13.2o** durch Stift **13.5o** gegen Verdrehen beim Anziehen gesichert wird und an der Kulisseuschiene **14.1o** mittels Verbindungselement **1.9o** befestigt ist.

Die Kulissenschiene **14.1o** bzw. Kulisse **14o** ist von Bodenschiene **5o** und Sperrsegment **5.1o** bei Einhaltung der Toleranz "e" geführt (**Fig.** 35c). Da die Toleranz "e" ausschließlich von der Höhe der Distanzscheibe **14.8o** abhängig ist, läßt sich die passende aus Distanzscheiben mit verschiedener Höhe leicht finden.

Das Memoryteil **13o** besteht aus
- einem Block **13.4o.** in dessen Bohrungen die Steuerungswelle **13.o1** und Memorywelle **13.o2** eingesteckt und durch Stift **13.6o** gemeinsam gesichert werden, mit einer geräuschdämpfenden Hülse **13.7o** für Führung der Blattfeder **13.2o**;
- dem Führungsstück **13.1o** mit zwei Löchern zur Führung der Steuerungswelle **13.o1** und Steuerungswelle (Sperrwelle) **4o1** und zur Führung der Memorywelle **13.o2;** und
- der Blattfeder **13.2o,** unter deren Vorspannkraft die Steuerungswelle **13.o1** gegen die Steuerungs- und Sperrwelle **4o1** drückt. Falls beim Versuch der Block **13.4o** gegen den Fahrzeugboden **26** aufschlägt oder die beiden Wellen **13.o1, 13.o2** aus den Löchern herunterfallen, muß die Bewegung durch Stift **13.11o**, der durch Endabschnitt der Blattfeder **13.2o** durchgesteckt wird, begrenzt werden.

Aus einem geräuschdämpfenden Stück kann der Block **13.4o** mit Hüise **13.7o** angefertigt werden.

Nach Einschieben der Bodenschiene **5o** mit Sperrsegment **5.1o** durch die Sitzschiene **1o**, Kulisse **14o** und die andere Sitzschiene **1o** und nach Steckverbindung mit runden Enden **1.1o2** der beiden Sitzschienenteile **1.1o** isi das Verbindungsstück **3.10o** des Sitzrahmens **3.1o** mit den beiden Verstärkungsschienen **1.3o** formschlüssig und mittels Verbindungselementen **1.10o** kraftschlüssig verbunden. Der Sitzrahmen **3.1o**, das Verbindungsstück **3.10o** und die Verstärkungsschienen **1.3o** können mittels Nieten **1.10o** zusammen vernietet werden.

Gebildet wird die Sitzschiene **1o** aus Sitzschienenteil **1.1o** und zwei Paaren Verstärkungsschienen **1.2o, 1.3o** und die Kulissenschiene **14.1o** aus einem Hauptkulissenteil **14.1o1** und einem Paar Kulissenteilen **14.1o2.** Der Umfang der Sitzschiene lo ist größer der der Kulissenschiene **14.1o** um das Spiel "g" (**Fig.** 34). Dieses Spiel und die Toleranz "± Δt" zwischen Sperrsegment **5.1o** und Kugelkäfig **1.41a** (**Fig.** 37) gestatten, daß die von Bodenschiene **5o** und von Sperrsegment **5.1o** geführte Kulisse **14o** zwischen dem Paar Sitzschienen **1o** frei bewegbar ist und entlang der Bodenschiene **5o** gleitet.

Zur Bildung einer umschlossenen Ablage für Getränkedose **76,** Heft **75** usw, ist ein Paar Endstücke **3.11o** mit den beiden Enden des Verbindungsstückes **3.10o** kraftschlüssig verbunden.

Die Welle **4o1** hat zwei Funktionen als Steuerungswelle und Sperrwelle zur Sperrung der Kulisse **14o**. Um die hintereinanderliegenden Sperrwellen **4o1, 4o2** vor allem in **Fig.** 34 *deutlicher* darzustellen, wird die Steuerungswelle **4o1** durch Steuerungswelle **4o1** mit *kleinerem* Durchmesser ersetzt. Für die gemeinsame Bewegung aller drei Wellen **4o1, 4o2** sorgt ein Halter **4.3o**, in dem die beiden Sperrwellen **4o2** durch Stift **13.5o** gesichert werden und die Steuerungswelle **4o1** verschraubbar ist. Durch Ein- und Ausdrehen der Steuerungswelle **4o1** im Halter **4.3o** kann bei Berührung beider Steuerungswellen **4o1, 13.o1** im gemeinsamen Loch die Höhendifferenz "ΔH" **(Fig.** 35b) zwischen einer der beiden Sperrwellen **4o2** und der Memorywelle **13.o2** im anderen gemeinsamen Loch miteinander fein eingestellt werden. Danach wird die Steuerungswelle **4o1** durch Festanziehen der Mutter **4.4o** gesichert.

Im Sperrzustand **P**_{**0**} (**Fig.** 34, 35a) sind sowohl alle Wellen **4o1, 4o2, 13.o1, 13.o2** mit den Löchern der Kulisse **14o** als auch die Sperrwellen **4o2** mit den zugehörigen Sperrlöchern des Sperrsegmentes **5.1o** in Steckverbindung.

Im Entriegelungszustand **P**_{**1**} (**Fig.** 35b) sind alle Wellen **4o1, 4o2, 13.o1, 13.o2** ausschließlich mit den Löchern der Kulisse **14o** in Steckverbindung und sind die Sperrlöcher des Sperrsegmentes **5.1o** durch Herausziehen beider Sperrwellen **4o2** frei. Damit läßt sich der Sitz **3o** samt Sperrvorrichtung **70o** und Kulisse **14o** durch Sitzverstellung in beliebiger Richtung bewegen.

Nach Herausziehen der drei Wellen **4o1, 4o2** aus den Löchern der Kulisse **14o** (**Fig.** 35c) dringen die beiden Wellen **13.o1, 13.o2** gemeinsam unter Vorspannkraft der Blattfeder **13.2o** in die Bohrungen der Kulisse **14o** tiefer ein. Während dessen rastet die Memorywelle **13.o2** in eines der soeben freigewordenen Sperrlöcher des Sperrsegmentes **5.1o** ein. Durch die Sperrung ist die Kulisse **14o** im Memoryzustand **P**_{**2**} nicht mehr bewegbar. Die Kulisse **14o** ist in Ausgangsposition gesichert. Ist die gewünschte Sitzpositionierung bei Sitzverstellung gefunden, greifen die beiden Sperrwellen **4o2** in die zugehörigen Sperrlöcher des Sperrsegmentes **5.1o** im Sperrzustand **P**_{**0h**} oder **P**_{**0v**} ein, wobei sich die Steuerungswelle **4o1** mit bewegt (**Fig.** 33).

Bei der 1. Ausführungsform (**Fig.** 36, 37) findet eine Bodenschiene **5o** mit kürzer Länge Verwendung für Rohr **30.2,** aus dessen Segment **30.3** und einem Paar Platten **30.4** ein Steg **30.1A** mit Höhe "h" durch Senknieten **30.5** gebildet wird. Das Justierwerkzeug **30** setzt sich aus Griff **30.1,** Steg **30.1A** und Rohr **30.2** zusammen. Das Kugellager **1.40a** wird entlang dem Rohr **30.2** bis zur Kante des Griffes **30.1** geschoben. Die Addition des Rohrdurchmessers "d" und Durchmessers "d_{K}" des Kugels **1.46** liefert den Innendurchmesser "D" des Teiles **14.1o1, 1.1o, 1.1b.**

Das Einschieben des Justierwerkzeuges **30** mit Kugellager **1.40a** in die Innenbohrung und zwischen die beiden Schenkel **1SE** des Teiles **14.1o1, 1.1o** und das Einhalten des Spieles "± Δt" zwischen dem offenen Kugelkäfig **1.41a** und dem Segment **30.3** ermöglichen
- das Überprüfen des Teiles **14.1o1, 1.1o** nach zulässigem Innendurchmesser "D ± ΔD" und zulässiger Höhe "h ± Δb"; und/oder
- das Durchstecken der Senknieten **1.42** durch die in radialer Richtung übereinanderliegenden Haltelöcher des offenen Kugelkäfigs **1.41a** und des Teiles **14.1o1, 1.1o.**

Somit kann die Kontrolle und der Zusammenbau in einem einzigen Arbeitsvorgang durchgeführt werden.

In die beiden Schenkel **1SE** mit "h ± Δh" passen die Distanzringe **15** oder die Distanzringe **15o** mit Distanzscheibe **14.8o** hinein.

Bei der 2. Ausführungsform (**Fig.** 38, 39) setzt sich das Justierwerkzeug **31** aus Griff **31.1** und Rohr **31.2** zusammen. Das geschlossene oder offene Kugellager **1.40** oder **1.40a** wird entlang dem Rohr **31.2** des Werkzeuges **31** bis zur Kante des Griffes **31.1** geschoben. Durch Einschieben des Justierwerkzeuges **31** mit Kugellager **1.40a** oder **1.40** in die Innenbohrung des offenen Hauptkulissenteiles **14.1o1** oder geschlossenen Sitzschienenteiles **1.1** und durch Schieben des kantigen Griffes **31.1** in die in radialer Richtung übereinanderliegenden Nuten "c_{S}" und "c_{K}" beider Teile **14.1o1, 1.41a** oder **1.1, 1.41** sind die Teile **14.1o1, 1.1, 15** auf die Verwendbarkeit überprüfbar und/oder sind die Senknieten **1.42** einsteckbar.

## Patentansprüche

1. Längsverstellmechanismus für einen Kraftfahrzeugsitz (3) mit mindestens zwei Schienenpaaren **(1 / 5, 1a / 5a bis 1o / 5o, 2 / 6, 2a / 6a bis 2o / 6o),** deren geschlossenes Profil aufweisende Sitzschienen **(1, 1a bis 1o, 2, 2a bis 2o)** mit einem Sitzrahmen **(3.1, 3.1b, 3.1c, 3.1m, 3.1n, 3.1o)** verbunden sind und deren geschlossenes Profil aufweisende Bodenschienen **(5, 5a bis 5o, 6, 6a bis 60)** mit einem Fahrzeugboden **(26)** verbunden sind, mit einer Sperrvorrichtung **(70, 70a, 70m, 70n)** zu einer Sperrung des Sitzes nach einer Sitzverstellung in einer Längsrichtung oder zu einem Aufheben der Sperrung durch eine Betätigung eines Griffes **(12a bis 12e)** oder durch ein Einschalten eines Motors **(12)**,
**dadurch gekennzeichnet, daß**
a) eines der beiden Schienenpaare **(2 / 6, 2a / 6a bis 2o / 6o)** in einer Längsachse rundes Profil aufweist und
b) das andere Schienenpaar **(1 / 5, 1a / 5a bis 1o / 5o)** in einer anderen Längsachse ein Bestandteil des Längsverstellmechanismus **(80, 80a bis 80c, 80m bis 80o)** ist,
c) an dessen Bodenschiene **(5, 5a, 5m, 5n)** oder an einem Sperrsegment **(5.1b, 5.1c, 5.1i, 5.1j, 5.1k, 5.1l, 5.1l, 5.1o)** dessen runder Bodenschiene **(5b, 5c, 5i, 5j, 5k, 5l, 5l, 5o)**
- eine Vielzahl von geschlossenen Sperrlöchern angeordnet ist oder
- eine Vielzahl von geschlossenen Sperrlöchern **(L**_{**i**}**, L**_{**j**}**, .. , L**_{**y**}**)** und eine Vielzahl von offenen Sperrlöchern **(M**_{**i**}**, M**_{**j**}**, .., M**_{**y**}**)**, die als Memorylöcher vorgesehen sind, in zwei Reihen angeordnet sind,
wobei zu einem Aufrechterhalten der Sperrung und zu einer Minimierung der Beanspruchung der Sperrteile bei einem Unfall
d1) eine als Bodenschiene **(5a)** vorgesehene Gewindespindel, deren Endabschnitte in den Bohrungen eines Paares Bodengehäuse **(7a)** axial und radial gelagert sind, mit einem Innengewinde **(4a)** mindestens einer Sitzschiene **(1a)** der Sperreinrichtung **(70a)** in einem Eingriff ist; oder
d2) mindestens zwei Sperrlöcher mit steifen Sperrelementen **(4, 4b, 4c, 4o2)** der Sperreinrichtung **(70, 70b, 70c, 70o)** in einem Eingriff sind; oder
d3) mindestens ein Sperrloch **(L**_{**k**}**)** mit einem steifen Sperrelement **(4m2, 4n2)** und eines **(M**_{**k**}**)** der Memorylöcher mit einem steifen Sperrelement **(4m1, 4n1),** das als Memoryelement vorgesehen ist, in einem Eingriff ist, wobei die Sperrelemente **(4m1, 4m2, 4n1, 4n2)** Bestandteile der Sperreinrichtung **(70m, 70n)** sind.

2. Memory-Längsverstellmechanismus, dessen mit den Sperrlöchern **(L**_{**i**}**, L**_{**j**}**, .. , L**_{**y**}**)** und mit den Memorylöchern **(M**_{**i**}**, M**_{**j**}**, .. , M**_{**y**}**)** versehene Bodenschiene **(5m, 5n)** formschlüssig von einer Kulisse **(14m, 14n)** umgeben ist,
- die zu einer Markierung einer Ausgangsposition **(P**_{**k**}**)** des Sitzes bei der Sitzverstellung in der Längsrichtung und zu einem Wiederfinden der Ausgangsposition **(P**_{**k**}**)** bei einer Rückpositionierung vorgesehen ist,
- deren ein Paar Gleitbahnen **(42f, 42g)** entlang den korrespondierenden Gleitbahnen **(41f, 41g)** der Bodenschiene **(5m, 5n)** gleitet;
- die durch eine form- und kraftschlüssige Verbindung zweier Kulissenstücke **(14m1, 14m2, 14n1, 14n2)** miteinander gebildet ist;
- in deren Aussparung ein unter Federkraft vorgespanntes Memoryelement **(13m, 13n)** zwecks deren Kopplung mit der Bodenschiene **(5m, 5n)** einschiebbar ist;
- deren Bohrung für eine Führung des Memoryelementes **(4m1, 4n1)** in einer Sperrposition **(P**_{**0**}**)** odei einer Entriegelungsposition **(P**_{**1**}**)** vorgesehen ist; und
- deren Paar Bahnen **(14.2m3, 14.2n3)** für ein Gleiten des Sperrelementes **(4m1, 4n1)** als Memoryelementes vorgesehen ist;
nach Anspruch 1, **dadurch gekennzeichnet, daß** für den Memory-Längsverstellmechanismus **(80m, 80n)** ein Paar Sitzschienen **(1m, 1n)**, die mittels Nieten **(1.20m, 1.20n)** an dem Sitzrahmen **(3.1m, 3.1n)** befestigt sind und dank einem Spiel (c) entlang der Bodenschiene **(5m, 5n)** gleiten, und die Kulisse **(14m, 14n)** vorgesehen ist, die
a) zwischen den beiden Sitzschienen **(1m, 1n)** entlang der Bodenschiene **(5m, 5n)** gleitet und
b) mit mindestens einem Sperrloch versehen ist, das für eine gemeinsame Sperrung mit dem Sperrloch **(L**_{**k**}**)** der Bodenschiene **(5m, 5n)** durch das Sperrelement **(4m2, 4n2)** in der Sperrposition **(P**_{**0**}**)** vorgesehen ist;
c) daß zu einem Aufheben der Sperrung **(P**_{**0**}**)** die Sperrelemente **(4m1, 4m2, 4n1, 4n2)** aus einem Sperrloch und Memoryloch einer außenliegenden Seitenwand **(4.4m1, 4.4n1)** der Sperrvorrichtung **(70m, 70n),** dem Sperrloch **(L**_{**k**}**)** und Memoryloch **(M**_{**k**}**)** der Bodenschiene **(5m, 5n)** und dem Sperrloch der Kulisse **(14m, 14n)** bis zur Entriegelungsposition **(P**_{**1**}**)** herausgezogen sind und anschließend bei der Sitzverstellung der Sitz mit der Kulisse **(14m, 14n)** und den Sperrelementen **(4m1, 4m2, 4n1, 4n2)** entlang der Bodenschiene **(5m, 5n)** bis zu einer gewünschten Sitzposition gleitet und durch ein Einrasten der Sperrelemente **(4m1, 4m2, 4n1, 4n2)** in ein anderes Sperrloch, ein anderes Memoryloch der Bodenschiene **(5m, 5n),** dieselben Sperrlöcher der Kulisse **(14m, 14n)** sowie dieselben Löcher der Seitenwand **(4.4m1, 4.4n1)** gesichert ist; oder
d) daß zu einem Aktivieren des Memories durch ein Herausziehen der Sperrelemente **(4m1, 4m2, 4n1, 4n2)** aus Löchern einer außenliegenden Seitenwand **(4.4m1, 4.4n1)** der Sperrvorrichtung **(70m, 70n),** dem Sperrloch **(L**_{**k**}**),** Memoryloch **(M**_{**k**}**)** der Bodenschiene **(5m, 5n)** und dem Sperrloch sowie der Bohrung der Kulisse **(14m, 14n)** bis zu einer Kopplungsposition **(P**_{**2**}**)** die Kulisse **(14m, 14n)** mit der Bodenschiene **(5m, 5n)** durch das in die Aussparung und das freigewordene Memoryloch **(M**_{**k**}**)** eingerückte Memoryelement **(13m, 13n)** gekoppelt bleibt und der Sitz mit den Speneleinenten **(4m1, 4m2, 4n1, 4n2)** in eine gewünschte Sitzposition verstellt sowie durch ein Einrasten der Sperrelemente **(4m1, 4m2, 4n1, 4n2)** in ein anderes Sperrloch, ein anderes Memoryloch der Bodenschiene **(5m, 5n)** und dieselben Löcher der Seitenwand **(4.4m1, 4.4n1)** gesichert ist;
d1) wobei bei der Rückpositionierung
- das Memoryelement **(4m1, 4n1)** entlang der Bahn **(14.2m3, 14.2n3)** der Kulisse **(14m, 14n)** gleitet und beim Wiederfinden der Ausgangsposition **(P**_{**k**}**)** in die Ausgangsbohrung der Kulisse **(14m, 14n),** das Ausgangsmeinoryloch **(M**_{**k**}**)** der Bodenschiene **(5m, 5n)** und Ausgangsmemoryloch der Seitenwand **(4.4m1, 4.4n1)** einrastet und das Memory deaktiviert;
- während dessen das Sperrelement **(4m2, 4n2)** in das Ausgangssperrloch **(L**_{**k**}**)** der Bodenschiene **(5m, 5n),** das Ausgangssperrloch der Kulisse **(14m, 14n)** und das Ausgangssperrloch der Seitenwand **(4.4m1, 4.4n1)** einrastet.

3. Memory-Längsverstellmechanismus nach Anspruch 1, **dadurch gekennzeichnet, daß** für den Memory-Längsverstellmechanismus **(80o)** ein Paar Sitzschienen **(1o)**, die durch ein Verbindungsstück **(3.10o)** des Sitzrahmens **(3.1o)** miteinander verbunden sind und entlang der Bodenschiene **(5o)** und dem Sperrsegment **(5.1o)** gleiten, und eine Kulisse **(14o)** vorgesehen ist,
a) die zwischen den beiden Sitzschienen **(1o)** dank einem Spiel (g) zu dem Verbindungsstück **(3.10o)** frei bewegbar ist und entlang der Bodenschiene **(5o)** gleitet;
b) von der die Bodenschiene **(5o)** mit dem Sperrsegment **(5.1o)** formschlüssig umgeben ist, dessen Sperrlöcher auch als Memorylöcher verwendbar sind;
c) die mit drei Kulissenlöchern versehen ist und eine Kulissenschiene **(14.1o)**, ein Führungsstück **(13.1o)**, Kulissenstück **(14.2o)**, einen Halter **(4.3o)** und Block **(13.4o)** umfaßt, wobei
- der Block **(13.4o)** mit einem Steuerungselement **(13.o1)**, Memoryelement **(13.o2)** und einer Feder **(13.2o)** versehen ist;
- die beiden, durch die Feder **(13.2o)** vorgespannten Elemente **(13.o1, 13.o2)** von Löchern des Führungsstückes **(13.1o)** geführt sind,
- das Kulissenstück **(14.2o)** mit zwei Löchern und einem Paar Bahnen **(14.2o3)** für ein Gleiten mindestens eines Sperrelementes **(4o2)** versehen sind und
- der Halter **(4.3o)** mit den Sperrelementen **(4o2)** und einem höhenverstellbaren, verschraubbaren Steuerungselement **(4o1)** versehen ist,
wobei
d1) das erste Loch der Kulissenschiene **(14.1o),** des Führungsstückes **(13.1o)** und Kulissenstückes **(14.2o)** für eine Führung des federbelasteten Memoryelementes **(13.o2)** und des 1. Sperrelementes **(4o2)** in einer Sperrposition **(P**_{**0**}**)** oder Entriegelungsposition **(P**_{**1**}**)** oder für eine Kopplung der Kulisse **(14o)** mit der Bodenschiene **(5o)** durch ein Einschieben des Memoryelementes **(13.o2)** in eines der Sperrlöcher der Bodenschiene **(5o)** in einer Kopplungsposition **(P**_{**2**}**)** vorgesehen ist;
d2) das zweite Loch der Kulissenschiene **(14.1o)** und des Führungsstückes **(13.1o)** für eine Führung des federbelasteten Steuerungselemeutes **(13.o1)** und des höhenverstellbaren Steuerungselementes **(4o1)** vorgesehen ist, dessen Stirnfläche gegen die Stirnfläche des federbelasteten Steuerungselementes **(13.o1)** drückt und durch eine Einstellung des Steuerungselementes **(4o1)** eine Höhendifferenz (ΔH) zwischen dem 1. Sperrelement **(4o2)** und dem Memoryelement **(13.o2)** bestimmt ist; und
d3) das dritte Loch der Kulissenschiene **(14.1o)** und das zweite Loch des Kulissenstückes **(14.2o)** für eine Führung des 2. Sperrelementes **(4o2)** in der Sperrposition **(P**_{**0**}**)** oder Entriegelungsposition **(P**_{**1**}**)** vorgesehen sind;
e) daß zu einem Aufheben der Sperrung **(P**_{**0**}**)** das Steuerungselement **(4o1)** und die beiden Sperrelemente **(4o2)** aus den drei Kulissenlöchern und den beiden Sperriöchern der Bodenschiene **(5o)** bis zur Entriegelungsposition **(P**_{**1**}**)** herausgezogen sind und anschließend bei einer Sitzverstellung der Sitz mit der Kulisse **(14o)** und allen fünf Elementen **(4o1, 4o2, 13.o1, 13.o2)** entlang der Bodenschiene **(5o)** bis zu einer gewünschten Sitzposition gleitet und durch ein Einrasten der Sperrelemente **(4o2)** in die anderen Sperrlöcher der Bodenschiene **(5o)** gesichert ist; oder
f) daß zu einem Aktivieren des Memories durch ein Herausziehen beider Sperrelemente **(4o2)** und des Steuerungselementes **(4o1)** aus den Kulissenlöchern bis zu einer Kopplungsposition **(P**_{**2**}**)** die Kulisse **(14o)** mit der Bodenschiene **(5o)** durch das in das freigewordene Memoryloch der Bodenschiene **(5o)** eingerückte Memoryelement **(13.o2)** gekoppelt bleibt und der Sitz mit den beiden Sperrelementen **(4o2)** und dem Steuerungselement **(4o1)** in eine gewünschte Sitzposition verstellt sowie durch ein Einrasten der Sperrelemente **(4o2)** in die anderen Sperrlöcher der Bodenschiene **(5o)** gesichert ist;
fl) wobei bei einer Rückpositionierung
- mindestes eines der Sperrelemente **(4o2)** entlang der Balm **(14.2o3)** der Kulisse **(14o)** gleitet und bei einem Wiederfinden der Ausgangsposition die Sperrelemente **(4o2)** und das Steuetungselement **(4o1)** in die drei Ausgaugskulissenlöcher einrasten;
- während dessen das Steuerungselement **(4o1)** das mit dem Memoryelement **(13.o2)** verbundene Steuerungselement **(13.o1)** von der Kopplungsposition **(P**_{**2**}**)** in die Sperrposition **(P**_{**0**}**)** herunterdrückt und das Memory deaktiviert.

4. Längsverstellmechanismus nach einem der Ansprüche 1 bis 3, **dadurch gekennzeichnet, daß** der Kraftfahrzeugsitz (3) mit
a) dem Längsverstellmechanismus **(80a)** in einer Längsachse und
b) dem Längsverstellmechanismus **(80, 80b bis 80c, 80m bis 80o)** oder dem Memory-Längsverstellmechanismus **(80m bis 80o)** in der anderen Längsachse
ausgerüstet ist.

5. Längsverstellmechanismus nach mindestens einem der Ansprüche 1 bis 4, **dadurch gekennzeichnet, daß** ein Positionierungspaar **(40, 40a bis 40g)**
- eine Längsnut **(42)** der Bodenschiene **(5, 5b, 5d, 5f, 5i, 5o)** und eine Längsfeder **(41)** eines Bodengehäuses **(7, 7b, 7d, 7f, 7i, 7o);** oder
- eine Längsnut **(42a),** die am Endabschnitt der Bodenschiene **(5)** angeordnet ist, und eine Längsfeder **(41a)** eines Bodengehäuses **(7);** oder
- zwei gegenüberliegende Längsnuten **(42b1, 42b2, 42c1, 42c2)** der Bodenschiene **(5, 5c)** und eines Bodengehäuses **(7, 7c)** und eine Feder **(41b, 41c),** die in einen aus den gegenüberliegenden Längsnuten **(42b1, 42b2, 42c1, 42c2)** gebildeten Raum eingeschoben ist; oder
- eine selbstzentrierende, konusförmige Hülse **(41d)** und eine Schraube **(7.2),** die durch die Hülse **(41d)**, eine Bohrung eines Bodengehäuses **(7)** und eine Unterlegscheibe **(7.4)** durchgesteckt und mit einer Mutter **(7.3)** verschraubt ist; oder
- einen aus mehreren Unterlegscheiben **(41e1, 41e2)** zusammengestellten Distanzring **(41e)** und zwei Schenkel eines Bodengehäuses **(7c),** worin das Sperrsegment **(5.1c)** mit einer Toleranz (T₁) angeordnet ist; oder
- zwei gegenüberliegende Gleitbahnpaare **(42f / 41f, 42g / 41g)** eines Bodengehäuses **(7m, 7n)** und der Bodenschiene **(5m, 5n)**
umfaßt.

6. Längsverstellmechanismus nach Anspruch 5, **dadurch gekennzeichnet, daß** der Kraftfahrzeugsitz **(3)** mit dem Längsverstellmechanismus **(80, 80a bis 80c, 80m bis 80o)** oder dem Memory-Längsverstellmechanismus **(80m bis 80o)** mittels eines Paares Montagehalter **(11a bis 11o),** die mit dem Paar Bodengehäusen **(7, 7a bis 7o)** der Bodenschiene **(5, 5a bis 5o)** und mit dem Paar Bodengehäusen **(8, 8a bis 8o)** der Bodenschiene **(6, 6a bis 6o)** form- und/oder kraftschlüssig verbunden sind, vorgefertigt ist.

7. Längsverstellmechanismus nach Anspruch 6, **dadurch gekennzeichnet, daß** der Montagehalter **(11a bis 11o)** folgende Teile aufweist:
- ein Paar steckbare Schenkel **(11.1b, 11.1c, 11.1e, 11.1g)**, die mit zwei Aussparungen der beiden Bodengehäuse **(7b / 8b, 7c / 8c, 7e / 8e, 7g / 8g)** in einer Steckverbindung sind und mittels Verbindungselementen **(7.4b / 8.4b, 11.5c, 7.4e / 8.4e, 7.6g / 8.6g)** kraftschlüssig verbunden sind; oder
- ein Paar steckbare U-förmige Schenkel **(11.1d, 11.1o)**, die mit zwei Paaren Aussparungen der beiden Bodengehäuse **(7d / 8d, 7o / 8o)** in einer Steckverbindung sind; oder
- eine Welle **(11f),** die durch die beiden Bodengehäuse **(7f / 8f)** und ein Paar Abstandhalter **(11.2f),** durch deren Löcher und durch eines (Lₗ) der Lochpaare (Lₗ bis Lₙ) der Welle **(11f)** ein Paar Ösen **(11.3f)** durchgesteckt ist, durchgesteckt ist und deren Endabschnitte mit Muttern **(11.1f)** verschraubt sind; oder
- ein Paar Schenkel **(11.1h),** deren Halbkreise mit zwei Aussparungen der Bodengehäuse **(7d / 8d)** formschlüssig verbunden sind und die mit den Bodengehäusen **(7d / 8d)** mittels Verbindungselementen **(7.4h, 8.4h)** kraftschlüssig verbunden sind; oder
- mindestens ein Verbindungselement **(11.1i, 11.2i),** das die beiden Bodengehäuse **(7i, 8i)** miteinander kraftschlüssig verbindet; oder
- ein Paar Schenkel **(11.1m, 11.1n)**, deren Gleitbahnen **(43f, 43g)** mit den Gleitbahnen **(42f, 42g)** der Bodengehäuse **(7m / 8m, 7n / 8n)** formschlüssig verbunden sind und die mit den Bodengehäusen **(7m / 8m, 7n / 8n)** mittels Verbindungselementen **(7.4m, 7.4n)** kraftschlüssig verbunden sind.

8. Längsverstellmechanismus nach mindestens einem der Ansprüche 1 bis 4, **dadurch gekennzeichnet, daß** im Sperrzustand mehrere Sperrelemente **(4, 4b, 4c, 4m2, 4n2, 4o2)** mit den zugehörigen Sperrlöchern in einer Steckverbindung sind, wobei mindestens ein Sperrloch zwischen jeweils zwei durch die Sperrelemente **(4, 4b, 4c, 4m2, 4n2, 4o2)** belegten Speniöcher nicht belegbar ist

9. Längsverstellmechanismus nach Anspruch 1 oder 4, **dadurch gekennzeichnet, daß** die Sitzschiene **(1)** mit mindestens einem geschlossenen Kugellager **(1.40),** an dessen Kugelkäfig **(1.41)** und an der Sitzschiene **(1)** eine Vielzahl von gemeinsamen Sperrlöchern ein- oder beidseitig angeordnet ist, versehen ist.

10. Längsverstellmechanismus nach Anspruch 9, dadurch gekeimzeichnet, daß ein Halteloch für eine Senkniete **(1.42x)** zwischen zwei Sperrlöchern des Kugelkäfiges **(1.41)** angeordnet ist.

11. Längsverstellmechanismus nach mindestens einem der Ansprüche 1, 3 und 4, **dadurch gekennzeichnet, daß** die Sitzschiene **(1b, 1c, 1o)** und die Kulisse **(14o)** mit mindestens einem offenen Kugellager **(1.40a)** versehen ist.

12. Längsverstellmechanismus nach Anspruch 11, **dadurch gekennzeichnet, daß** ein offener Käfigring **(1.41a)** des Kugellagers **(1.40a)** Haltelöcher und kugelförmige Aussparungen zur Halterung der Kugeln **(1.46)** aufweist.

13. Längsverstellmechanismus nach Ansprüchen 11 und 12, **dadurch gekennzeichnet, daß** der Käfigring **(1.41a)** und ein Sitzschienen- oder Hauptkulissenteil **(1.1b, 1.1c, 1.1o, 14.1o1)** korrespondierende Haltelöcher für Sicherungsteile **(1.42, 1.42a)** in radialer Richtung aufweist.

14. Längsverstellmechanismus nach mindestens einem der Ansprüche 1, 4 und 11 bis 13, **dadurch gekennzeichnet, daß** das offene Sitzschienenteil **(1.1c)** von mindestens einem Paar unsymmetrischen, geteilten Verstärkungsschienen **(1.2c1, 1.2c2)** formschlüssig umgeben ist, wobei aus einer kraftschlüssigen Verbindung des Sitzschienenteiles **(1.1c)** mit den Verstärkungsschienen **(1.2c1, 1.2c2)** die geschlossene Sitzschiene **(1c)** gebildet ist.

15. Läugsverstellmechanismus nach mindestens einem der Ansprüche 1, 4 und 11 bis 13, **dadurch gekennzeichnet, daß** ein bzw. das offene Sitzschienenteil **(1.1b)** mit einem Paar Schenkeln **(1SE),** in denen Distanzringe **(15)** angeordnet sind, von mindestens einem Paar symmetrischen, geteilten Verstärkungsschienen **(1.2b)** formschlüssig umgeben ist, wobei aus einer kraftschlüssigen Verbindung der Verstärkungsschienen **(1.2b)** mit den Distanzringen **(15)** und dem Sitzschienenteil **(1.1b)** die geschlossene Sitzschiene **(1b)** gebildet ist.

16. Längsverstellmechanismus nach mindestens einem der Ansprüche 3, 4 und 11 bis 13, **dadurch gekennzeichnet, daß** das offene Sitzschienen- oder Hauptkulissenteil **(1.1o, 14.1o1)** mit einem Paar Schenkeln **(1SE),** in denen Distanzringe **(15o)** und eine Distanzscheibe **(14.8o)** angeordnet sind, von mindestens einem Paar symmetrischen, geteilten Verstärkungsschienen **(1.2o, 14.1o2)** formschlüssig umgeben ist, wobei aus einer kraftschlüssigen Verbindung des Sitzschienen- oder Hauptkulissenteiles **(1.1o, 14.1o1)** mit den Distanzringen **(15o),** der Distanzscheibe **(14.8o)** und den Verstärkungsschienen **(1.2o, 14.1o2)** die geschlossene Sitzschiene **(1o)** oder die geschlossene Kulissenschiene **(14.1o)** gebildet ist.

17. Längsverstellmechanismus nach mindestens einem der Ansprüche 14 bis 16, **dadurch gekennzeichnet, daß** die Sitzschiene **(1b, 1o)** und die Kulissenschiene **(14.1o)** mit einem Schutzdeckel **(16b, 16.1o, 16.2o)** versehen sind.

18. Längsverstellmechanismus nach Anspruch 16 oder 17, **dadurch gekennzeichnet, daß** das Paar Sitzschienen **(1o)** mit dem Verbindungsstück **(3.10o)**, das mit runden Enden **(1.1o2)** der Sitzschienenteile **(1.1o)** in einer Steckverbindung ist, mittels Verbindungselementen **(1.10o)** kraftschlüssig verbunden ist.

19. Längsverstellmechanismus nach Anspruch 18, **dadurch gekennzeichnet, daß** eine umschlossene Ablage für Gegenstände **(75, 76)** aus dem Verbindungsstück **(3.10o)** und einem Paar Endstücken **(3.11o),** die an den Enden des Verbindungsstückes **(3.10o)** angebracht sind, gebildet ist.

20. Längsverstellmechanismus nach Anspruch 1 oder 4, **dadurch gekennzeichnet, daß** ein Kegelrad **(17.2)** mit einem Endabschnitt der Bodenschiene **(5a)** mittels einer Viereck-Form **(5.4a)** formschlüssig und mittels einer Mutter **(5.5a)** und Unterlegscheibe **(5.2a)** kraftschlüssig verbunden ist, wobei ein Kegelradgetriebe **(17)** aus dem Kegelrad **(17.2)** und einem anderen Kegelrad **(17.1)** gebildet ist, das mit dem Handrad **(12e)** verbunden ist.

21. Längsverstellmechanismus nach mindestens einem der Ansprüche 2 bis 4, **dadurch gekennzeichnet, daß** das Paar Bahnen **(14.2m3, 14.2n3, 14.2o3)** des Kulissenstückes **(14.2m, 14.2n, 14.2o)** ein Paar ansteigende Bahnabschnitte (B1), ein Paar gerade verlaufende Bahnabschnitte (B2) und einen Bahnabschnitt (B3) mit einer trapezförmigen Grube (V3) umfaßt, wobei bei der Rückpositionierung
- das Sperrelement **(4m1, 4n1)** in die Grube (V3) absinkt und in die Bohrung des Kulissenstückes **(14.2m, 14.2n)** einrastet oder
- die Sperrelemente **(4o2)** in die Grube (V3) absinken und in die Sperrlöcher des Kulissenstückes **(14.2o)** einrasten.

22. Längsverstellmechanismus nach mindestens einem der Ansprüche 2 bis 4, **dadurch gekennzeichnet, daß** das Kulissenstück **(14.2m, 14.2n, 14.2o)** mit einer einzigen Bahn **(14.2m3, 14.2n3, 14.2o3)**, die einen ansteigenden Bahnabschnitt (B1), einen gerade verlaufenden Bahnabschnitt (B2) und einen Bahnabschnitt (B3) mit einer trapezförmigen Grube (V3) umfaßt, und mit einer Anschlagwand **(14.5m, 14.5n)** versehen, wobei bei der Rückpositionierung
- das Sperrelement **(4m1, 4n1)** in die Grube (V3) absinkt und in die Bohrung des Kulissenstückes **(14.2m, 14.2n)** einrastet oder
- die Sperrelemente **(4o2)** in die Grube (V3) absinken und in die Sperrlöcher des Kulissenstückes **(14.2o)** einrasten.

23. Längsverstellmechanismus nach mindestens einem der Ansprüche 16, 21 und 22, **dadurch gekennzeichnet, daß** in den oberen Abschnitt der Kulissenschiene **(14.1o**) das Kulissenstück **(14.2o)** mit Noppen **(14.2o1)** bis zu einer Anschlagkante **(14.1o2k)** des Kulissenteiles **(14.1o2)** eingeschoben ist, wobei die Noppen **(14.2o1)** in Löcher des Kulissenteiles **(14.1o2)** einrasten.

24. Längsverstellmechanismus nach mindestens einem der Ansprüche 1, 4 bis 6, **dadurch gekennzeichnet, daß** die Bodenschiene **(5c)** mit dem Sperrsegment **(5.1c)** einstückig ausgebildet ist.

25. Längsverstellmechanismus nach mindestens einem der Ansprüche 1, 3 bis 6, **dadurch gekennzeichnet, daß** das Sperrsegment **(5.1b, 5.1i-5.1l, 5.1l, 5.1o)** mit der Bodenschiene **(5b, 5i-5l, 5l, 5o)** form- und/oder kraftschlüssig verbunden ist.

26. Längsverstellmechanismus nach Anspruch 25, **dadurch gekennzeichnet, daß** das Sperrsegment **(5.1b)** in die aus Innenrippen **(5.11b, 5.12b)** gebildete, T-förmige Längshaltenut **(42)** eingeschoben ist und mit der Bodenschiene **(5b)** mittels Nieten **(5.8b)** kraftschlüssig verbunden ist.

27. Längsverstellmechanismus nach Anspruch 25, **dadurch gekennzeichnet, daß** die Sperrlöcher des Sperrsegmentes **(5.1j, 5.1k, 5.1l)**, dessen Profil flach ist, durch ein Stanzen hergestellt sind.

28. Längsverstellmechanismus nach Anspruch 25, **dadurch gekennzeichnet, daß** Haltezähne **(5.1l1, 5.1l2)** eines Sperrteiles **(5.1la, 5.1oa),** dessen Profil flach ist, durch ein Stanzen hergestellt sind und aus dem Sperrteil **(5.1la, 5.1oa)** und mindestens einem Paar Scheiben **(5.1lb)** das Sperrsegment **(5.1l, 5.1o),** dessen Sperrlöcher durch ein Stanzen herstellbar sind, gebildet ist.

29. Längsverstellmechanismus nach Anspruch 25, **dadurch gekennzeichnet, daß** Haltezähne **(5.1l1, 5.1l2)** eines Sperrteiles **(5.1la, 5.1oa),** dessen Profil flach ist, und die Sperrlöcher des Sperrteiles **(5.1la, 5.1oa)** und der Scheiben **(5.1lb)** durch ein Stanzen hergestellt sind, wobei das Sperrsegment **(5.1l, 5.1o)** durch eine kraftschlüssige Verbindung der Teile **(5.1la, 5.1oa, 5.1lb)**, deren Sperrlöcher von einer Führungswelle **(5.5l)** geführt sind, gebildet ist.

30. Längsverstellmechanismus nach Anspruch 25 oder 27, **dadurch gekennzeichnet, daß** ein Paar Innenrippen **(5.12i-5.12l, 5.12l, 5.12o)** der Bodenschiene **(5i-5l, 5l, 5o)** fiir eine Verstärkung der Bodenschiene **(5i-5l, 5l, 5o)** und für eine Führung eines Stanzwerkzeuges vorgesehen ist.

31. Längsverstellmechanismus nach Anspruch 30, **dadurch gekennzeichnet, daß** Haltelöcher **(5.4i-5.4l, 5.4l, 5.4o)** an einer Innenrippe **(5.11i-5.11l, 5.11l, 5.11o)** der Bodenschiene **(5i-5l, 5l, 5o)** durch ein Stanzen hergestellt sind.

32. Längsverstellmechanismus nach Ansprüchen 30 und 31, **dadurch gekennzeichnet, daß** in eine aus den Innenrippen **(5.11i, 5.12i)** der Bodenschiene **(5i)** gebildete, T-förmige Längshaltenut das Sperrsegment **(5.1i)** in einer Längsrichtung eingesteckt ist, dessen Haltezähne **(5.1i1)** in die zugehörigen Haltelöcher **(5.4i)** quer eingeschoben sind, woraus ein Paar Zwischenräume in der Längsrichtung gebildet ist, worin ein Paar Halteelemente **(5.i1)** eingesteckt ist.

33. Längsverstellmechanismus nach Anspruch 32, **dadurch gekennzeichnet, daß** Oberflächen der bei dem Einstecken in einer Berührung gekommenen Teile **(5.1i, 5.i1)** Rillen **(5.LR)** aufweisen.

34. Längsverstellmechanismus nach mindestens einem der Ansprüche 27, 30 und 31, **dadurch gekennzeichnet, daß** in einen aus den Innenrippen **(5.11j, 5.12j, 5.11k, 5.12k)** der Bodenschiene **(5j, 5k)** gebildeten Raum das Sperrsegment **(5.1j, 5.1k)** quer eingeschoben ist, bis die Haltezähne **(5.1j1, 5.1k1)** aus den zugehörigen Haltelöchern **(5.4j, 5.4k)** herausragen, woraus ein Zwischenraum in einer Längsrichtung gebildet ist, worin ein Halteelement **(5.j1, 5.k1-5.k3)** eingesteckt ist und
- mit runden Köpfen **(5.1jk)** der Haltezähne **(5.1j1)** oder
- mit dem Sperrsegment **(5.1k)** und einer der beiden Innenrippen **(5.12k)** formschlüssig verbunden ist.

35. Längsverstellmechanismus nach mindestens einem der Ansprüche 27 bis 31, **dadurch gekennzeichnet, daß** in einen aus den Innenrippen **(5.11l, 5.12l, 5.11l, 5.12l)** der Bodenschiene **(5l, 5o, 5l)** gebildeten Raum das Sperrsegment **(5.1l, 5.1l, 5.1o)** quer eingeschoben ist,
- bis die trapezförmigen Haltezähne **(5.1l2, 5.1l2)** in die zugehörigen Haltelöcher **(5.4l, 5.4l, 5.4o)** einrasten, wobei während der Verformung sich die paarweise verformbaren Enden **(5.1lh, 5.1lh)** der Haltezähne **(5.1l2, 5.1l2)** zuerst verkleinern und anschließend an den Oberflächen der Innenrippe **(5.11l, 5.11l)** spreizen; oder
- bis die rechteckigen Haltezähne **(5.1l1)** aus den zugehörigen Haltelöchern **(5.4l, 5.4o)** herausragen, wobei das Sperrsegment **(5.1l, 5.1o)** mit der Bodenschiene **(5l, 5o)** mittels Nieten **(5.8l)** kraftschlüssig verbunden ist.

36. Längsverstellmechanismus nach mindestens einem der Ansprüche 27 bis 35, **dadurch gekennzeichnet, daß** das Sperrsegment **(5.1i-5.1l, 5.1l, 5.1o)** eine Anzahl von Haltezähnen "h" und die Bodenschiene **(5i-5l, 5l, 5o)** eine Anzahl von Haltelöchern "k" aufweist, wobei "k ≥ h" ist und alle Haltezähne "h" mit den zugehörigen Haltelöchern in einer der "k-h+l" Positionen in einer Steckverbindung sind.

37. Längsverstellmechanismus nach mindestens einem der Ansprüche 1, 2 und 4, **dadurch gekennzeichnet, daß** aus einem Kulissenstück **(14.1m, 14.1n)** mit einer passenden Länge die Sitzschiene **(1m, 1n)** angefertigt ist, welche am Sitzrahmen **(3.1m, 3.1n)** mittels Nieten **(1.22m, 1.22n)** und Hülsen **(1.23m, 1.23n)** befestigt ist.

38. Längsverstellmechanismus nach mindestens einem der Ansprüche 2, 4 bis 7, **dadurch gekennzeichnet, daß** ein Innenprofil des Bodengehäuses **(7m)** und ein Außenprofil des Kulissenstückes **(14.1m)** zueinander passen.

39. Längsverstellmechanismus nach mindestens einem der Ansprüche 2, 4 bis 7, **dadurch gekennzeichnet, daß** ein Kulissenstück **(14.1n)** mit entsprechender Länge fiir ein Bodengehäusenteil **(7.n2)** verwendbar ist, das zur Bildung des Bodengehäuses **(7n)** mit einem Bodengehäusenteil **(7.n1)** formschlüssig und mittels Verbindungselementen **(7.3n, 14.7n)** kraftschlüssig verbunden ist.

40. Läugsverstellmechanismus nach mindestens einem der Ansprüche 37 bis 39, **dadurch gekennzeichnet, daß** die Gleitbahn **(41f, 41g)** der Bodenschiene **(5m, 5n),** die Gleitbahn **(42f, 42g)** des Kulissenstückes **(14.1m, 14.1n)**, des Bodengehäuses **(7m, 7n)** und der Sitzschiene **(1m, 1n)** halbkreis- oder V-förmig ausgebildet ist.

41. Längsverstellmechanismus nach Anspruch 2 oder 4, **dadurch gekennzeichnet, daß** das Einschieben des Memoryelementes **(13n)** in die Aussparung der Kulisse **(14n)** durch eine Berührung der Kante mit einer Anschlagkante **(14.2n6)** begrenzt ist.

42. Längsverstellmechanismus nach Anspruch 3 oder 4, **dadurch gekennzeichnet, daß** von einer in den Block **(13.4o)** eingesteckten, geräuschdämpfenden Hülse **(13.7o)** die Blattfeder **(13.2o)** geführt ist, deren Endabschnitt zwischen zwei große Unterlegscheiben **(13.3o)** eingelegt ist, durch einen Stift **(13.5o)** fixiert ist und an der Kulissenschiene **(14.1o)** mittels eines Verbindungselementes **(1.9o)** befestigt ist.

43. Längsverstellmechanismus nach Anspruch 42, **dadurch gekennzeichnet, daß** die Bewegung des Blockes **(13.4o)** durch einen Stift **(13.11o),** der durch einen aus der Hülse **(13.7o)** herausragenden Endabschnitt der Blattfeder **(13.2o)** durchgesteckt ist, begrenzt ist.

44. Längsverstellmechanismus nach Anspruch 42 oder 43, **dadurch gekennzeichnet, daß** der Block **(13.4o)** mit der Hülse **(13.7o)** aus einem geräuschdämpfenden Stück hergestellt ist.

45. Längsverstellmechanismus nach mindestens einem der Ansprüche 1 bis 4, 16, 25 bis 36, **dadurch gekennzeichnet, daß** das Sperrsegment **(5.1b, 5.1i-5.1l, 5.1l, 5.1o)**, die Distanzscheibe **(14.8o)** oder das Kulissenstück **(14.2m, 14.2n, 14.2o)** aus einem geräuschdämpfenden Material hergestellt ist.

46. Längsverstellmechanismus nach mindestens einem der Ansprüche 1, 3 und 4, **dadurch gekennzeichnet, daß** ein Justierwerkzeug **(30)** einen Griff **(30.1)**, ein Rohr **(30.2)** mit einem Durchmesser "d" und einen Steg **(30.1A)** mit einer Höhe "h" umfaßt, der aus einem Segment **(30.3)** und einem Paar Platten **(30.4)** mittels Senknieten **(30.5)** gebildet ist.

47. Längsverstellmechanismus nach mindestens einem der Ansprüche 11, 13, 16 und 46, **dadurch gekennzeichnet, daß** das offene Kugellager **(1.40a),** dessen Kugel **(1.46)** einen Durchmesser "d_{K}" haben, entlang dem Rohr **(30.2)** bis zur Kante des Griffes **(30.1)** geschoben ist, wobei das Rohr **(30.2)** mit dem Kugellager **(1.40a)** in eine Innenbohrung eines Sitzelementes **(1.1b, 1.1c, 1.1o, 14.1o1),** das entweder das offene Sitzschienenteil **(1.1b, 1.1c, 1.1o)** oder das offene Hauptkulissenteil **(14.1o1)** ist, und der Steg **(30.1A)** zwischen die beiden Schenkel **(1SE)** des Sitzelementes **(1.1b, 1.1c, 1.1o, 14.1o1)** eingeschoben ist und
- ein Innendurchmesser "D" des Sitzelementes **(1.1b, 1.1c, 1.1o, 14.1o1)** und eine Höhe "h" zwischen den Schenkeln **(1SE)** auf zulässige Toleranzen "±ΔD" und "± h" überprüfbar ist; oder
- die Haltelöcher des Kugelkäfigs **(1.41a)** und des Sitzelementes **(1.1b, 1.1c, 1.1o, 14.1o1)** in radialer Richtung übereinanderliegen und durch ein Einstecken der Senknieten **(1.42)** gesichert sind, die von den Verstärkungsschienen **(1.2b, 1.2c1, 1.2c2, 1.2o)** oder von den Kulissenteilen **(14.1o2)** gehalten sind.

48. Längsverstellmechanismus nach mindestens einem der Ansprüche 1, 3 und 4, **dadurch gekennzeichnet, daß** ein Justierwerkzeug **(31)** einen kantigen Griff **(31.1)** und ein Rohr **(31.2)** mit einem Durchmesser "d" umfaßt.

49. Längsverstellmechanismus nach mindestens einem der Ansprüche 9 bis 11, 13, 16 und 48, **dadurch gekennzeichnet, daß** mindestens eine Nut "c_{S}" au einer Stirnseite des geschlossenen oder offenen Käfigringes **(1.41** oder **1.41a)** des Kugellagers **(1.41, 1.40a)** und eine in radialer Richtung korrespondierende Nut "c_{K}" an einer Stirnseite eines Sitzelementes **(1.1, 1.1b, 1.1o, 14.1o1),** das entweder das geschlossene Sitzschienenteil **(1.1)** oder das offene Sitzschienenteil **(1.1b, 1.1o)** oder das offene Hauptkulissenteil **(14.1o1)** ist, angebracht ist, wobei das Kugellager **(1.41, 1.40a),** dessen Kugel **(1.46)** einen Durchmesser "d_{K}" haben, entlang dem Rohr **(31.2)** bis zur Kante des Griffes **(31.1)** geschoben ist, das Rohr **(31.2)** mit dem Kugellager **(1.41, 1.40a)** in eine Innenbohrung des Sitzelementes **(1.1, 1.1b, 1.1o, 14.1o1)** und der kantige Griff **(31.1)** in die beiden Nuten "c_{S}" und "c_{K}" eingeschoben ist und
- ein Innendurchmesser "D" des Sitzelementes **(1.1, 1.1b, 1.1o, 14.1o1)** auf zulässige Toleranzen "± ΔD" überprüfbar ist; und/oder
- die Haltelöcher des Kugelkäfigs **(1.41** oder **1.41a)** und des Sitzelemeates **(1.1, 1.1b, 1.1o, 14.1o1)** in radialer Richtung übereinanderliegen und durch ein Einstecken der Senknieten **(1.42)** gesichert sind, die von den Verstärkungsschienen **(1.2, 1.2b, 1.2o)** oder von den Kulissenteilen **(14.1o2)** gehalten sind.

## Claims

1. A longitudinal adjuster for a motor-vehicle seat **(3)** equipped with
at least one pair of rail assemblies **(1 / 5, 1a / 5a to 1o / 5o, 2 / 6, 2a / 6a to 2o / 6o),** comprising
- seat rails **(1, 1a to 1o, 2, 2a to 2o)** with closed profile, connected to a seat frame **(3.1, 3.1b, 3.1c, 3.1m, 3.1n, 3.1o),** and
- floor rails **(5, 5a to 5o, 6, 6a to 6o)** with closed profile, connected to a vehicle floor **(26),**
- a locking device **(70, 70a, 70m, 70n)** to secure the vehicle seat, after being adjusted in a longitudinal direction, or release the state of lock thereof either by activating a handgrip **(12a to 12e)** or by switching on a motor **(12)**,
**characterized in that**
a) one of both rail assemblies **(2 / 6, 2a / 6a to 2o / 6o)** in a longitudinal axis has round profile and
b) the other rail assembly **(1 / 5, 1a / 5a to 1o / 5o)** in another longitudinal axis is a member of a longitudinal adjuster **(80, 80a to 80c, 80m to 80o),**
c) on the floor rail **(5, 5a, 5m, 5n)** of which or on a locking piece **(5.1b, 5.1c, 5.1i, 5.1j, 5.1k, 5.1l, 5.1l, 5.1o)** of the round floor rail **(5b, 5c, 5i, 5j, 5k, 5l, 5l, 5o)** of which
- a plurality of locking holes with closed profile is arranged or
- a plurality of locking holes **(L**_{**i**}**, L**_{**j**}**, .. , L**_{**y**}**)** with closed profile and a plurality of open-shaped locking holes **(M**_{**i**}**, M**_{**j**}**, .. , M**_{**y**}**),** which, serving as memory holes, are arranged in two rows,
where in order to ensure the slate of lock and minimize stress of locking parts in the event of an accident
d1) a threaded spindle, serving as floor rail **(5a),** end portions of which are axially and radially supported in bores of a pair of floor casings **(7a)**, is in engagement with an inner thread **(4a)** of at least one seat rail **(1a)** of the locking device **(70a);** or
d2) at least two locking holes are in engagement with stiff locking members **(4, 4b, 4c, 4o2)** of the locking device **(70, 70b, 70c, 70o);** or
d3) at least one locking hole **(L**_{**k**}**)** is in engagement with a stifflocking member **(4m2, 4n2)** and one **(M**_{**k**}**)** of the memory holes is in engagement with a stiff locking member **(4m1, 4n1)**, which acts as memory member, where the locking members **(4m1, 4m2, 4n1, 4n2)** are members of the locking device **(70m, 70n).**

2. A memory-longitudinal adjuster, having the floor rail **(5m, 5n)** which, provided with the locking holes **(L**_{**i**}**, L**_{**j**}**, .., L**_{**y**}**)** and the memory holes **(M**_{**i**}**, M**_{**j**}**, .., M**_{**y**}**)**, is form-locking surrounded by a slideable position-marker **(14m, 14n),**
- which serves to mark an original position **(P**_{**k**}**)** of the seat, moved to another position in the longitudinal direction, and find the original position **(P**_{**k**}**)** again when the seat is returned to the original position;
- a pair of slideways **(42f, 42g)** of which is slideable along corresponding slideways **(41f, 41g)** ofthe floor rail **(5m, 5n);**
- which is defined by two position-marker members **(14m1, 14m2, 14n1, 14n2),** form- and force-locking connected to each other;
- which is coupled with the floor rail **(5m, 5n)** when an insertable memory member **(13m, 13n),** biased, is inserted into an aperture of the position-marker **(14m, 14n);**
- a bore of which serves to guide the memory member **(4m1, 4n1)** into a locked position **(P**_{**0**}**)** or a detached position **(P**_{**1**}**);** and
- along a pair of slideways **(14.2m3, 14.2n3)** of which the locking member **(4m1, 4n1),** acting as memory member, slides;
according to claim 1, **characterized in that** the memory-longitudinal adjuster **(80m, 80n)** is equipped with a pair of seat rails **(1m, 1n),** fastened to the seat frame **(3.1m, 3.1n)** by rivets **(1.20m, 1.20n)** and slideable along the floor rail **(5m, 5n)** due to a clearance (c), and with the slideable position-marker **(14m, 14n),**
a) which slides along the floor rail **(5m, 5n)** between both seat rails **(1m, 1n)** and
b) is provided with at least one locking hole, which together with the locking hole **(L**_{**k**}**)** of the floor rail **(5m, 5n)** is in mutual engagement with the locking member **(4m2, 4n2)** in the locked position **(P**_{**0**}**)**;
c) where the state of lock **(P**_{**0**}**)** is released when the locking members **(4m1, 4m2, 4n1, 4n2)** are pulled out of a locking hole and of a memory hole of an external side wall **(4.4m1, 4.4n1)** of the locking device **(70m, 70n),** of the locking hole **(L**_{**k**}**)** and of the memory hole **(M**_{**k**}**)** of the floor rail **(5m, 5n)** and of the locking hole of the slideable position-marker **(14m, 14n)** up to the detached position **(P**_{**1**}**)** and on adjustment of the seat-position the seat together with the slideable position-marker **(14m, 14n)** and the locking members **(4m1, 4m2, 4n1, 4n2)** slides along the floor rail **(5m, 5n)** up to a desired seat-position which is secured by the locking members **(4m1, 4m2, 4n1, 4n2)** projecting into another locking hole, another memory hole of the floor rail **(5m, 5n),** the same locking holes of the slideable position-marker **(14m, 14n)** and in the same holes of the side wall **(4.4m1, 4.4n1);** or
d) where the memory is activated when the locking members **(4m1, 4m2, 4n1, 4n2)** are pulled out of holes of an external side wall **(4.4m1, 4.4n1)** of the locking device **(70m, 70n),** of the locking hole **(L**_{**k**}**),** of the memory hole **(M**_{**k**}**)** of the floor rail **(5m, 5n)** and of the locking hole and of the bore of the slideable position-marker **(14m, 14n)** up to a coupled position **(P**_{**2**}**),** thereby
- preserving the position of the slideable position-marker **(14m, 14n)** which is coupled with the floor rail **(5m, 5n)** when the memory member **(13m, 13n)** projects into the aperture and the memory hole **(M**_{**k**}**),** that is now free, and
- allowing the seat together with the locking members **(4m1, 4m2, 4n1, 4n2)** to move to a desired seat-position which is secured by the locking members **(4m1, 4m2, 4n1, 4n2)** projecting into another locking hole, another memory hole of the floor rail **(5m, 5n)** and in the same holes of the side wall **(4.4m1, 4.4n1);**
d1) where when the seat is returned to the original position
- the memory member **(4m1, 4n1)** slides along the slideway **(14.2m3, 14.2n3)** of the slideable position-marker **(14m, 14n)** until the original position **(P**_{**k**}**)** is found again and, subsequently, projects into the original bore thereof and the original-memory hole **(M**_{**k**}**)** of the floor rail **(5m, 5n)** and in the original-memory hole of the side wall **(4.4m1, 4.4n1)**, thereby clearing the memory;
- during which the locking member **(4m2, 4n2)** projects into the original-locking hole **(L**_{**k**}**)** of the floor rail **(5m, 5n)**, the original-locking hole of the slideable position-marker **(14m, 14n)** and in the original-locking hole of the side wall **(4.4m1, 4.4n1)**.

3. A memory-longitudinal adjuster according to claim 1, **characterized in that** the memory-longitudinal adjuster **(80o)** is equipped with a pair of seat rails **(1o)**, connected to the seat frame **(3.1o)** by a connecting element **(3.10o**) and sliding along the floor rail **(5o)** and the locking piece **(5.1o),** and with a slideable position-marker **(14o)**,
a) which can be moved between both seat rails **(1o)** due to a clearance (g) up to the connecting element **(3.10o)** and slides along the floor rail **(5o)** and;
b) is form-locking surrounded by the floor rail **(5o)** having the locking piece **(5.1o)**;
c) which, provided with locking holes, also acting as memory holes, and three position-marker holes, comprises a position-marker rail **(14.1o)**, a guide piece **(13.1o),** position-marker member **(14.2o),** fixture **(4.3o)** and support member **(13.4o),** where
- the support member **(13.4o)** is provided with a control member **(13.o1),** memory member **(13.o2)** and spring **(13.2o);**
- both moving members **(13.o1, 13.o2),** biased by the spring **(13.2o),** are guided by the holes of the guide piece **(13.1o),**
- the position-marker member **(14.2o)** is provided with two holes and a pair of slideways **(14.2o3)** along which at least one locking member **(4o2)** slides, and
- the fixture **(4.3o)** is provided with the locking members **(4o2)** and a height-adjustable, threaded control member **(4o1),**
where
d1) the first hole of the position-marker rail **(14.1o)**, guide piece **(13.1o)** and position-marker member **(14.2o)** serves to guide the biased memory member **(13.o2)** and the first locking member **(4o2)** in a locked position **(P**_{**0**}**)** or detached position **(P**_{**1**}**)** or to couple the slideable position-marker **(14o)** with the floor rail **(5o)** when the memory member **(13.o2)** is projected into one of the locking holes ofthe floor rail **(5o)** in a coupled position **(P**_{**2**}**);**
d2) the second hole of the position-marker rail **(14.1o)** and guide piece **(13.1o)** serves to guide the biased control member **(13.o1)** and height-adjustable control member **(4o1)**, whose surface is pressed by the surface of the biased control member **(13.o1),** and a height difference (ΔH) between the first locking member **(4o2)** and the memory member **(13.o2)** is determined by adjusting the control member **(4o1);** and
d3) the third hole of the position-marker rail **(14.1o)** and the second hole of the position-marker member **(14.2o)** serve to guide the second locking member **(4o2)** into the locked position **(P**_{**0**}**)** or detached position **(P**_{**1**}**);**
e) where the state of lock **(P**_{**0**}**)** is released when the control member **(4o1)** and both locking members **(4o2)** are pulled out ofthe three position-marker holes and both locking holes of the floor rail **(5o)** up to the detached position **(P**_{**1**}**)** and on adjustment of the seat-position the seat together with the slideable position-marker **(14o)** and all five moving members **(4o1, 4o2, 13.o1, 13.o2)** slides along the floor rail **(5o)** up to a desired seat-position which is secured by the locking members **(4o2)** projecting into the other locking holes of the floor rail **(5o)**; or
f) where the memory is activated when both locking members **(4o2)** and the control member **(4o1)** are pulled out of the position-marker holes up to a coupled position **(P**_{**2**}**),** thereby
- preserving the position of the slideable position-marker **(14o)** which is coupled with the floor rail **(5o)** by the memory member **(13.o2)** projecting into the memory hole, that is now free, and
- allowing the seat with both locking members **(4o2)** and the control member **(4o1)** to move together to a desired seat-position, which is secured by the locking members **(4o2)** projecting into the other locking holes of the floor rail **(5o)**;
f1) where when the seat is returned to the original position
- at least one of the locking members **(4o2)** slides along the slideway **(14.2o3)** of the slideable position-marker **(14o)** until the original position **(P**_{**k**}**)** is found again, the locking members **(4o2)** and the control member **(4o1)** project into three original position-marker holes;
- during which the control member **(4o1)** pushes down the control member **(13.o1)** connected to memory member **(13.o2)**, thereby changing from the coupled position **(P**_{**2**}**)** into the locked position **(P**_{**0**}**)** and clearing the memory.

4. A longitudinal adjuster according to claims 1 to 3, **characterized in that** the seat **(3)** of motor vehicle is equipped with
a) the longitudinal adjuster **(80a)** in one longitudinal axis and
b) the longitudinal adjuster **(80, 80b to 80c, 80m to 80o)** or the memory-longitudinal adjuster **(80m to 80o)** in the other longitudinal axis.

5. A longitudinal adjuster according to at least one of claims 1 up to 4, **characterized in that** a rail-positioning assembly **(40, 40a to 40g)** comprises
- a channel **(42)** ofthe floor rail **(5, 5b, 5d, 5f, 5i, 5o)** and a key **(41)** of a floor casing **(7, 7b, 7d, 7f, 7i, 7o)**; or
- a channel **(42a),** arranged to an end portion of the floor rail **(5)**, and a key **(41a)** of a floor casing **(7)**; or
- two channels **(42b1, 42b2, 42c1, 42c2)** of the floor rail **(5, 5c)** and a floor casing **(7, 7c)** and a key **(41b, 41c)**, protruded into a space defined by both channels **(42b1, 42b2, 42c1, 42c2)** facing each other; or
- an auto-centring, cone-shaped sleeve **(41d)** and a bolt **(7.2)**, which, protruding into the sleeve **(41d),** a bore of flexor casing **(7)** and a washer **(7.4),** is bolted to a nut **(7.3);** or
- a distance piece **(41e),** defined by several washers **(41e1, 41e2),** and two legs of a floor casing **(7c)** in which the locking piece **(5.1c)** with a tolerance (Tₗ) is arranged; or
- two pairs of slideways, facing each other, **(42f / 41f, 42g / 41g)** of a floor casing **(7m, 7n)** and the floor rail **(5m, 5n).**

6. A longitudinal adjuster according to claim 5, **characterized in that** the seat **(3)** of motor vehicle equipped with the longitudinal adjuster **(80, 80a to 80c, 80m to 80o)** or the memory-longitudinal adjuster **(80m to 80o)** is pre-assembled by means of a pair of assembly tools **(11a to 11o)** in form- and/or force-locking connection with the pair of floor casings **(7, 7a to 7o)** of the floor rail **(5, 5a to 5o)** as well as to the pair of floor casings **(8, 8a to 8o)** of the floor rail **(6, 6a to 6o).**

7. A longitudinal adjuster according to claim 6, **characterized in that** the assembly tool **(11a to 11o)** comprises:
- a pair ofinsertable legs **(11.1b, 11.1c, 11.1e, 11.1g),** which, in plug-in connection with two apertures of both floor casings **(7b / 8b, 7c / 8c, 7e / 8e, 7g / 8g),** are force-locking connected thereto by connecting elements **(7.4b / 8.4b, 11.5c, 7.4e / 8.4e, 7.6g / 8.6g)**; or
- a pair of insertable U-shaped legs **(11.1d, 11.1o)** in plug-in connection with two pairs of apertures of both floor casings **(7d / 8d, 7o / 8o);** or
- a shaft **(11f),** whose mid-portion is provided with pairs of holes **(L**_{**l**} to **L**_{**n**}**),** which protrudes through both floor casings **(7f / 8f)** and a pair of spacers **(11.2f)** therebetween,
where a pair of hooks **(11.3f)** is projected through one of the pairs of holes **(L**_{**l**} to **L**_{**n**}**)** and through both spacers **(11.2f)** and, finally, end portions ofthe shaft **(11f)** are bolted to nuts **(11.1f)**; or
- a pair of legs **(11.1h)**, semicircle-shaped portions of which are form-locking connected to two apertures of the floor casings **(7d / 8d)** and which are force-locking connected to the floor casings **(7d / 8d)** by connecting elements **(7.4h, 8.4h);** or
- at least one connecting element **(11.1i, 11.2i)** which force-locking connects both floor casings **(7i, 8i)** to each other; or
- a pair of legs **(11.1m, 11.1n)**, slideways of which **(43f, 43g)** are form-locking connected to the slideways **(42f, 42g)** of the floor casings **(7m / 8m, 7n / 8n)** and which are force-locking connected to the floor casings **(7m / 8m, 7n / 8n)** by connecting elements **(7.4m, 7.4n)**.

8. A longitudinal adjuster according to at least one of claims 1 to 4, **characterized in that** in state of lock several locking members **(4, 4b, 4c, 4m2, 4n2, 4o2)** are in plug-in connection with the respective locking holes, where at least one locking hole remains free between each two locking holes, which are in engagement with the locking members **(4, 4b, 4c, 4m2, 4n2, 4o2).**

9. A longitudinal adjuster according to claim 1 or 4, **characterized in that** the seat rail **(1)** is provided with at least one closed-shaped ball bearing **(1.40)**, on a ball cage **(1.41)** of which and on the seat rail **(1**) a plurality of common locking holes is arranged on one or both sides.

10. A longitudinal adjuster according to claim 9, **characterized in that** a retaining hole for a countersunk head rivet **(1.42x)** is arranged between two locking holes of the ball cage **(1.41)**.

11. A longitudinal adjuster according to at least one of claims 1, 3 and 4, **characterized in that** the seat rail **(1b, 1c, 1o)** and the slideable position-marker **(14o)**, each is provided with at least one open-shaped ball bearing **(1.40a)**.

12. A longitudinal adjuster according to claim 11, **characterized in that** an open-shaped cage ring **(1.41a)** of the ball bearing **(1.40a)** has retaining holes and ball-shaped apertures to retain the balls **(1.46).**

13. A longitudinal adjuster according to claims 11 and 12, **characterized in that** the cage ring **(1.41a)** and a seat rail- or main position-marker member **(1.1b, 1.1c, 1.1o, 14.1o1)** have retaining holes, aligned with each other in radial position, to receive retaining parts **(1.42, 1.42a).**

14. A longitudinal adjuster according to at least one of claims 1, 4 and 11 to 13, **characterized in that** the open-shaped seat-rail member **(1.1c)** is form-locking surrounded by at least one pair of unsymmetrical, separate reinforcing rails **(1.2c1, 1.2c2)**, where the closed-shaped seat rail **(1c)** is defined by a force-locking connection of the seat-rail member **(1.1c)** with the reinforcing rails **(1.2c1, 1.2c2)**.

15. A longitudinal adjuster according to at least one of claims 1, 4 and 11 to 13, **characterized in that** the open-shaped seat-rail member **(1.1b)** with a pair of legs **(1SE),** in which distancing pieces **(15)** are arranged, is form-locking surrounded by at least one pair of symmetrical, separate reinforcing rails **(1.2b)**, where the closed-shaped seat rail **(1b)** is defined by a force-locking connection of the reinforcing rails **(1.2b)** with the distancing pieces **(15)** and the seat-rail member **(1.1b)**.

16. A longitudinal adjuster according to at least one of claims 3, 4 and 11 to 13, **characterized in that** the open-shaped seat rail- or main position-marker member **(1.1o, 14.1o1)** with a pair of legs **(1SE)**, in which distancing pieces **(15o)** and a distancing washer **(14.8o)** are arranged, is form-locking surrounded by at least one pair of symmetrical, separate reinforcing rails **(1.2o, 14.1o2),** where the closed-shaped seat rail **(1o)** or the closed-shaped position-marker rail **(14.1o)** is defined by a force-locking connection of the seat rail- or main position-marker member **(1.1o, 14.1o1)** with the distancing pieces **(15o),** the distancing washer **(14.8o)** and the reinforcing rails **(1.2o, 14.1o2).**

17. A longitudinal adjuster according to at least one of claims 14 to 16, **characterized in that** the seat rail **(1b, 1o)** and the position-marker rail **(14.1o)** are provided with a protective cover **(16b, 16.1o, 16.2o).**

18. A longitudinal adjuster according to claim 16 or 17, **characterized in that** the pair of seat rails **(1o)** is force-locking connected to the connecting element **(3.10o)**, plug-in connected to round end portions **(1.1o2)** of the seat-rail members **(1.1o)**, by connecting elements **(1.10o)**.

19. A longitudinal adjuster according to claim 18, **characterized in that** a surrounding storage place for items **(75, 76)** is defined by the connecting element **(3.10o)** and a pair of side pieces **(3.11o)** attached to end portions thereof.

20. A longitudinal adjuster according to claim 1 or 4, **characterized in that** a bevel wheel **(17.2)** is connected to an end portion of the floor rail **(5a)** form-locking by a rectangular shape **(5.4a)** and force-locking by a nut **(5.5a)** and washer **(5.2a),** where a bevel gear **(17)** is defined by the bevel wheel **(17.2)** and another bevel wheel **(17.1)**, connected to the handwheel **(12e)**.

21. A longitudinal adjuster according to at least one of claims 2 to 4, **characterized in that** the pair of slideways **(14.2m3, 14.2n3, 14.2o3)** of the position-marker member **(14.2m, 14.2n, 14.2o)** comprises a pair of ascending slideway portions (B1), a pair of straight slideway portions (B2) and a slideway potion (B3) with a trapezoid-shaped channel (V3), where when the seat is returned to the original position
- the locking member **(4m1, 4n1)** sinks into the channel (V3) and projects into the bore of the position-marker member **(14.2m, 14.2n)** or
- the locking members **(4o2)**, one of which sinks into the channel (V3), project into the locking holes of the position-marker member **(14.2o)**.

22. A longitudinal adjuster according to at least one of claims 2 to 4, **characterized in that** the position-marker member **(14.2m, 14.2n, 14.2o)** is provided with a single slideway **(14.2m3, 14.2n3, 14.2o3),** which comprises an ascending slideway portion (B1), a straight slideway portion (B2) and a slideway portion (B3) with a trapezoid-shaped channel (V3), and with a stop wall **(14.5m, 14.5n),** where when the seat is returned to the original position
- the locking member **(4m1, 4n1)** sinks into the channel (V3) and projects into the bore of the position-marker member **(14.2m, 14.2n)** or
- the locking members **(4o2),** one of which sinks into the channel (V3), project into the locking holes of the position-marker member **(14.2o).**

23. A longitudinal adjuster according to at least one of claims 16, 21 and 22, **characterized in that** the position-marker member **(14.2o)** with knurls **(14.2o1)** is inserted into the upper portion of the position-marker rail **(14.1o)** up to a stop edge **(14.1o2k)** of the position-marker member **(14.1o2),** where the knurls **(14.2o1)** become engaged with holes of the position-marker member **(14.1o2).**

24. A longitudinal adjuster according to at least one of claims 1, 4 to 6, **characterized in that** the floor rail **(5c)** with the locking piece **(5.1c)** is made of one piece.

25. A longitudinal adjuster according to at least one of claims 1, 3 to 6, **characterized in that** the locking piece **(5.1b, 5.1i to 5.1l, 5.1l, 5.1o)** is form- and/or force-locking connected to the floor rail **(5b, 5i to 5l, 5l, 5o).**

26. A longitudinal adjuster according to claim 25, **characterized in that** the locking piece **(5.1b),** inserted into the T-shaped retaining channel **(42),** defined by internal ribs **(5.11b, 5.12b),** is force-locking connected to the floor rail **(5b)** by rivets **(5.8b).**

27. A longitudinal adjuster according to claim 25, **characterized in that** the locking holes of the locking piece **(5.1j, 5.1k, 5.1l),** which has flat profile, are stamped out.

28. A longitudinal adjuster according to claim 25, **characterized in that** the locking piece **(5.1l, 5.1o),** locking holes of which are stamped out, is defined by at least one pair of plates **(5.1lb)** and a locking part **(5.1la, 5.1oa),** having flat profile, retaining teeth **(5.1l1, 5.1l2)** of which are stamped out.

29. A longitudinal adjuster according to claim 25, **characterized in that** retaining teeth **(5.1l1, 5.1l2)** of a locking part **(5.1la, 5.1oa),** having flat profile, and the locking holes thereof and of the plates **(5.1lb)** are stamped out, where the locking piece **(5.1l, 5.1o)** is defined by a force-locking connection of the parts **(5.1la, 5.1oa, 5.1lb)**, locking holes of all of which are guided by a guide shaft **(5.5l)** which are taken out thereof after the assembly.

30. A longitudinal adjuster according to claim 25 or 27, **characterized in that** a pair of internal ribs **(5.12i to 5.12l, 5.12l, 5.12o)** of the floor rail **(5i to 5l, 5l, 5o)** reinforces the floor rail **(5i to 5l, 5l, 5o)** and guides a stamping tool.

31. A longitudinal adjuster according to claim 30, **characterized in that** retaining holes **(5.4i to 5.4l, 5.4l, 5.4o)** on an internal rib **(5.11i to 5.11l, 5.11l, 5.11o)** of the floor rail **(5i to 5l, 5l, 5o)** are stamped out.

32. A longitudinal adjuster according to claims 30 and 31, **characterized in that** the locking piece **(5.1i)**, inserted into a T-shaped retaining channel, defined by the internal ribs **(5.11i, 5.12i)** of the floor rail **(5i)** in a longitudinal direction, has retaining teeth **(5.1i1)**, which are laterally inserted into the respective retaining holes **(5.4i),** thereby defining a pair of intermediate spaces is defined in the longitudinal direction, in which a pair of retaining elements **(5.i1)** is projected.

33. A longitudinal adjuster according to claim 32, **characterized in that** surfaces of the parts **(5.1i, 5.i1)**, which, when being inserted, come into contact with each other, have riffles **(5.LR).**

34. A longitudinal adjuster according to at least one of claims 27, 30 and 31, **characterized in that** the locking piece **(5.1j, 5.1k)** is laterally inserted into a space, defined by the internal ribs **(5.11j, 5.12j, 5.11k, 5.12k)** of the floor rail **(5j, 5k)**, until the retaining teeth **(5.1j1, 5.1k1)** protrude into the respective retaining holes **(5.4j, 5.4k)**, thereby defining an intermediate space in a longitudinal direction to receive a retaining element **(5.j1, 5.k1 to 5.k3)**, which is form-locking connected
- to round heads **(5.1jk)** of the retaining teeth **(5.1j1)** or
- to the locking piece **(5.1k)** and one of both internal ribs **(5.12k).**

35. A longitudinal adjuster according to at least one of claims 27 to 31, **characterized in that** the locking piece **(5.1l, 5.1l, 5.1o)** is laterally inserted into a space, defined by the internal ribs **(5.11l, 5.12l, 5.11l, 5.12l)** of the floor rail **(5l, 5o, 5l)**
- until the trapezoid-shaped retaining teeth **(5.1l2, 5.1l2)** protrude into the respective retaining holes **(5.4l, 5.4l, 5.4o),** where during the deformation each pair of deformable end portions **(5.1lh, 5.1lh)** of the retaining teeth **(5.1l2, 5.1l2)** at first shrinks and subsequently mushrooms on the surfaces of the internal rib **(5.11l, 5.11l);** or
- until the rectangular retaining teeth **(5.1l1)** protrude into the respective retaining holes **(5.4l, 5.4o)**, where the locking piece **(5.1l, 5.1o)** is force-locking connected to the floor rail **(5l, 5o)** by rivets **(5.8l).**

36. A longitudinal adjuster according to at least one of claims 27 to 35, **characterized in that** the locking piece **(5.1i to 5.1l, 5.1l, 5.1o)** has a number of retaining teeth "h" and the floor rail **(5i to 5l, 5l, 5o)** has a number of retaining holes "k", where "k ≥ h" and all retaining teeth "h" are plug-in connected to the respective retaining holes in one of the "k-h+l" positions.

37. A longitudinal adjuster according to at least one of claims 1, 2 and 4, **characterized in that** a seat rail **(1m, 1n)** with a position-marker member **(14.1m, 14.1n)** with appropriate length is assembled and fastened to the seat frame **(3.1m, 3.1n)** by rivets **(1.22m, 1.22n)** projecting through bushings **(1.23m, 1.23n).**

38. A longitudinal adjuster according to at least one of claims 2, 4 to 7, **characterized in that** an internal profile of the floor casing **(7m)** and an external profile of the position-marker member **(14.1m)** match each other.

39. A longitudinal adjuster according to at least one of claims 2, 4 to 7, **characterized in that** a position-marker member **(14.1n)** with appropriate length can be used as a floor-casing member **(7.n2),** which is connected to a floor-casing member **(7.n1)** form-locking and force-locking by connecting elements **(7.3n, 14.7n)** thus defining the floor casing **(7n).**

40. A longitudinal adjuster according to at least one of claims 37 to 39, **characterized in that** the slideway **(41f, 41g)** of the floor rail **(5m, 5n),** the slideway **(42f, 42g)** of the position-marker member **(14.1m, 14.1n),** of the floor casing **(7m, 7n)** and of the seat rail **(1m, 1n)** are all semicircle- or V-shaped.

41. A longitudinal adjuster according to claim 2 or 4, **characterized in that** the projection of the memory member **(13n)** into the aperture of the slideable position-marker **(14n)** is limited upon contact of the edge with a stop edge **(14.2n6)**.

42. A longitudinal adjuster according to claim 3 or 4, **characterized in that** by means of a soundproofing collar **(13.7o),** inserted into the support member **(13.4o),** the leaf spring **(13.2o)** is guided, the end portion of which, arranged between two large washers **(13.3o),** fixed by a pin **(13.5o),** is fastened to the position-marker rail **(14.1o)** by a connecting element **(1.9o).**

43. A longitudinal adjuster according to claim 42, **characterized in that** the movement of the support member **(13.4o)** is limited by a pin **(13.11o),** projecting into an end portion ofthe leaf spring **(13.2o)** which protrudes through the collar **(13.7o).**

44. A longitudinal adjuster according to claim 42 or 43, **characterized in that** the support member **(13.4o)** with the collar **(13.7o)** is made of one soundproofing piece.

45. A longitudinal adjuster according to at least one of claims 1 to 4, 16, 25 to 36, **characterized in that** the locking piece **(5.1b, 5.1i to 5.1l, 5.1l, 5.1o)**, the distancing washer **(14.8o)** or the position-marker member **(14.2m, 14.2n, 14.2o)** is made of one soundproofing piece.

46. A longitudinal adjuster according to at least one of claims 1, 3 and 4, **characterized in that** a calibrating tool **(30)** comprises a handgrip **(30.1),** a tube **(30.2)** with a diameter "d" and a measuring member **(30.1A)** with a height "h", which is defined by a tongue **(30.3)** and a pair of plates **(30.4)**, all of which are fastened together by countersunk head rivets **(30.5).**

47. A longitudinal adjuster according to at least one of claims 11, 13, 16 and 46, **characterized in that** the open-shaped ball bearing **(1.40a),** whose balls **(1.46)** have a diameter "d_{K}", is moved along the tube **(30.2)** up to the edge of the handgrip **(30.1),** where the tube **(30.2)** with the ball bearing **(1.40a)** is inserted into an inner bore of a seat member **(1.1b, 1.1c, 1.1o, 14.1o1),** which is either the open-shaped seat-rail member **(1.1b, 1.1c, 1.1o)** or the open-shaped main position-marker member **(14.1o1)**, and the measuring member **(30.1A)** is inserted between both legs **(1SE)** of the seat member **(1.1b, 1.1c, 1.1o, 14.1o1)**, thereby
- an inner diameter "D" of the seat member **(1.1b, 1.1c, 1.1o, 14.1o1)** and an height "h" between the legs **(1SE)** are controlled in respect of permissible tolerances "± ΔD" and "± h"; or
- the retaining holes, aligned with each other in radial position, of the ball cages **(1.41a)** and the seat member **(1.1b, 1.1c, 1.1o, 14.1o1)** are secured by the countersunk head rivets **(1.42),** inserted therein, which are retained by the reinforcing rails **(1.2b, 1.2c1, 1.2c2, 1.2o)** or the position-marker members **(14.1o2).**

48. A longitudinal adjuster according to at least one of claims 1, 3 and 4, **characterized in that** a calibrating tool **(31)** comprises a bevelled handgrip **(31.1)** and a tube **(31.2)** with a diameter "d".

49. A longitudinal adjuster according to at least one of claims 9 to 11, 13, 16 and 48, **characterized in that** at least one slot "c_{S}" is arranged on a front face of closed- or open-shaped cage ring **(1.41** or **1.41 a)** of the ball bearings **(1.41, 1.40a)** and the slot "c_{K}", aligning therewith in radial position, is arranged on a front face of a seat member **(1.1, 1.1b, 1.1o, 14.1o1),** which is either the closed-shaped seat-rail member **(1.1)** or the open-shaped seat-rail member **(1.1b, 1.1o)** or the open-shaped main position-marker member **(14.1o1),** where the ball bearing **(1.41, 1.40a),** whose balls **(1.46)** have a diameter "d_{K}", is moved along the tube **(31.2)** up to the edge of the handgrip **(31.1),** the tube **(31.2)** with the ball bearing **(1.41, 1.40a)** is inserted into an inner bore of the seat member **(1.1, 1.1b, 1.1o, 14.1o1)** and an edge of the bevelled handgrip **(31.1)** is inserted into both slots "c_{S}" and "c_{K}", thereby
- an inner diameter "D" of the seat member **(1.1b, 1.1c, 1.1o, 14.1o1)** is controlled in respect of permissible tolerances "± ΔD"; and/or
- the retaining holes, aligned with each other in radial position, ofthe ball cages **(1.41a** or **1.41a)** and the seat member **(1.1, 1.1b, 1.1o, 14.1o1)** are secured by the countersunk head rivets **(1.42),** inserted therein, which are retained by the reinforcing rails **(1.2, 1.2b, 1.2o)** or by the position-marker members **(14.1o2).**

## Revendications

1. Mécanisme de réglage longitudinal pour un siège de véhicule automobile **(3)** comprenant au moins deux paires de glissières **(1 / 5, 1a / 5a à 1o / 5o, 2 / 6, 2a / 6a à 2o / 6o)** dont les glissières de siège à profil fermé **(1, 1a à 1o, 2, 2a à 2o)** sont reliées à un cadre de siège **(3.1, 3.1b, 3.1c, 3.1m, 3.1n, 3.1o)** et dont les glissières de plancher à profil fermé **(5, 5a à 5o, 6, 6a à 6o)** sont reliées au plancher **(26)** dudit véhicule, ledit mécanisme étant muni d'un dispositif de blocage **(70, 70a, 70m, 70n)** afin d'immobiliser ledit siège après l'avoir déplacé dans un sens longitudinal ou afin de déverrouiller ledit siège en actionnant une poignée **(12a à 12e)**, ou bien en connectant un moteur (12), **caractérisé en ce que :**
a) l'une des deux paires de glissières **(2 / 6, 2a / 6a à 2o / 6o)** est munie d'un profil rond sur un axe longitudinal, et :
b) l'autre paire de glissières **(1 / 5, 1a / 5a à 1o / 5o)** fait partie intégrante du mécanisme de réglage longitudinal **(80, 80a à 80c, 80m à 80o)** sur un autre axe longitudinal ;
c) sur sa glissière de plancher **(5, 5a, 5m, 5n)** ou sur son segment de blocage **(5.1b, 5.1c, 5.1i, 5.1j, 5.1k, 5.1l, 5.1l, 5.1o)** de sa glissière de plancher ronde **(5b, 5c, 5i, 5j, 5k, 5l, 5l, 5o) :**
- étant disposée une multitude de trous de blocage fermés ; ou bien :
- étant disposée une multitude de trous de blocage fermés **(L**_{**i**}**, L**_{**j**}**, ... , L**_{**y**}**)** et une multitude de trous de blocage ouverts **(M**_{**i**}**, M**_{**j**}**, .. , M**_{**y**}**),** ces derniers étant conçus comme trous-mémoire, lesdits trous étant disposés en deux rangées ;
afin de maintenir le verrouillage et de minimiser la sollicitation des éléments d'immobilisation en cas d'accident,
d1) une broche filetée prévue en tant que glissière de plancher **(5a)** dont les sections finales sont logées axialement et radialement dans les perforations d'une paire de boîtiers de plancher **(7a)** et qui est en prise avec un taraudage **(4a)** d'au moins une glissière **(1a)** du dispositif de blocage **(70a) ;** ou :
d2) au moins deux trous de blocage sont en prise avec les éléments de blocage rigides **(4, 4b, 4c, 4o2)** du dispositif de blocage **(70, 70b, 70c, 70o) ;** ou :
d3) au moins un trou de blocage **(L**_{**k**}**)** est en prise avec un élément de blocage rigide **(4m2, 4n2)** et un **(M**_{**k**}**)** des trous-mémoire est en prise avec un élément de blocage rigide **(4m1, 4n1)** prévu en tant qu'élément-mémoire, lesdits éléments de blocage **(4m1, 4m2, 4n1, 4n2)** faisant partie du dispositif de blocage **(70m, 70n).**

2. Mécanisme de réglage longitudinal à mémoire dont la glissière de plancher **(5m, 5n)** munie des trous de blocage **(L**_{**i**}**, L**_{**j**}**, .. , L**_{**y**}**)** et des trous-mémoire **(M**_{**i**}**, M**_{**j**}**, .. , M**_{**y**}**)** est entourée à engagement positif par une coulisse **(14m, 14n),**
- ladite coulisse servant à marquer une position de départ **(P**_{**k**}**)** du siège lors d'un déplacement de celui-ci dans le sens longitudinal et à retrouver ladite position de départ **(P**_{**k**}**)** lorsque ledit siège est ramené,
- une paire de glissoirs **(42f, 42g)** de ladite coulisse coulissant le long des glissoirs correspondants **(41f, 41g)** de la glissière de plancher **(5m, 5n) ;**
- ladite coulisse étant formée par une liaison à engagement positif et par adhérence de deux pièces de coulisse **(14m1, 14m2, 14n1, 14n2)** entre elles ;
- dans l'évidement de ladite coulisse pouvant être inséré un élément-mémoire **(13m, 13n)** prétendu par ressort et destiné à accoupler ladite coulisse à la glissière de plancher **(5m, 5n) ;**
- la perforation de ladite coulisse étant conçue pour guider l'élément-mémoire **(4m1, 4n1)** dans une position de blocage **(P**_{**0**}**)** ou de déverrouillage **(P**_{**1**}**) ;** et :
- la paire de glissoirs **(14.2m3, 14.2n3)** de ladite coulisse étant prévue pour permettre à l'élément de blocage **(4m1, 4n1)** d'y coulisser en tant qu'élément-mémoire ;
selon la revendication 1, **caractérisé en ce qu'**une paire de glissières de siège **(1m, 1n)** fixées sur le cadre dudit siège **(3.1m, 3.1n)** au moyen de rivets **(1.20m, 1.20n)** et coulissant le long de la glissière de siège **(5m, 5n)** grâce au jeu (c), ainsi qu'une coulisse **(14m, 14n),** sont prévues pour le mécanisme de réglage longitudinal à mémoire **(80m, 80n) ;**
a) ladite coulisse coulissant entre les deux glissières **(1m, 1n)** le long de la glissière de plancher **(5m, 5n)** et :
b) ladite coulisse étant munie d'au moins un trou de blocage destiné à un verrouillage conjoint avec le trou de blocage **(L**_{**k**}**)** de la glissière de plancher **(5m, 5n)** dans la position de blocage **(P**_{**0**}**)** au moyen de l'élément de blocage **(4m2, 4n2) ;**
c) pour défaire le blocage **(P**_{**0**}**),** les éléments de blocage **(4m1, 4m2, 4n1, 4n2)** sont retirés d'un trou de blocage et d'un trou-mémoire d'une paroi latérale extérieure **(4.4m1, 4.4n1)** du dispositif de blocage **(70m, 70n),** du trou de blocage **(L**_{**k**}**)** et du trou-mémoire **(M**_{**k**}**)** de la glissière de plancher **(5m, 5n),** ainsi que du trou de blocage de la coulisse **(14m, 14n)** jusqu'à la position de déverrouillage **(P**_{**1**}**);** suite à cela et lors du déplacement du siège, celui-ci coulisse avec la coulisse **(14m, 14n)** et les éléments de blocage **(4m1, 4m2, 4n1, 4n2)** le long de la glissière de plancher **(5m, 5n)** jusqu'à atteindre la position désirée ; une fois celle-ci atteinte, le siège est verrouillé par l'enclenchement des éléments de blocage **(4m1, 4m2, 4n1, 4n2)** dans un autre trou de blocage, un autre trou-mémoire de la glissière de plancher **(5m, 5n),** les mêmes trous de blocage de la coulisse **(14m, 14n)** et les mêmes trous de la paroi latérale **(4.4m1, 4.4n1) ;** ou :
d) que la mémoire est activée en retirant les éléments de blocage **(4m1, 4m2, 4n1, 4n2)** des trous d'une paroi latérale extérieure **(4.4m1, 4.4n1)** du dispositif de blocage **(70m, 70n),** ainsi que du trou de blocage **(L**_{**k**}**),** du trou-mémoire **(M**_{**k**}**)** de la glissière de plancher **(5m, 5n)** et du trou de blocage et de la perforation de la coulisse **(14m, 14n)** jusqu'à une position d'accouplement **(P**_{**2**}**) ;** à cet effet, la coulisse **(14m, 14n)** reste accouplée à la glissière de plancher **(5m, 5n)** au moyen de l'élément-mémoire **(13m, 13n)** engrené dans l'évidement et le trou-mémoire **(M**_{**k**}**)** dégagé, le siège étant déplacé avec les éléments de blocage **(4m1, 4m2, 4n1, 4n2)** dans la position souhaitée et verrouillé par l'enclenchement des éléments de blocage **(4m1, 4m2, 4n1, 4n2)** dans un autre trou de blocage, un autre trou-mémoire de la glissière de plancher **(5m, 5n)** et les mêmes trous de la paroi latérale **(4.4m1, 4.4n1) ;**
d1) lorsque le siège est ramené dans sa position initiale,
- l'élément-mémoire **(4m1, 4n1)** coulisse le long du glissoir **(14.2m3, 14.2n3)** de la coulisse **(14m, 14n)** et en atteignant la position de départ **(P**_{**k**}**),** il s'enclenche dans la perforation de départ de la coulisse **(14m, 14n),** le trou-mémoire de départ **(M**_{**k**}**)** de la glissière de plancher **(5m, 5n)** et le trou-mémoire de départ de la paroi latérale **(4.4m1, 4.4n1),** désactivant ainsi la mémoire ;
- en même temps, l'élément de blocage **(4m2, 4n2)** s'enclenche dans le trou de blocage de départ **(L**_{**k**}**)** de la glissière de plancher **(5m, 5n),** le trou de blocage de départ de la coulisse **(14m, 14n)** et le trou de blocage de départ de la paroi latérale **(4.4m1, 4.4n1).**

3. Mécanisme de réglage longitudinal à mémoire selon la revendication 1, **caractérisé en ce que** pour le mécanisme de réglage longitudinal **(80o)** sont prévues une paire de glissières de siège **(1o)** reliées entre elles par une pièce de jonction **(3.10o)** du cadre de siège **(3.1o)** et coulissant le long de la glissière de plancher **(5o)** et du segment de blocage **(5.1o),** ainsi qu'une coulisse **(14o),**
a) ladite coulisse pouvant être mue librement entre les deux glissières de siège **(1o)** grâce au jeu (g) face à la pièce de jonction **(3.10o)** et glissant le long de la glissière de plancher **(5o) ;**
b) ladite coulisse entourant la glissière de plancher **(5o)** avec l'élément de blocage **(5.1o)** à engagement positif, les trous de blocage dudit élément pouvant être utilisés également à titre de trous-mémoire ;
c) ladite coulisse étant munie de 3 trous et comprenant une barre **(14.1o),** une pièce de guidage **(13.1o),** une pièce de coulisse **(14.2o),** un soutien **(4.3o)** et un bloc **(13.4o) ;**
- ledit bloc **(13.4o)** étant muni d'un asservissement **(13.o1),** d'un élément-mémoire **(13.o2)** et d'un ressort **(13.2o) ;**
- les deux éléments **(13.o1, 13.o2)** prétendus par le ressort **(13.2o)** étant guidés par des trous de la pièce de guidage **(13.1o) ;**
- la pièce de coulisse **(14.2o)** étant munie de deux trous et d'une paire de glissoirs **(14.2o3)** afin de permettre à au moins un élément de blocage **(4o2)** d'y coulisser, ainsi que :
- le soutien **(4.3o)** étant muni des éléments de blocage **(4o2)** et d'un asservissement réglable en hauteur et vissable **(4o1) ;**
d1) le premier trou de la barre de coulisse **(14.1o),** de la pièce de guidage **(13.1o)** et de la pièce de coulisse **(14.2o)** étant prévu pour guider l'élément-mémoire sollicité par ressort **(13.o2)** et le premier élément de blocage **(4o2)** dans une position de blocage **(P**_{**0**}**)** ou de déverrouillage **(P**_{**1**}**),** ou bien pour accoupler la coulisse **(14o)** à la glissière de plancher **(5o),** en insérant l'élément-mémoire **(13.o2)** dans un des trous de blocage de la glissière de plancher **(5o)** dans une position d'accouplement **(P**_{**2**}**) ;**
d2) le deuxième trou de la barre de coulisse **(14.1o)** et de la pièce de guidage **(13.1o)** étant prévu pour guider l'asservissement sollicité par ressort **(13.o1)** et l'asservissement réglable en hauteur **(4o1)** dont la surface de contact exerce une pression contre celle de l'asservissement sollicité par ressort **(13.o1);** une différence de hauteur entre le premier élément de blocage **(4o2)** et l'élément-mémoire **(13.o2)** étant fonction du réglage de l'asservissement **(4o1),** et :
d3) le troisième trou de la barre de coulisse **(14.1o)** et le deuxième trou de la pièce de coulisse **(14.2o)** étant prévus pour guider le deuxième élément de blocage **(4o2)** dans la position de blocage **(P**_{**0**}**)** ou de déverrouillage **(P**_{**1**}**) ;**
e) que pour défaire le blocage **(P**_{**0**}**),** l'asservissement **(4o1)** et les deux éléments de blocage **(4o2)** sont retirés des trois trous de coulisse et des deux trous de blocage de la glissière de plancher **(5o)** jusqu'à atteindre la position de déverrouillage **(P**_{**1**}**) ;** suite à cela et lors du déplacement du siège, celui-ci coulisse avec la coulisse **(14o)** et tous les 5 éléments **(4o1, 4o2, 13.o1, 13.o2)** le long de la glissière de plancher **(5o)** jusqu'à atteindre la position désirée ; une fois celle-ci atteinte, le siège est verrouillé par l'enclenchement des éléments de blocage **(4o2)** dans les autres trous de blocage de la glissière de plancher **(5o) ;** ou :
f) que pour activer la mémoire en retirant les deux éléments de blocage **(4o2)** et l'asservissement **(4o1)** des trous de coulisse jusqu'à atteindre une position d'accouplement **(P**_{**2**}**),** la coulisse **(14o)** restera accouplée à la glissière de plancher **(5o)** au moyen de l'élément-mémoire **(13.o2)** engrené dans le trou-mémoire dégagé de la glissière de plancher **(5o),** le siège étant déplacé au moyen des deux éléments de blocage **(4o2)** et l'asservissement **(4o1)** jusqu'à atteindre la position souhaitée et verrouillé par enclenchement des éléments de blocage **(4o2)** dans les autres trous de blocage de la glissière de plancher **(5o) ;**
f1) lorsque le siège est ramené dans sa position initiale,
- au moins un des éléments de blocage **(4o2)** coulisse le long de la barre **(14.2o3)** de la coulisse **(14o)** ; lorsque la position de départ est retrouvée, les éléments de blocage **(4o2)** et l'asservissement **(4o1)** s'enclenchent dans les trois trous de départ de la coulisse ;
- en même temps, l'asservissement **(4o1)** fait baisser l'asservissement **(13.o1)** relié à l'élément-mémoire **(13.o2)** de la position d'accouplement **(P**_{**2**}**)** dans la position de blocage **(P**_{**0**}**)**, désactivant ainsi la mémoire.

4. Mécanisme de réglage longitudinal suivant l'une des revendications 1 à 3, **caractérisé en ce que** le siège de véhicule automobile **(3)** est équipé des composants suivants :
a) du mécanisme de réglage longitudinal **(80a)** sur un axe longitudinal, et :
b) du mécanisme de réglage longitudinal **(80, 80b à 80c, 80m à 80o)** ou du mécanisme de réglage longitudinal à mémoire **(80m à 80o)** sur l'autre axe longitudinal.

5. Mécanisme de réglage longitudinal suivant au moins l'une des revendications 1 à 4, **caractérisé en ce qu'**une paire de positionnement **(40, 40a à 40g)** comprend les éléments suivants :
- une rainure longitudinale **(42)** de la glissière de plancher **(5, 5b, 5d, 5f, 5i, 5o)** et un ressort longitudinal **(41)** d'un boîtier de plancher **(7, 7b, 7d, 7f, 7i, 7o) ;** ou :
- une rainure longitudinale **(42)** disposée sur la section finale de la glissière de plancher **(5)** et un ressort longitudinal **(41a)** d'un boîtier de plancher **(7) ;** ou :
- deux rainures longitudinales **(42b1, 42b2, 42c1, 42c2)** de la glissière de plancher **(5, 5c)** et d'un boîtier de plancher **(7, 7c),** opposées l'une à l'autre, ainsi qu'un ressort **(41b, 41c)** inséré dans un espace formé par les deux rainures longitudinales opposées l'une à l'autre **(42b1, 42b2, 42c1, 42c2) ;** ou :
- une douille conique à centrage automatique **(41d)** et une vis **(7.2)** insérée dans ladite douille **(41d),** dans une perforation d'un boîtier de plancher **(7)** et dans une rondelle **(7.4)** et vissée sur un écrou **(7.3) ;** ou :
- une bague d'écartement **(41e)** composée de plusieurs rondelles **(41e1, 41e2)** et deux branches d'un boîtier de plancher **(7c)** à l'intérieur duquel est disposé le segment de blocage **(5.1c)** avec une tolérance (Tₗ) ; ou :
- deux paires de glissières **(42f / 41f, 42g / 41g)** d'un boîtier de plancher **(7m, 7n)** et de la glissière de plancher **(5m, 5n),** opposées l'une à l'autre.

6. Mécanisme de réglage longitudinal selon la revendication 5, **caractérisé en ce que** le siège de véhicule automobile **(3)** équipé dudit mécanisme de réglage longitudinal sans mémoire **(80, 80a à 80c, 80m à 80o)** ou à mémoire **(80m à 80o)** est préfabriqué au moyen d'une paire de soutiens de montage **(11a à 11o)** reliés à la paire de boîtier de plancher **(7, 7a à 7o)** de la glissière de plancher **(5, 5a à 5o)** et à la paire de boîtiers de plancher **(8, 8a à 8o)** de la glissière de plancher **(6, 6a à 6o)** à engagement positif et/ou par adhérence.

7. Mécanisme de réglage longitudinal selon la revendication 6, **caractérisé en ce que** le soutien de montage **(11a à 11o)** comprend les éléments suivants :
- une paire de branches enfichables **(11.1b, 11.1c, 11.1e, 11.1g)** qui sont enfichées sur deux évidements des deux boîtiers de plancher **(7b / 8b, 7c / 8c, 7e / 8e, 7g /8g)** et reliées entre elles par adhérence au moyen d'éléments de jonction **(7.4b /8.4b, 11.5c, 7.4e / 8.4e, 7.6g / 8.6g) ;** ou :
- une paire de branches enfichables en U **(11.1d, 11.1o)** enfichées sur deux paires d'évidements des deux boîtiers de plancher **(7d / 8d, 7o / 8o)** ; ou :
- un arbre **(11f)** traversant les deux boîtiers de plancher **(7f/8f)** et une paire d'écarteurs **(11.2f)** situés entre les deux boîtiers de plancher **(7f/8f)**, la section centrale de l'arbre située entre les deux boîtiers de plancher **(7f/8f)** étant munie de paires de trous (Lₗ à Lₙ), une paire d'oeillets **(11.3f)** étant enfichée dans une (Lₗ) desdites paires de trous (Lₗ à Lₙ) et dans les deux écarteurs **(11.2f)** et aux sections finales dudit arbre étant vissés des écrous **(11.1f)** ; ou :
- une paire de branches **(11.1h)** dont les demi-cercles sont reliés à engagement positif à deux évidements des boîtiers de plancher **(7d / 8d)** et qui sont reliées aux boîtiers de plancher **(7d / 8d)** par adhérence au moyen d'éléments de jonction **(7.4h, 8.4h)** ; ou :
- au moins un élément de jonction **(11.1i, 11.2i)** reliant les deux boîtiers de plancher **(7i, 8i)** entre eux par adhérence ; ou :
- une paire de branches **(11.1m, 11.1n)** dont les glissières **(43f, 43g)** sont reliées à engagement positif aux glissières **(42f, 42g)** des boîtiers de plancher **(7m / 8m, 7n / 8n)** et qui sont reliées aux boîtiers de plancher **(7m / 8m, 7n / 8n)** par adhérence au moyen d'éléments de jonction **(7.4m, 7.4n).**

8. Mécanisme de réglage longitudinal suivant au moins l'une des revendications 1 à 4, **caractérisé en ce qu'**à l'état verrouillé, plusieurs éléments de blocage **(4, 4b, 4c, 4m2, 4n2, 4o2)** sont enfichés dans les trous de blocage correspondants dont au moins un situé entre deux trous de blocage en prise avec les éléments de blocage **(4, 4b, 4c, 4m2, 4n2, 4o2)** ne peut pas être affecté.

9. Mécanisme de réglage longitudinal selon la revendication 1 ou 4, **caractérisé en ce que** la glissière de siège **(1)** est munie d'au moins un roulement à bille fermé **(1.40),** sur la cage à billes **(1.41)** dudit roulement et sur la glissière de siège **(1)** étant disposée une multitude de trous de blocage communs sur un ou sur les deux côtés.

10. Mécanisme de réglage longitudinal selon la revendication 9, **caractérisé en ce qu'**un trou de soutien pour un rivet à tête conique **(1.42x)** est disposé entre deux trous de blocage de la cage à billes **(1.41).**

11. Mécanisme de réglage longitudinal suivant au moins l'une des revendications 1, 3 et 4, **caractérisé en ce que** la glissière de siège **(1b, 1c, 1o)** et la coulisse **(14o)** sont munies d'au moins un roulement à bille **(1.40a)** ouvert.

12. Mécanisme de réglage longitudinal selon la revendication 11, **caractérisé en ce qu'**une bague ouverte de la cage à billes **(1.41a)** du roulement à bille **(1.40a)** présente des trous de retenue et des évidements sphériques pour y loger les billes **(1.46).**

13. Mécanisme de réglage longitudinal suivant les revendications 11 et 12, **caractérisé en ce que** la bague **(1.41a)** de ladite cage et une pièce de la glissière de siège ou de la coulisse principale **(1.1b, 1.1c, 1.1o, 14.1o1)** présentent les trous de retenue correspondant aux pièces de retenue **(1.42, 1.42a)** en sens radial.

14. Mécanisme de réglage longitudinal suivant au moins l'une des revendications 1, 4 et 11 à 13, **caractérisé en ce que** la partie ouverte de la glissière de siège **(1.1c)** est entourée par au moins une paire de glissières de renforcement séparées et non symétriques **(1.2c1, 1.2c2)** à engagement positif, la glissière de siège fermée **(1c)** étant formée par une liaison par adhérence du composant de la glissière de siège **(1.1c)** et des glissières de renforcement **(1.2c1, 1.2c2).**

15. Mécanisme de réglage longitudinal suivant au moins l'une des revendications 1, 4 et 11 à 13, **caractérisé en ce que** la partie ouverte de la glissière de siège **(1.1b)** comprenant une paire de branches **(1SE)** dans lesquelles sont disposées des bagues d'écartement **(15)** est entourée à engagement positif par au moins une paire de glissières de renforcement séparées et symétriques **(1.2b),** la glissière de siège fermée **(1b)** étant formée par une liaison par adhérence entre les glissières de renforcement **(1.2b),** les bagues d'écartement **(15)** et le composant de la glissière de siège **(1.1b).**

16. Mécanisme de réglage longitudinal suivant au moins l'une des revendications 3, 4 et 11 à 13, **caractérisé en ce que** la partie ouverte de la glissière de siège ou de la coulisse principale **(1.1o, 14.1o1)** comprenant une paire de branches **(1SE)** dans lesquelles sont disposés des bagues d'écartement **(15o)** et un disque d'écartement **(14.8o)** est entourée à engagement positif par au moins une paire de glissières de renforcement séparées et symétriques **(1.2o, 14.1o2),** la glissière de siège fermée **(1o)** ou la barre de coulisse fermée **(14.1o)** étant formée par une liaison par adhérence entre le composant de la glissière de siège ou de la coulisse principale **(1.1o, 14.1o1)** et les bagues d'écartement **(15o),** le disque d'écartement **(14.8o)** et les glissières de renforcement **(1.2o, 14.1o2).**

17. Mécanisme de réglage longitudinal suivant au moins l'une des revendications 14 à 16, **caractérisé en ce que** la glissière de siège **(1b, 1o)** et la glissière de coulisse **(14.1o)** sont munies d'un couvercle de protection **(16b, 16.1o, 16.2o).**

18. Mécanisme de réglage longitudinal selon la revendication 16 ou 17, **caractérisé en ce que** la paire de glissières de siège **(1o)** est reliée par adhérence à la pièce de jonction **(3.10o)** enfichée dans les extrémités arrondies **(1.1o2)** des composants de la glissière de siège **(1.1o)** au moyen des éléments de jonction **(1.10o).**

19. Mécanisme de réglage longitudinal selon la revendication 18 , **caractérisé en ce qu'**un vide-poches encerclé **(75, 76)** est formé par la pièce de jonction **(3.10o)** et une paire de bouts **(3.11o)** fixés aux extrémités de la pièce de jonction **(3.10o).**

20. Mécanisme de réglage longitudinal selon la revendication 1 ou 4, **caractérisé en ce qu'**une roue conique **(17.2)** est reliée à engagement positif à la section finale de la glissière de plancher **(5a)** au moyen d'une forme carrée **(5.4a)** et par adhérence au moyen d'un écrou **(5.5a)** et d'une rondelle **(5.2a),** ladite roue conique **(17.2)** et une autre roue conique **(17.1)** formant un engrenage conique qui est relié au volant **(12e).**

21. Mécanisme de réglage longitudinal suivant au moins l'une des revendications 2 à 4, **caractérisé en ce que** la paire de glissoirs **(14.2m3, 14.2n3, 14.2o3)** de la pièce de coulisse **(14.2m, 14.2n, 14.2o)** comprend une paire de sections de glissoirs montantes (B1), une paire de sections de glissoirs droites (B2) et une section de glissoir (B3) à fosse trapézoïdale (V3) ; lorsque le siège est ramené dans sa position initiale,
- l'élément de blocage **(4m1, 4n1)** descend dans la fosse (V3) et s'enclenche dans la perforation de la pièce de coulisse **(14.2m, 14.2n) ;** ou :
- les éléments de blocage **(4o2),** dont un descend dans la fosse (V3), s'enclenchent dans les trous de blocage de la pièce de coulisse **(14.2o).**

22. Mécanisme de réglage longitudinal suivant au moins l'une des revendications 2 à 4, **caractérisé en ce que** la pièce de coulisse **(14.2m, 14.2n, 14.2o)** est munie d'un seul glissoir **(14.2m3, 14.2n3, 14.2o3)** comprenant une section de glissoir montante (B1), une section de glissoir droite (B2) et une section de glissoir (B3) à fosse trapézoïdale (V3) et d'une paroi-butée **(14.5m, 14.5n) ;** lorsque le siège est ramené dans sa position de départ,
- l'élément de blocage **(4m1, 4n1)** descend dans la fosse (V3) et s'enclenche dans la perforation de la pièce de coulisse **(14.2m, 14.2n) ;** ou :
- les éléments de blocage **(4o2),** dont un descend dans la fosse (V3), s'enclenchent dans les trous de blocage de la pièce de coulisse **(14.2o).**

23. Mécanisme de réglage longitudinal suivant au moins l'une des revendications 16,21 et 22, **caractérisé en ce que** la pièce de coulisse **(14.2o)** à nopes **(14.2o1)** est insérée dans la section supérieure de la glissière de coulisse **(14.1o)** jusqu'à un bord de butée **(14.1o2k)** de la pièce de coulisse **(14.1o2),** lesdites nopes **(14.2o1)** s'enclenchant dans des trous de la pièce de coulisse **(14.1o2).**

24. Mécanisme de réglage longitudinal suivant au moins l'une des revendications 1, 4 à 6, **caractérisé en ce que** la glissière de plancher **(5c)** est d'un seul tenant avec le segment de blocage **(5.1c).**

25. Mécanisme de réglage longitudinal suivant au moins l'une des revendications 1, 3 à 6, **caractérisé en ce que** le segment de blocage **(5.1b, 5.1i-5.1l, 5.1l, 5.1o)** est relié à la glissière de plancher **(5b, 5i-5l, 5l, 5o)** à engagement positif et/ou par adhérence.

26. Mécanisme de réglage longitudinal selon la revendication 25, **caractérisé en ce que** le segment de blocage **(5.1b)** est inséré dans la rainure de retenue longitudinale en T **(42)** formée par les nervures intérieures **(5.11b, 5.12b)** et relié à la glissière de plancher par adhérence au moyen de rivets **(5.8b)**.

27. Mécanisme de réglage longitudinal selon la revendication 25, **caractérisé en ce que** les trous de blocage du segment de blocage **(5.1j, 5.1k, 5.1l)** à profil plat sont poinçonnés.

28. Mécanisme de réglage longitudinal selon la revendication 25, **caractérisé en ce que** les dents de retenue **(5.1l1, 5.1l2)** d'une pièce de blocage **(5.1la, 5.1oa)** à profil plat sont poinçonnées et que le segment de blocage **(5.1l, 5.1o)** est constitué de la pièce de blocage **(5.1la, 5.1oa)** et d'au moins une paire de disques **(5.1lb),** les trous de blocage dudit segment étant poinçonnés.

29. Mécanisme de réglage longitudinal selon la revendication 25, **caractérisé en ce que** les dents de retenue **(5.1l1, 5.1l2)** d'une pièce de blocage **(5.1la, 5.1oa)** à profil plat, ainsi que les trous de blocage de la pièce de blocage **(5.1la, 5.1oa)** et des disques **(5.1lb)** sont poinçonnées, le segment de blocage **(5.1l, 5.1o)** étant constitué par une liaison par adhérence des pièces **(5.1la, 5.1oa, 5.1lb)** dont les trous de blocage sont guidés par un arbre de guidage **(5.5l)**.

30. Mécanisme de réglage longitudinal selon la revendication 25 ou 27, **caractérisé en ce qu'**une paire de nervures intérieures **(5.12i-5.12l, 5.12l, 5.12o)** de la glissière de plancher **(5i-5l, 5l, 5o)** est prévue pour renforcer la glissière de plancher **(5i-5l, 5l, 5o)** et guider un outil de poinçonnage.

31. Mécanisme de réglage longitudinal selon la revendication 30, **caractérisé en ce que** les trous de retenue **(5.4i-5.4l, 5.4l, 5.4o)** disposés sur une nervure intérieure **(5.11i-5.11l, 5.11l, 5.11o)** de la glissière de plancher **(5i-5l, 5l, 5o)** sont fabriqués par poinçonnage.

32. Mécanisme de réglage longitudinal suivant les revendications 30 et 31, **caractérisé en ce que** le segment de blocage **(5.1i)** est enfiché longitudinalement dans une rainure de retenue longitudinale en T formée par les nervures intérieures **(5.11i, 5.12i)** de la glissière de plancher **(5i),** les dents de retenue **(5.1i1)** dudit segment étant insérées transversalement dans les trous de retenue correspondants **(5.4i),** formant ainsi une paire d'interstices disposés longitudinalement dans lesquels est enfichée une paire d'éléments de retenue (**5.i1).**

33. Mécanisme de réglage longitudinal selon la revendication 32, **caractérisé en ce que** les surfaces des pièces entrées en contact les unes avec les autres **(5.1i, 5.i1)** lorsqu'elles sont enfichées, présentent des cannelures **(5.LR).**

34. Mécanisme de réglage longitudinal suivant au moins l'une des revendications 27, 30 et 31, **caractérisé en ce que** le segment de blocage **(5.1j, 5.1k)** est inséré transversalement dans un espace formé par les nervures intérieures **(5.11j, 5.12j, 5.11k, 5.12k)** de la glissière de plancher **(5j, 5k)** jusqu'à ce que les dents de retenue **(5.1j1, 5.1k1)** saillissent des trous de retenue **(5.4j, 5.4k)** correspondants, le tout formant un interstice disposé en sens longitudinal et dans lequel est enfiché un élément de retenue **(5.j1, 5.k1-5.k3),** ledit élément étant relié à engagement positif aux éléments suivants :
- aux têtes arrondies **(5.1jk)** des dents de retenue **(5.1j1) ;** ou :
- au segment de blocage **(5.1k)** et à l'une des deux nervures intérieures **(5.12k)**

35. Mécanisme de réglage longitudinal suivant au moins l'une des revendications 27 à 31, **caractérisé en ce que** le segment de blocage **(5.1l, 5.1l, 5.1o)** est inséré transversalement dans un espace constitué par les nervures intérieures **(5.11l, 5.12l, 5.11l, 5.12l)** de la glissière de plancher **(5l, 5o, 5l),**
- jusqu'à ce que les dents de retenue trapézoïdales **(5.1l2, 5.1l2)** s'enclenchent dans les trous de retenue correspondants **(5.4l, 5.4l, 5.4o) ;** pendant la déformation, les extrémités déformables par paires **(5.1lh, 5.1lh)** desdites dents de retenue **(5.1l2, 5.1l2)** se rétrécissent dans un premier temps pour s'écarter ensuite sur les surfaces de la nervure intérieure **(5.11l, 5.11l) ;** ou :
- jusqu'à ce que les dents de retenue rectangulaires **(5.1l1)** saillissent des trous de retenue correspondants **(5.4l, 5.4o),** le segment de blocage **(5.1l, 5.1o)** étant relié par adhérence à la glissière de plancher **(5l, 5o)** au moyen de rivets **(5.8l).**

36. Mécanisme de réglage longitudinal suivant au moins l'une des revendications 27 à 35, **caractérisé en ce que** le segment de blocage **(5.1i-5.1l, 5.1l, 5.1o)** présente un certain nombre de dents de retenue "h" et que la glissière de plancher **(5i-5l, 5l, 5o)** présente un certain nombre de trous de retenue "k", dont "k ≥ h" et toutes les dents de retenue "h" étant enfichées dans les trous de retenue correspondants se trouvant dans l'une des positions "k-h+l".

37. Mécanisme de réglage longitudinal suivant au moins l'une des revendications 1, 2 et 4, **caractérisé en ce que** la glissière de siège **(1m, 1n)** est fabriquée d'une pièce de coulisse **(14.1m, 14.1n)** à longueur adéquate, ladite glissière étant fixée au cadre du siège **(3.1m, 3.1n)** au moyen de rivets **(1.22m, 1.22n)** et de douilles **(1.23m, 1.23n).**

38. Mécanisme de réglage longitudinal suivant au moins l'une des revendications 2, 4 à 7, **caractérisé en ce qu'**un profil intérieur du boîtier de plancher **(7m)** et un profil extérieur de la pièce de coulisse **(14.1m)** correspondent l'un à l'autre.

39. Mécanisme de réglage longitudinal suivant au moins l'une des revendications 2, 4 à 7, **caractérisé en ce qu'**une pièce de coulisse **(14.1n)** à longueur adéquate peut être utilisée pour un composant du boîtier de plancher **(7.n2) ;** afin de constituer le boîtier de plancher **(7n),** ladite pièce est reliée à engagement positif à un composant du boîtier de plancher **(7.n1)** et par adhérence au moyen d'éléments de jonction **(7.3n, 14.7n).**

40. Mécanisme de réglage longitudinal suivant au moins l'une des revendications 37 à 39, **caractérisé en ce que** le glissoir **(41f, 41g)** de la glissière de plancher **(5m, 5n),** le glissoir **(42f, 42g)** de la pièce de coulisse **(14.1m, 14.1n),** du boîtier de plancher **(7m, 7n)** et de la glissière de siège **(1m, 1n)** ont la forme d'un demi-cercle ou d'un V.

41. Mécanisme de réglage longitudinal selon la revendication 2 ou 4, **caractérisé en ce que** le trajet d'enfichement de l'élément-mémoire **(13n)** dans l'évidement de la coulisse **(14n)** est limité par le contact du bord avec un rebord de butée **(14.2n6).**

42. Mécanisme de réglage longitudinal selon la revendication 3 ou 4, **caractérisé en ce que** le ressort à lames **(13.2o)** est guidé par une douille insonorisante **(13.7o)** enfichée dans le bloc **(13.4o),** la section finale dudit ressort étant positionnée entre deux grandes rondelles **(13.3o)**, immobilisée par une goupille **(13.5o)** et fixée sur la glissière de coulisse **(14.1o)** au moyen d'un élément de jonction **(1.9o)**.

43. Mécanisme de réglage longitudinal selon la revendication 42, **caractérisé en ce que** le mouvement du bloc **(13.4o)** est limité par une goupille **(13.11o)** enfichée dans une section finale du ressort à lames **(13.2o)** saillant de ladite douille **(13.7o)**.

44. Mécanisme de réglage longitudinal selon la revendication 42 ou 43, **caractérisé en ce que** le bloc **(13.4o)** avec la douille **(13.7o)** est fabriqué d'un seul tenant insonorisant.

45. Mécanisme de réglage longitudinal suivant au moins l'une des revendications 1 à 4, 16, 25 à 36, **caractérisé en ce que** le segment de blocage **(5.1b, 5.1i-5.1l, 5.1l, 5.1o)**, le disque d'écartement **(14.8o)** ou la pièce de coulisse **(14.2m, 14.2n, 14.2o)** sont fabriqués dans un matériel insonorisant.

46. Mécanisme de réglage longitudinal suivant au moins l'une des revendications 1, 3 et 4, **caractérisé en ce qu'**un outil d'ajustage **(30)** comprend une poignée **(30.1),** un tuyau **(30.2)** de diamètre "d" et une entretoise **(30.1A)** de hauteur "h", ladite entretoise étant constituée d'un segment **(30.3)** et d'une paire de plaques **(30.4)** reliés entre eux au moyen de rivets à têtes coniques **(30.5)**.

47. Mécanisme de réglage longitudinal suivant au moins l'une des revendications 11, 13, 16 et 46, **caractérisé en ce que** le roulement à billes ouvert **(1.40a)** dont les billes **(1.46)** ont un diamètre "d_{K}" est poussé le long du tuyau **(30.2)** jusqu'au bord de la poignée **(30.1),** ledit tuyau **(30.2)** avec le roulement à billes **(1.40a)** étant enfiché dans une perforation intérieure d'un élément de siège **(1.1b, 1.1c, 1.1o, 14.1o1),** qui peut être soit la partie ouverte de la glissière de siège **(1.1b, 1.1c, 1.1o),** soit la partie ouverte de la coulisse principale **(14.1o1),** et l'entretoise **(30.1A)** étant enfichée entre les deux branches **(1SE)** de l'élément de siège **(1.1b, 1.1c, 1.1o, 14.1o1) ;** et :
- un diamètre intérieur "D" de l'élément de siège **(1.1b, 1.1c, 1.1o, 14.1o1)** et une hauteur "h" entre les branches **(1SE)** pouvant être vérifiés quant aux tolérances admissibles "± ΔD" et "± h" ; ou :
- les trous de retenue de la cage à billes **(1.41a)** et ceux de l'élément de siège **(1.1b, 1.1c, 1.1o, 14.1o1)** étant superposés radialement les uns aux autres et verrouillés par un enfichement des rivets à tête conique **(1.42)**, lesdits rivets étant maintenus par les glissières de renforcement **(1.2b, 1.2c1, 1.2c2, 1.2o)** ou par les pièces de coulisse **(14.1o2).**

48. Mécanisme de réglage longitudinal suivant au moins l'une des revendications 1, 3 et 4, **caractérisé en ce qu'**un outil d'ajustage **(31)** comprend une poignée carrée **(31.1)** et un tuyau **(31.2)** de diamètre "d".

49. Mécanisme de réglage longitudinal suivant au moins l'une des revendications 9 à 11, 13, 16 et 48, **caractérisé en ce qu'**au moins une rainure "c_{S}" est disposée sur le front de la bague fermée ou ouverte de la cage **(1.41** ou **1.41a)** du roulement à billes **(1.41, 1.40a)** et qu'une rainure correspondante "c_{K}" en sens radial est disposée sur le front d'un élément de siège **(1.1, 1.1b, 1.1o, 14.1o1)**, qui est soit la partie fermée de la glissière de siège **(1.1)**, soit la partie ouverte de ladite glissière de siège **(1.1b, 1.1o)**, ou bien la partie ouverte de la coulisse principale **(14.1o1)** ; le roulement à billes **(1.41, 1.40a)** dont les billes **(1.46)** présentent un diamètre "d_{K}" étant poussé le long du tuyau **(31.2)** jusqu'au bord de la poignée **(31.1),** le tuyau **(31.2)** avec le roulement à billes **(1.41, 1.40a)** étant enfiché dans une perforation intérieure de l'élément de siège **(1.1, 1.1b, 1.1o, 14.1o1)** et la poignée carrée **(31.1)** étant insérée dans les rainures "c_{S}" et "c_{K}" ; et :
- un diamètre intérieur "D" de l'élément de siège **(1.1, 1.1b, 1.1c, 1.1o, 14.1o1)** pouvant être vérifié quant aux tolérances admissibles "± ΔD" ; et/ou :
- les trous de retenue de la cage à billes **(1.41** ou **1.41a)** et ceux de l'élément de siège **(1.1, 1.1b, 1.1o, 14.1o1)** étant superposés radialement les uns aux autres et verrouillés par l'enfichement des rivets à tête conique **(1.42),** lesdits rivets étant maintenus par les glissières de renforcement **(1.2, 1.2b, 1.2o)** ou par les pièces de coulisse **(14.1o2).**
